# EUROPEAN PATENT APPLICATION

(11) **EP 4 474 397 A1**
(43) Date of publication of application: **11.12.2024**
(21) Application number: 23749718.5
(22) Date of filing: 30.01.2023
(51) Int. Cl.: C08B 37/04, B01J 45/00, C02F 1/42, C02F 1/62, C02F 1/64, C08B 37/08, C08F 251/00, H01M 4/13, H01M 4/139, H01M 4/62

(54) **WATER-SOLUBLE CHELATING POLYMER AND METHOD FOR PRODUCING SAME**

(30) Priority: 03.02.2022 JP 2022015789; 08.02.2022 JP 2022018051; 25.02.2022 JP 2022028082; 25.02.2022 JP 2022028083; 04.07.2022 JP 2022108026; 04.07.2022 JP 2022108027; 07.10.2022 JP 2022162036; 20.12.2022 JP 2022203600; 20.12.2022 JP 2022203601; 13.01.2023 JP 2023003811
(71) Applicant: Tosoh Corporation, Yamaguchi 746-8501 (JP)
(72) Inventor: INOUE Hiroshi, Yokkaichi-shi Mie 510-8540 (JP); TOUGOU Eiichi, Yokkaichi-shi Mie 510-8540 (JP)
(74) Representative: Novagraaf International SA
(86) International application number: PCT/JP2023/002909
(87) International publication number: WO 2023/149402

(57) **Abstract**

To provide a water-soluble chelating polymer that can rapidly trap a trace amount of heavy-metal ions to reduce the amount of heavy-metal ions to a ppm level or lower in a short time.

Use a water-soluble chelating polymer comprising an anionic polymer having a carboxy group, a sulfonate group and/or a sulfate group bonded through an ionic bond to a chelating functional group having a cationic functional group, wherein the water-soluble chelating polymer contains 0.2 to 6 mmol/g of the chelating functional group and has a weight-average molecular weight in the range of 30,000 to 1,000,000.

## Description

### Technical Field

A first aspect of the present invention relates to a water-soluble chelating polymer and a method for producing the water-soluble chelating polymer. Furthermore, a second aspect of the present invention relates to a chelating polymer and a method for producing the chelating polymer. Furthermore, a third aspect and a fourth aspect of the present invention relate to a lithium-ion battery electrode mixture composition, a slurry for forming a lithium-ion battery electrode mixture layer, a lithium-ion battery electrode and a lithium-ion battery. Furthermore, a fifth aspect and a sixth aspect of the present invention relate to a composition, a lithium-ion battery electrode binder, a slurry for forming a lithium-ion battery electrode mixture layer, a lithium-ion battery electrode and a lithium-ion battery. Furthermore, a seventh aspect of the present invention relates to a high-molecular-weight hydrogen-ion-form alginic acid, a method for producing the high-molecular-weight hydrogen-ion-form alginic acid, a lithium-ion battery electrode binder, a slurry for forming a lithium-ion battery electrode mixture layer, a lithium-ion battery electrode and a lithium-ion battery.

### Background Art

A chelating resin into which a chelating functional group that forms a chelate with a metal ion and selectively traps the metal ion is introduced has been used to remove heavy metals in the field of water treatment, such as wastewater treatment, due to its high selectivity for metal ions, particularly heavy-metal ions. In recent years, in response to demands for highly integrated semiconductors and lithium-ion batteries with extended life, there has been an increasing need for removal of a trace amount of heavy-metal ions in organic solvents, and organic solvents have been purified using chelating resins. However, known chelating resins are bead particles highly cross-linked with a crosslinker, such as divinylbenzene, and heavy-metal ions diffuse slowly into the resins. Thus, unless the solution is passed slowly at a low treatment rate, heavy-metal ions are trapped with low efficiency.

To solve the problems of the bead chelating resins, a fibrous chelating resin has been proposed (see, for example, Patent Literature 1 and Patent Literature 2). Due to its large specific surface area and a chelating functional group introduced near the surface, the fibrous chelating resin has a high heavy-metal ion trapping rate and can improve the shortcomings of the bead chelating resins. However, the demand for the removal level of heavy-metal ions has been increasing in recent years, and the cases have been increasing where the removal level cannot be satisfied even by using the fibrous chelating resin.

### Citation List

### Patent Literature

PTL 1: Japanese Unexamined Patent Application Publication No. 2000-248467
PTL 2: Japanese Unexamined Patent Application Publication No. 2013-194339
PTL 3: Japanese Unexamined Patent Application Publication No. 2000-58055
PTL 4: Japanese Unexamined Patent Application Publication No. 2000-195548
PTL 5: Japanese Unexamined Patent Application Publication No. 53-41732
PTL 6: Japanese Unexamined Patent Application Publication No. 2003-68292
PTL 7: Japanese Unexamined Patent Application Publication No. 2008-27904
PTL 8: International Publication No. WO 2012/133120
PTL 9: Japanese Unexamined Patent Application Publication No. 10-92415
PTL 10: Japanese Unexamined Patent Application Publication No. 2001-15114
PTL 11: Japanese Unexamined Patent Application Publication No. 2014-96238
PTL 12: Japanese Unexamined Patent Application Publication No. 2014-195018
PTL 13: Japanese Unexamined Patent Application Publication No. 2015-191862
PTL 14: International Publication No. WO 2016/052715
PTL 15: Japanese Unexamined Patent Application Publication No. 10-92415

### Summary of Invention

### Technical Problem

The first aspect and the second aspect of the present invention aim to provide a water-soluble chelating polymer that can rapidly trap a trace amount of heavy-metal ions and that can reduce the amount of heavy-metal ions to a ppm level or lower in a short time.

In recent years, lithium-ion batteries have been widely used as power supplies for electrical equipment and the like. Furthermore, in recent years, their use as power supplies for electric vehicles has been expanded, and improvement in characteristics, such as higher capacity, higher power and improvement in cycle life, and a high degree of safety have been demanded.

Electrodes of lithium-ion batteries have a structure in which a porous body composed mainly of a powdered active material, a conductive additive and a binder is stacked and bound on a current collector. Lithium composite oxides, such as LiMn₂O₄, LiNi_{0.5}Mn_{1.5}O₄, LiNi_{0.5}Mn_{0.3}Co_{0.2}O₂, LiNi_{0.33}Mn_{0.33}Co_{0.33}O₂ and Li_{0.8}Mn_{0.1}Co_{0.1}O₂, are often used as positive-electrode active materials. However, it has been known that, in these lithium composite oxides, manganese or nickel in the active materials dissolves and is ionized during charge and discharge and precipitates and deposits on the negative electrode, impairing cycle characteristics or rate performance.

To prevent such degradation of battery characteristics, a positive-electrode material for a lithium secondary battery containing lithium manganate coated with an organic compound that can supply a ligand has been disclosed (see, for example, Patent Literature 3). Although it is considered that manganese ions and nickel ions eluted from a positive-electrode active material can be trapped by an organic compound that can supply a ligand, the organic compound that can supply a ligand is a low-molecular-weight compound, is therefore easily eluted and desorbed from the surface of lithium manganate and has limited effects. It is also disclosed that, in a non-aqueous electrolyte secondary battery having a manganese-based positive electrode, the non-aqueous electrolyte solution contains a chelating agent or crown ether that forms a complex with manganese (see, for example, Patent Literature 4). Although it is considered that manganese ions and nickel ions eluted from a positive-electrode active material can be trapped by the chelating agent or crown ether in the non-aqueous electrolyte solution, the chelating agent or crown ether dissolved in the non-aqueous electrolyte solution also diffuses into the negative electrode, undergoes reductive decomposition in the negative electrode and therefore has small effects.

The third aspect of the present invention aims to provide a lithium-ion battery electrode mixture composition that can be used to produce an electrode with good charge-discharge characteristics and an extended cycle life, a slurry for forming a lithium-ion battery electrode mixture layer, a lithium-ion battery electrode and a lithium-ion battery.

It is known that electrodes of lithium-ion batteries have a structure in which a porous body composed mainly of a - powdered active material, a conductive additive and a binder is stacked and bound on a current collector, and the performance of the electrodes is greatly affected not only by the characteristics of the active material but also by the type of the binder.

Although poly(vinylidene difluoride) (PVDF) has been mainly used as a binder for a positive electrode, an organic solvent, such as N-methylpyrrolidone, is used to produce an electrode, and this increases ancillary facilities related to electrode production, such as detoxification equipment required in a slurry preparation process or an electrode sheet coating process and solvent recovery equipment required in an electrode sheet drying process, leading to increased costs. Furthermore, purchase and recovery of the organic solvent increase running costs, and the amount of binder to be added increases due to low adhesive strength of PVDF to a positive-electrode active material.

On the other hand, instead of using the organic solvent, the use of poly(vinyl alcohol) and methyl cellulose (see, for example, Patent Literature 5), the use of xanthan gum (see, for example, Patent Literature 6), the use of a starch polysaccharide, such as amylose or amylopectin (see, for example, Patent Literature 7 or 8) or the use of an alginic acid or an alginic acid derivative (see, for example, Patent Literature 9, 10, 11, 12 or 13) is disclosed as an aqueous binder that can be dispersed and dissolved in water. Although an aqueous binder is preferred because it does not require detoxification equipment for electrode sheet production and provides a good work environment, depending on the combination of an active material and a binder, a problem, such as a decrease in adhesive strength to the active material or corrosion of a current collector, may occur.

Lithium composite oxides, such as LiMn₂O₄, LiNi_{0.5}Mn_{1.5}O₄, LiNi_{0.5}Mn_{0.3}Co_{0.2}O₂, LiNi_{0.33}Mn_{0.33}Co_{0.33}O₂, LiNi_{0.8}Mn_{0.1}Co_{0.1}O₂, LiNi_{0.8}Co_{0.15}Al_{0.05}O₂ and LiMn_{0.7}Fe_{0.3}PO₄, are often used as positive-electrode active materials. However, it has been known that, in these lithium composite oxides, manganese or nickel in the active materials dissolves and is ionized during charge and discharge and precipitates and deposits on a negative electrode, impairing cycle characteristics or rate performance.

The fourth aspect of the present invention aims to provide a lithium-ion battery electrode binder that has high workability for electrode production, has good charge-discharge characteristics and can be used to produce an electrode with an extended cycle life, as well as a slurry for forming a lithium-ion battery electrode mixture layer, a lithium-ion battery electrode and a lithium-ion battery each produced by using the lithium-ion battery electrode binder.

The fifth aspect of the present invention aims to provide a composition that has high workability for electrode production, has good charge-discharge characteristics and can be used to produce an electrode with an extended cycle life, as well as a lithium-ion battery electrode binder containing the composition, a slurry for forming a lithium-ion battery electrode mixture layer containing the composition, a lithium-ion battery electrode and a lithium-ion battery.

The sixth aspect of the present invention also aims to provide a composition that has high workability for electrode production due to high storage stability, transportability and handleability in a dry state and that, when used as a lithium-ion battery electrode binder, easily forms a compound with ion binding properties upon contact with water, enabling the production of an electrode with good charge-discharge characteristics and an extended cycle life, a lithium-ion battery electrode binder containing the composition, a slurry for forming a lithium-ion battery electrode mixture layer containing the binder, a lithium-ion battery electrode and a lithium-ion battery.

On the other hand, a hydrogen-ion-form alginic acid has been produced by a method of dissolving an alginate salt, such as sodium alginate, in water and adding an acid to the aqueous solution to precipitate and recover a water-insoluble hydrogen-ion-form alginic acid (see, for example, Patent Literature 14). In this method, however, the molecular weight of the alginate salt is reduced by the action of the acid, and it is not possible to produce a hydrogen-ion-form alginic acid with a molecular weight higher than a certain molecular weight. Furthermore, to produce a hydrogen-ion-form alginic acid with a relatively high molecular weight by this method, it is necessary to use an alginate salt with a high molecular weight as a raw material, and only a dilute solution with a low concentration can be produced due to a remarkable increase in the viscosity of the aqueous solution. Furthermore, the hydrogen-ion-form alginic acid thus produced is also recovered as a hydrogel containing a large amount of water and has a problem of low productivity, for example, due to the load on a drying process.

On the other hand, a hydrogen-ion-form alginic acid, an alginate salt or an alginic acid derivative (hereinafter abbreviated to an "alginic acid") can be used as a raw material for a lithium-ion battery electrode binder (see, for example, Patent Literature 14, 15 or 10). However, an alginic acid with a low molecular weight caused a -problem of cracking or peeling of an electrode due to good binding properties to a current collector.

The seventh aspect of the present invention is also directed to a high-molecular-weight hydrogen-ion-form alginic acid useful as a raw material for a lithium-ion battery electrode binder. The present invention also aims to provide a lithium-ion battery electrode binder, a slurry for forming a lithium-ion battery electrode mixture layer, a lithium-ion battery electrode and a lithium-ion battery each using the high-molecular-weight hydrogen-ion-form alginic acid as a raw material.

Still another object is to provide a method for producing a hydrogen-ion-form alginic acid with high productivity.

### Solution to Problem

As a result of extensive studies to solve the above problems, the present inventors have completed the first aspect of the present invention by finding that the above objects can be achieved by using a water-soluble chelating polymer produced by introducing a chelating functional group into an anionic polymer having a carboxy group, a sulfonate group and/or a sulfate group through an ionic bond.

The first aspect of the present invention includes the following [1-1] to [1-5] .
[1-1] A water-soluble chelating polymer comprising an anionic polymer having a carboxy group, a sulfonate group and/or a sulfate group bonded through an ionic bond to a chelating functional group having a cationic functional group, wherein the water-soluble chelating polymer contains 0.2 to 6 mmol/g of the chelating functional group and has a weight-average molecular weight in the range of 30,000 to 1,000,000.
[1-2] The water-soluble chelating polymer according to [1-1], wherein the anionic polymer is an acidic polysaccharide.
[1-3] The water-soluble chelating polymer according to [1-1] or [1-2], wherein the chelating functional group is an aminocarboxylate group or an aminophosphonate group.
[1-4] A method for producing a water-soluble chelating polymer, comprising: bringing an anionic polymer having a carboxy group, a sulfonate group and/or a sulfate group into contact with an acid to convert the carboxy group, the sulfonate group and/or the sulfate group into a hydrogen ion form; and then bringing the polymer into contact with a compound having a chelating functional group and an amino group to introduce the chelating functional group into the anionic polymer.
[1-5] The method for producing a water-soluble chelating polymer according to [1-4], comprising: dispersing the anionic polymer having the carboxy group, the sulfonate group and/or the sulfate group in the hydrogen ion form in a hydrophobic solvent; dissolving a compound having a chelating functional group and an amino group in water; and mixing the hydrophobic solvent and the water to prepare a water-in-oil emulsion and introduce the chelating functional group into the anionic polymer.
[1-6] A method for trapping a heavy-metal ion, comprising adding the water-soluble chelating polymer according to [1-1] to [1-3] to a solution containing a heavy-metal ion to trap the heavy-metal ion with the chelating polymer.

The present inventors presume the reason why the objects described above are achieved by the first aspect of the present invention as described below.

The chelating polymer according to the first aspect of the present invention can be prepared in the form of an aqueous solution and can be easily applied to a polar fine particle carrier with a large specific surface area, and the applied fine particle carrier can rapidly adsorb and remove a trace amount of heavy-metal ions in an organic solvent in a short time by the synergistic effect of the chelating functional group near the surface and the large specific surface area.

To obtain the same effect with the fibrous chelating resin described above, it is necessary to grind the fibrous chelating resin to an average particle size of 5 µm or less, but fine grinding of the fibrous chelating resin is difficult and is not appropriate in terms of cost.

The second aspect of the present invention includes the following [2-1] to [2-9] .
[2-1] A chelating polymer having the structure represented by the following general formula (1) and containing 0.2 to 5 mmol/g of a chelating functional group.

   PS-X-A-CL (1)

   (In the formula, PS denotes an acidic polysaccharide or a basic polysaccharide. X denotes a group represented by - O- or -N(R)-, R denotes a hydrogen atom or a hydrocarbon group with 1 to 6 carbon atoms. A denotes an organic group - with 3 to 30 carbon atoms, and CL denotes an organic group with 1 to 30 carbon atoms having a chelating functional group.)
[2-2] The chelating polymer according to [2-1], which has the structure represented by the following general formula (2). 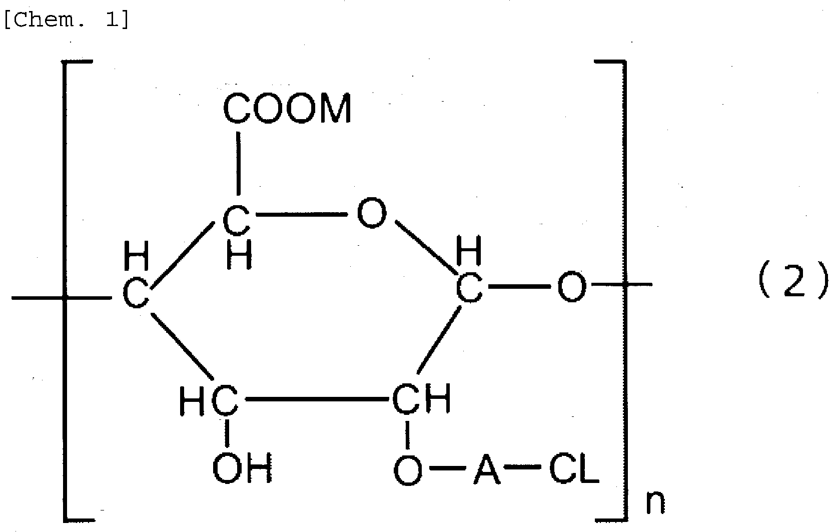 (In the formula, A and CL have the same meanings as described above. M denotes a hydrogen atom or an alkali metal ion, and n denotes an integer in the range of 10 to 1000.)
[2-3] The chelating polymer according to [2-1] or [2-2], which has a weight-average molecular weight in the range of 10,000 to 1,000,000.
[2-4] A method for producing the chelating polymer according to [2-1], comprising reacting an acidic polysaccharide and/or a basic polysaccharide with an epihalohydrin and/or a polyfunctional epoxy compound having 2 to 6 epoxy groups and then with a compound having an amino group and a chelating functional group.
[2-5] A chelating polymer having the structure represented by the following general formula (3) and containing 0.2 to 5 mmol/g of a chelating functional group. 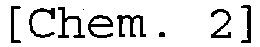 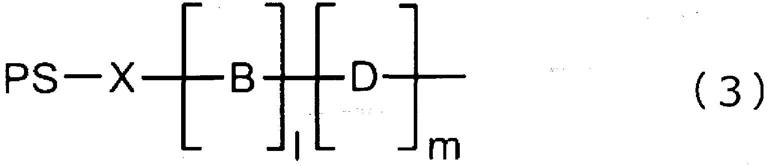 (In the formula, PS and X have the same meanings as described above. B denotes a vinyl monomer residue with 4 to 30 carbon atoms having a chelating functional group, D denotes a vinyl monomer residue with 4 to 30 carbon atoms having no chelating functional group, and 1 and m each independently denote an integer in the range of 10 to 500.)
[2-6] The chelating polymer according to [2-5], which has the structure represented by the following general formula(4). 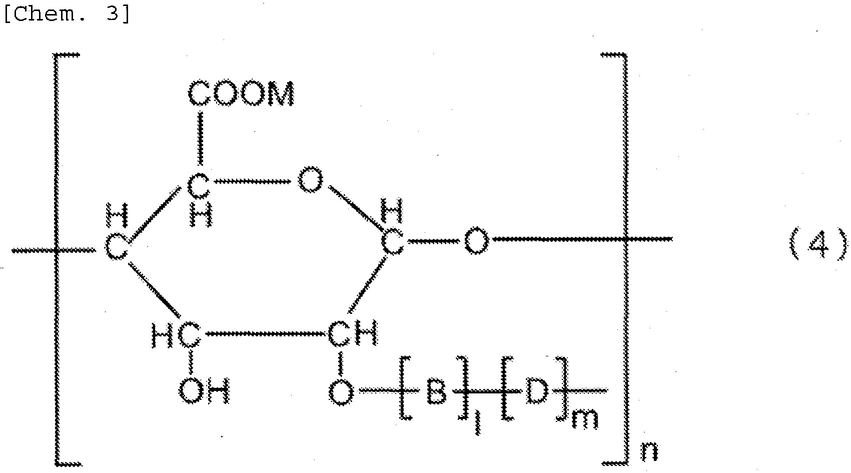 (In the formula, B, D, M, 1, m and n have the same meanings as described above.)
[2-7] The chelating polymer according to [2-5] or [2-6], which has a weight-average molecular weight in the range of 10,000 to 1,000,000.
[2-8] A method for producing the chelating polymer according to [2-5], comprising graft polymerization of an acidic polysaccharide and/or a basic polysaccharide with a vinyl monomer having an epoxy group followed by a reaction with a compound having an amino group and a chelating functional group.
[2-9] A method for trapping a heavy-metal ion, comprising adding the chelating polymer according to any one of [2-1] to [2-3] and [2-5] to [2-7] to a solution containing a heavy-metal ion to trap the heavy-metal ion with the chelating polymer.

The present inventors presume the reason why the objects described above are achieved by the second aspect of the present invention as described below.

The chelating polymer according to the second aspect of the present invention is water-soluble or water-swellable, has a high affinity for a polar organic solvent, can be easily ground into fine particles and can rapidly adsorb and remove a trace amount of heavy-metal ions in a polar organic solvent in a short time.

- The third aspect of the present invention includes the following [3-1] to [3-12].
[3-1] A lithium-ion battery electrode mixture composition comprising an electrode mixture containing an active material, a binder and an optional conductive additive, wherein the binder is a water-soluble polymer and contains water-insoluble polymer fine particles having a chelating group.
[3-2] The lithium-ion battery electrode mixture composition according to [3-1], wherein the water-insoluble polymer fine particles having the chelating group are water-insoluble polysaccharide fine particles having a chelating group.
[3-3] The lithium-ion battery electrode mixture composition according to [3-1], wherein the water-soluble polymer is a polysaccharide, a (meth)acrylic acid homopolymer or copolymer, a maleic acid homopolymer or copolymer or a salt thereof.
[3-4] A slurry for forming a lithium-ion battery electrode mixture layer, containing the electrode mixture composition according to any one of [3-1] to [3-3] and water.
[3-5] A lithium-ion battery electrode containing the electrode mixture composition according to any one of [3-1] to [3-3].
[3-6] A lithium-ion battery including the lithium-ion battery electrode according to [3-5] in an electrode mixture of at least one of a positive electrode and a negative electrode.
[3-7] A lithium-ion battery electrode mixture composition, wherein in an electrode mixture containing an active material, a binder and an optional conductive additive, the binder is a fluoropolymer, and organic-solvent-insoluble polymer fine particles having a chelating group are contained.
[3-8] The lithium-ion battery electrode mixture composition according to [3-7], wherein the organic-solvent-insoluble polymer fine particles having the chelating group are organic-solvent-insoluble polysaccharide fine particles having a chelating group.
[3-9] The lithium-ion battery electrode mixture composition according to [3-7], wherein the organic solvent is an amide solvent.
[3-10] A slurry for forming a lithium-ion battery electrode mixture layer, containing the electrode mixture composition according to any one of [3-7] to [3-9] and an organic solvent.
[3-11] A lithium-ion battery electrode containing the electrode mixture composition according to any one of [3-7] to [3-9].
[3-12] A lithium-ion battery including the lithium-ion battery electrode according to [3-11] in an electrode mixture of at least one of a positive electrode and a negative electrode.

The present inventors presume the reason why the objects described above are achieved by the third aspect of the present invention as described below.

The insoluble polymer fine particles having a chelating group in the electrode mixture layer trap manganese ions and nickel ions eluted from a positive-electrode active material near the active material, suppress precipitation and deposition of manganese and nickel on a negative-electrode active material and can achieve good charge-discharge characteristics and extension of cycle life. It is also presumed that the insoluble polymer having the chelating group in the form of fine particles improves the-trapping efficiency of manganese ions and nickel ions.

The fourth aspect of the present invention includes the following [4-1] to [4-5] .
[4-1] A lithium-ion battery electrode binder, wherein a binder for binding an active material, a conductive additive and a current collector in a lithium-ion battery contains a polymer having a chelating group.
[4-2] The binder according to [4-1], wherein the chelating group in the polymer having the chelating group is bonded to the polymer through a covalent bond and/or an ionic bond.
[4-3] A slurry for forming a lithium-ion battery electrode mixture layer, containing an active material, a conductive additive, the binder according to [4-1] or [4-2] and water.
[4-4] A lithium-ion battery electrode containing the binder according to [4-1] or [4-2] .
[4-5] A lithium-ion battery including the electrode according to [4-4] .

The present inventors presume the reason why the objects described above are achieved by the fourth aspect of the present invention as described below.

When the polymer having the chelating group is used as the binder, the chelating group traps manganese ions and nickel ions eluted from a positive-electrode active material near a positive electrode and/or a negative electrode, has an effect of suppressing precipitation and deposition on a negative-electrode active material and can achieve good charge-discharge characteristics and extension of cycle life.

The fifth aspect of the present invention includes the following [5-1] to [5-6] .
[5-1] A composition comprising a polymer and a low-molecular-weight compound having a chelating group.
[5-2] The composition according to [5-1], wherein the polymer is a water-soluble polymer, and the low-molecular-weight compound having the chelating group is a water-soluble compound.
[5-3] A lithium-ion battery electrode binder containing the composition according to [5-1] or [5-2].
[5-4] A slurry for forming a lithium-ion battery electrode mixture layer, containing an active material, a conductive additive, the binder according to [5-3] and water.
[5-5] A lithium-ion battery electrode containing the binder according to [5-3] .
[5-6] A lithium-ion battery including the electrode according to [5-5].

The present inventors presume the reason why the objects described above are achieved by the fifth aspect of the present invention as described below.

It is thought that, when a composition containing a polymer physically mixed with a low-molecular-weight compound having a chelating group is used in a binder, the binder covers an active material, and the low-molecular-weight compound having the chelating group dispersed in the binder efficiently traps manganese ions and nickel ions eluted from a positive-electrode active material near a positive electrode and/or a negative electrode, suppresses precipitation and deposition of manganese and nickel on a negative-electrode active material and could achieve good charge-discharge characteristics and extension of cycle life.

The sixth aspect of the present invention includes the following [6-1] to [6-8] .
[6-1] A composition comprising a hydrogen-ion-form alginic acid and a compound having a chelating group.
[6-2] The composition according to [6-1] or [6-2], wherein the compound having the chelating group is a compound containing at least one basic functional group selected from the group consisting of a primary amino group, a secondary amino group, a tertiary amino group and an imino group.
[6-3] The composition according to [6-1], wherein the compound having the chelating group is a compound that has a pH in the range of 3 to 9 in aqueous solution when dissolved in water.
[6-4] The composition according to any one of [6-1] to [6-3], further containing an active material.
[6-5] A lithium-ion battery electrode binder containing the composition according to any one of [6-1] to [6-3].
[6-6] A slurry for forming a lithium-ion battery electrode mixture layer, containing an active material, a conductive additive, the binder according to [6-5] and water.
[6-7] A lithium-ion battery electrode containing the binder according to [6-5].
[6-8] A lithium-ion battery including the lithium-ion battery electrode according to [6-7].

The seventh aspect of the present invention includes the following [7-1] to [7-6].
[7-1] A high-molecular-weight hydrogen-ion-form alginic acid with a weight-average molecular weight in the range of 500,000 to 1,500,000 and a hydrogen ion substitution rate in the range of 80% to 99%.
[7-2] A method for producing a hydrogen-ion-form alginic acid comprising: dispersing at least one of an alkali metal alginate and an alkaline-earth metal alginate in a poor solvent therefor; and adding an acid to ion-exchange at least one of the alkali metal alginate and the earth metal alginate in a dispersion state into a hydrogen ion form.
[7-3] A lithium-ion battery electrode binder containing the high-molecular-weight hydrogen-ion-form alginic acid according to [7-1].
[7-4] A slurry for forming a lithium-ion battery electrode mixture layer, containing an active material, a conductive additive, the lithium-ion battery electrode binder according to [7-3] and water.
[7-5] A lithium-ion battery electrode including an active material, a conductive additive and the lithium-ion battery electrode binder according to [7-3].
[7-6] A lithium-ion battery including the lithium-ion battery electrode according to [7-5].

### Advantageous Effects of Invention

The first aspect and the second aspect of the present invention can produce by a simple method and provide a water-soluble chelating polymer that can rapidly trap a trace amount of heavy-metal ions and that can reduce the amount of heavy-metal ions to a ppm level or lower in a short time.

The third aspect of the present invention can provide a lithium-ion battery electrode mixture composition that can be used to produce a battery with good charge-discharge characteristics and an extended cycle life, a slurry for forming a lithium-ion battery electrode mixture layer, a lithium-ion battery electrode and a lithium-ion battery.

The fourth aspect of the present invention can provide a lithium-ion battery electrode binder and a slurry for forming a lithium-ion battery electrode mixture layer, which have high workability for electrode production, have good charge-discharge characteristics and can be used to produce an electrode with an extended cycle life, and these can be used to provide a lithium-ion battery electrode and a lithium-ion battery each having good charge-discharge characteristics and an extended cycle life.

The fifth aspect and the sixth aspect of the present invention can provide a composition, a lithium-ion battery electrode binder and a slurry for forming a lithium-ion battery electrode mixture layer, which have high workability for electrode production, have good charge-discharge characteristics and can be used to produce an electrode with an extended cycle life, and these can be used to provide a lithium-ion battery electrode and a lithium-ion battery each having good charge-discharge characteristics and an extended cycle life.

The seventh aspect of the present invention can provide a high-molecular-weight hydrogen-ion-form alginic acid useful as a raw material for a lithium-ion battery electrode binder and produce the high-molecular-weight hydrogen-ion-form alginic acid with high productivity.

### Brief Description of Drawings

[Fig. 1] Fig. 1 is an FT-IR spectrum of a hydrogen-ion-form alginic acid used in Example 1-1.
[Fig. 2] Fig. 2 is an FT-IR spectrum of a chelating polymer obtained in Example 1-1.
[Fig. 3] Fig. 3 is a graph comparing the charge-discharge cycle characteristics of laminated cells obtained in Example 4-1, Example 4-2 and Comparative Example 4-1.

### Description of Embodiments

The first aspect of the present invention is described in detail below.

The first aspect of the present invention is a water-soluble chelating polymer and a method for producing the water-soluble chelating polymer.

The water-soluble chelating polymer according to the first aspect of the present invention is a water-soluble chelating polymer comprising an anionic polymer having a carboxy group, a sulfonate group and/or a sulfate group bonded through an ionic bond to a chelating functional group having a cationic functional group, wherein the water-soluble chelating polymer contains 0.2 to 6 mmol/g of the chelating functional group and has a weight-average molecular weight in the range of 30,000 to 1,000,000. In the first aspect of the present invention, the term "water-soluble" refers to a water solubility in the range of 0.1 to 50 g/100 g. The term "anionic polymer" refers to a polymer that can immobilize a chelating functional group through an ionic bond, and is a polymer having a carboxy group, a sulfonate group and/or a sulfate group as a functional group for immobilizing a chelating functional group. Some examples of the anionic polymer having a carboxy group, a sulfonate group and/or a sulfate group include vinyl polymers, such as poly(acrylic acid), poly(methacrylic acid), poly(itaconic acid), poly(maleic acid), ethylenemaleic acid copolymers, isobutene-maleic acid copolymers, methyl vinyl ether-maleic acid copolymers, styrene-maleic acid copolymers, poly(fumaric acid), poly(vinylsulfonic acid), poly(styrenesulfonic acid), poly(2-sulfoethyl methacrylate), poly(2-sulfoethyl acrylate), poly(3-sulfopropyl methacrylate), poly(3-sulfopropyl acrylate), poly(4-sulfobutyl methacrylate), poly(4-sulfobutyl acrylate), poly(2-acrylamido-2-methylpropanesulfonic acid), poly(2-methacrylamido-2-methylpropanesulfonic acid) and copolymers thereof; and acidic polysaccharides, such as carboxymethyl cellulose, gellan gum, alginic acid, sulfated alginic acid, carrageenan, xanthan gum, chondroitin sulfate, heparin, hyaluronic acid, pectic acid, gum arabic, agar and gum tragacanth. These polymers may be copolymerized with another monomer as long as water solubility can be maintained. Among these anionic polymers, acidic polysaccharides with high mechanical strength and oxidation resistance are preferably used, and alginic acid and sulfated alginic acid are more preferably used. The ratio of mannuronic acid to guluronic acid, which are components of alginic acid, is arbitrary, and alginic acid with a high mannuronic acid ratio, which forms a flexible gel, or alginic acid with a high guluronic acid ratio, which forms a rigid gel, can be used.

Sulfated polysaccharides in which a sulfate group is introduced into a polysaccharide are also suitably used. The sulfate group is a strongly acidic cation exchange group that can exchange ions not only with basic salts but also with neutral salts, such as NaCl and CaCl₂. The sulfate group is introduced into a hydroxy group in the polysaccharide structure, and hydrogen of the hydroxy group is substituted with -SO₃H. The sulfate group content preferably ranges from 0.5 to 5.0 mmol/g. A sulfate group content in this range is preferred due to an increase in the chelating functional group content and an improvement in oxidation resistance.

In a water-soluble chelating polymer, the anionic polymer and a chelating functional group having a cationic functional group are bonded through an ionic bond. The chelating functional group refers to a ligand with a plurality of coordination sites and is a functional group that can form a chelate with a polyvalent metal ion. A chelating functional group having an aminocarboxylate group or an aminophosphonate group is suitably used as the chelating functional group. Some examples of the chelating functional group having the aminocarboxylate group include an iminodiacetate group, a nitrilotriacetate group, a hydroxyethyl glycine group and a hydroxyethyl iminodiacetate group. Some examples of the chelating functional group having an aminophosphonic acid include an aminomethylphosphonate group and a nitrilotris(methylphosphonic acid) group.

The amount of the chelating functional group in the water-soluble chelating polymer ranges from 0.2 to 6 mmol/g, preferably 0.5 to 5 mmol/g. A chelating functional group content in this range is preferred due to rapid trapping of heavy-metal ions and a sufficient amount of heavy-metal ions trapped. The amount of the functional group in the water-soluble chelating polymer can be calculated by elemental analysis.

The water-soluble chelating polymer has a molecular weight in the range of 30,000 to 1,000,000, preferably 50,000 to 1,000,000, in terms of the weight-average molecular weight. A weight-average molecular weight in this range is preferred due to sufficient mechanical strength and a viscosity adjustable without problems for processing. The weight-average molecular weight of a water-soluble polymer can be calculated by gel permeation chromatography (GPC) measurement.

The water-soluble chelating polymer according to the first aspect of the present invention has a structure in which a chelating functional group is bonded to an anionic polymer through an ionic bond. To form an ionic bond with an anionic polymer, a cationic functional group is required in a compound having a chelating functional group. The cationic functional group is, for example, an ammonium group, a phosphonium group or a sulfonium group. The formation of an ionic bond in a water-soluble polymer can be confirmed by observing a change in a spectrum by infrared spectroscopy, such as FT-IR.

For example, the following is a chelating polymer formation reaction formula using an alginic acid as an anionic polymer and disodium iminodiacetate as a compound having a chelating group.

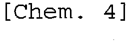

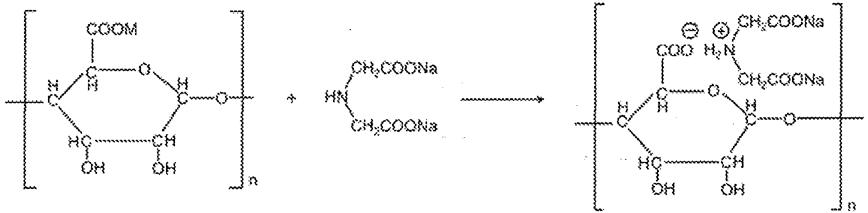

Next, a method for producing a chelating polymer according to the first aspect of the present invention is described. A water-soluble chelating polymer can be produced by bringing an anionic polymer having a carboxy group, a sulfonate group and/or a sulfate group into contact with an acid to convert the carboxy group, the sulfonate group and/or the sulfate group into a hydrogen ion form, and then bringing the polymer into contact with a compound having a chelating functional group and an amino group, a compound having a chelating functional group having a phosphonium group or a compound having a chelating functional group having a sulfonium group to introduce the chelating functional group into the anionic polymer.

First, an anionic polymer having a carboxy group, a sulfonate group and/or a sulfate group is brought into contact with an acid to convert the carboxy group, the sulfonate group and/or the sulfate group into a hydrogen ion form. Converting the carboxy group, the sulfonate group and/or the sulfate group into the hydrogen ion form allows an amino group in a chelate compound to easily form a salt with the carboxy group, the sulfonate group and/or the sulfate group and allows the chelate compound to be introduced into the anionic polymer through an ionic bond. The reaction for converting the carboxy group, the sulfonate group and/or the sulfate group in the anionic polymer into the hydrogen ion form is performed by dissolving the anionic polymer in water and adding an acid thereto. The concentration of the aqueous solution of the anionic polymer is preferably, but not limited to, in the range of 0.1% to 5% in terms of high handleability and productivity. The reaction temperature can be any temperature except for the temperature range in which water solidifies or boils, and, more specifically, preferably ranges from 5°C to 90°C. The reaction time is preferably, but not limited to, in the range of 5 to 120 minutes. The acid to be used is not particularly limited as long as the pH can be reduced to 2 or less, and may be hydrochloric acid, sulfuric acid, nitric acid or trifluoroacetic acid. The acid may be added in such an amount that the pH of the aqueous solution of the anionic polymer is 2 or less. After completion of the reaction, the hydrogen-ion-form anionic polymer is precipitated in the form of a gel, and the precipitated gel is collected by filtration or the like and, if necessary, is washed with water and is dried for isolation.

An anionic polymer having a carboxy group, a sulfonate group and/or a sulfate group converted into a hydrogen ion form in advance is commercially available and may be used without the acid treatment process described above.

The hydrogen-ion-form anionic polymer is then brought into contact with a compound having a chelating functional group and an amino group to introduce the chelating functional group into the anionic polymer. The compound having the chelating functional group and the amino group refers to a compound having both the amino group and the chelating functional group. The chelating functional group is, for example, an aminocarboxylate group or an aminophosphonate group. Some specific examples of the compound having the chelating functional group include iminodiacetic acid, nitrilotriacetic acid, ethylenediaminetetraacetic acid, N,N-bis(2-hydroxyethyl)glycine, 1,2-diaminocyclohexanetetraacetic acid, diethylenetriaminepentaacetic acid, N-(2-hydroxyethyl)ethylenediaminetriacetic acid, bis(2-aminoethyl)ethylene glycol tetraacetic acid, bis(2-aminophenyl)ethylene glycol tetraacetic acid, N-(2-hydroxyethyl)iminodiacetic acid, tetrakis(2-pyridylmethyl)ethylenediamine, triethylenetetraminehexaacetic acid, aminomethylphosphonic acid, aminoethylphosphonic acid, aminopropylphosphonic acid, nitrilotris(methylphosphonic acid) and salts thereof. These chelate compounds having an amino group may be used alone or in combination. The addition amount of the compound having the chelating functional group and the amino group ranges from 0.1 to 1 mole per mole of the carboxy group, the sulfonate group and/or the sulfate group in the anionic polymer.

The water-soluble chelating polymer may be stored in the form of an aqueous solution or may be isolated and stored as a solid. The solid isolation method may be an isolation method of heating an aqueous solution to remove water or an isolation method of adding dropwise an aqueous solution to a poor solvent for the chelating polymer, such as an alcohol or acetone, to precipitate the polymer.

The water-soluble chelating polymer has high viscosity when dissolved in water even at a low concentration and is therefore difficult to produce under high concentration conditions. Thus, it has been found that the water-soluble chelating polymer can be produced with improved productivity even under high concentration conditions by dispersing an anionic polymer having a carboxy group, a sulfonate group and/or a sulfate group in a hydrogen ion form in a hydrophobic solvent, dissolving a compound having a chelating functional group and an amino group in water and mixing the hydrophobic solvent and the water to prepare a water-in-oil emulsion

An anionic polymer having a carboxy group, a sulfonate group and/or a sulfate group in a hydrogen ion form can be produced by bringing an anionic polymer having a carboxy group, a sulfonate group and/or a sulfate group into contact with an acid in the same manner as described above. The hydrogen-ion-form anionic polymer is insoluble in a hydrophobic solvent due to its high hydrophilicity, and bringing the hydrogen-ion-form anionic polymer into contact with the hydrophobic solvent yields a slurry of the hydrogen-ion-form anionic polymer dispersed in the hydrophobic solvent. The hydrophobic solvent to be used may be a solvent that is not mutually soluble with water, for example, a higher alcohol, such as butanol, hexanol or octanol; a vegetable oil, such as olive oil, palm oil, rapeseed oil, soybean oil or cotton seed oil; an ester solvent, such as propyl acetate, butyl acetate or hexyl acetate; or a hydrocarbon, such as hexane, decane, hexadecane, benzene, toluene or xylene. The concentration of the slurry is not particularly limited, but the slurry can be prepared at a concentration as high as 10% to 30% by weight. To stabilize a water-in-oil emulsion described later, if necessary, an emulsifier may be added. A preferred emulsifier may be a lipophilic emulsifier with a hydrophilic-lipophilic balance (HLB) of 7 or less, for example, a sorbitan fatty acid ester, such as sorbitan monooleate or sorbitan monostearate, a sucrose fatty acid ester, such as sucrose stearate or sucrose oleate, or lecithin. The addition amount of the emulsifier is also not particularly limited, and the emulsifier can be added in an amount of 5% to 30% by weight with respect to the hydrophobic solvent.

An aqueous solution of a compound having a chelating functional group and an amino group can be prepared by dissolving the compound having the chelating functional group and the amino group in water. The concentration of the aqueous solution is preferably as high as possible from the perspective of increasing productivity and preferably ranges from 10% to 30% by weight.

A water-in-oil emulsion is produced by contacting and mixing a slurry of the hydrogen-ion-form anionic polymer dispersed in a hydrophobic solvent with an aqueous solution of the compound having the chelating functional group and the amino group. The contacting and mixing method is not particularly limited, but a method of adding dropwise an aqueous solution of a chelate compound to an anionic polymer dispersion liquid is preferred because a homogeneous water-soluble chelating polymer is easily prepared. The temperature for the contacting and mixing is preferably a low temperature in the range of 0°C to 15°C to stably maintain the water-in-oil emulsion. The time required for the contacting and mixing is preferably, but not limited to, approximately 10 minutes to 5 hours. To uniformly maintain the contacting and mixing, a large blade, such as Fullzone or Maxblend, is preferred as an impeller blade.

The water-soluble chelating polymer may be isolated from the water-in-oil emulsion by any method, for example, a method of heating the water-in-oil emulsion to remove water and then isolating water-soluble chelating polymer particles by filtration or a method of adding dropwise the water-in-oil emulsion to a solvent (such as acetone or a lower alcohol) miscible with both water and a hydrophobic solvent to isolate water-soluble chelating polymer particles.

The water-soluble chelating polymer can be prepared in the form of an aqueous solution and can be easily applied to a polar fine particle carrier with a large specific surface area, and the applied fine particle carrier can rapidly adsorb and remove a trace amount of heavy-metal ions in an organic solvent in a short time by the synergistic effect of the chelating functional group near the surface and the large specific surface area. Thus, the water-soluble chelating polymer can be suitably used for purification of an organic solvent for semiconductor production requiring high purity.

A water-soluble chelating polymer can be added to a solution containing heavy-metal ions to trap the heavy-metal ions with the chelating polymer.

The second aspect of the present invention is described in detail below.

The second aspect of the present invention is a chelating polymer and a method for producing the chelating polymer.

More specifically, the chelating polymer in the second aspect of the present invention is represented by a chelating polymer (I) or a chelating polymer (II) described later.

The second aspect of the present invention is a chelating polymer (I) having the structure represented by the following general formula (1) and containing 0.2 to 5 mmol/g of a chelating functional group.

PS-X-A-CL (1)

(In the formula, PS denotes an acidic polysaccharide or a basic polysaccharide. X denotes a group represented by - O- or -N(R)-, R denotes a hydrogen atom or a hydrocarbon group with 1 to 6 carbon atoms. A denotes an organic group with 3 to 30 carbon atoms, and CL denotes an organic group with 1 to 30 carbon atoms having a chelating functional group.)

The chelating polymer (I) according to the second aspect of the present invention is represented by the general formula (1) and is produced by introducing a chelating functional group into an acidic polysaccharide or a basic polysaccharide through a covalent bond.

In the formula, PS denotes an acidic polysaccharide or a basic polysaccharide. The acidic polysaccharide refers to a polysaccharide having an acidic functional group, such as a carboxy group or a sulfate group, for example, carboxymethyl cellulose, gellan gum, alginic acid, sulfated alginic acid, carrageenan, xanthan gum, chondroitin sulfate, heparin, hyaluronic acid, pectic acid, gum arabic, agar, gum tragacanth or a salt thereof. Furthermore, it may be mixed with a neutral polysaccharide or another water-soluble polymer as long as the chelating functional group content is not significantly reduced. Furthermore, as long as it has a swelling property with respect to water or an organic solvent, a cross-linked structure may be introduced. Among these acidic polysaccharides, alginic acid, sulfated alginic acid or a salt thereof is preferably used in terms of high oxidation resistance and mechanical strength. The ratio of mannuronic acid to guluronic acid, which are components of alginic acid, is arbitrary, and alginic acid with a high mannuronic acid ratio, which forms a flexible gel, or alginic acid with a high guluronic acid ratio, which forms a rigid gel, can be used.

On the other hand, the basic polysaccharide refers to a polysaccharide having a basic functional group, such as an amino group, for example, chitosan.

Sulfated polysaccharides in which a sulfate group is introduced into a polysaccharide are also suitably used. The sulfate group is a strongly acidic cation exchange group that can exchange ions not only with basic salts but also with neutral salts, such as NaCl and CaCl₂. The sulfate group is introduced into a hydroxy group in the polysaccharide structure, and hydrogen of the hydroxy group is substituted with -SO₃H. The sulfate group content of the polysaccharide preferably ranges from 0.5 to 5.0 mmol/g. A sulfate group content in this range is preferred due to an increase in the chelating functional group content and an improvement in oxidation resistance.

X denotes a group represented by -O- or -N(R)-, R denotes a hydrogen atom or a hydrocarbon group with 1 to 6 carbon atoms. The hydrocarbon group with 1 to 6 carbon atoms may be a methyl group, an ethyl group, a n-propyl group, an isopropyl group, a n-butyl group, a sec-butyl group, a tert-butyl group, an isobutyl group, a n-pentyl group, a sec-pentyl group, a tert-pentyl group, an isopentyl group, a neopentyl group, a 3-pentyl group, a cyclopentyl group, a n-hexyl group, an isohexyl group, a sec-hexyl group, a tert-hexyl group, a neohexyl group, a 2-methylpentyl group, a 3-methylpentyl group, a 1,2-dimethylbutyl group, a 2,2-dimethylbutyl group, a 1-ethylbutyl group, a 2-ethylbutyl group or a cyclohexyl group.

The organic group CL including the chelating functional group only needs to have the chelating functional group and may have 1 to 30 carbon atoms and contain a heteroatom, such as oxygen, nitrogen, phosphorus or sulfur, in addition to carbon and hydrogen. The chelating functional group refers to a ligand with a plurality of coordination sites and is a functional group that can form a chelate with a polyvalent metal ion. The chelating functional group may suitably be a chelating functional group having an aminocarboxylic acid, a chelating functional group having an aminophosphonic acid or a chelating functional group having a polyamine. Some examples of the chelating functional group having the aminocarboxylic acid include an iminodiacetate group, a nitrilotriacetate group, a N,N-bis(2-hydroxyethyl)glycine group, a hydroxyethyl iminodiacetate group, an ethylenediaminetriacetate group, an ethylenediaminetetraacetate group, a 1,2-bis(2-aminophenoxy)ethanetetraacetate group, a 1,2-diaminocyclohexanetetraacetate group, a diethylenetriamine pentaacetate group, a (2-hydroxyethyl)ethylenediaminetriacetate group, a bis(2-aminoethyl)ethylene glycol tetraacetate group and a triethylenetriaminehexaacetate group. Some examples of the chelating functional group having an aminophosphonic acid include an aminomethylphosphonate group and a nitrilotris(methylphosphonic acid). Some examples of the chelating functional group having the polyamine include a polyethyleneimine group, a polyamidoamine dendrimer group and a tetrakis(2-pyridylmethyl)ethylenediamine group. The organic group CL including the chelating functional group may be only the chelating functional group, but a hydrocarbon group, such as a methyl group, an ethyl group or a phenyl group, an ester group, such as acetate, an ether group, such as ethyl ether, an amide group, such as benzamide, a sulfonate group, such as toluenesulfonate, or the like may be bonded to the chelating functional group.

The amount of the chelating functional group in the chelating polymer (I) ranges from 0.2 to 5 mmol/g, preferably 0.5 to 5 mmol/g. A chelating functional group content in this range is preferred due to rapid trapping of heavy-metal ions and a sufficient amount of heavy-metal ions trapped.

The chelating polymer (I) preferably has a molecular weight in the range of 10,000 to 1,000,000, more preferably 50,000 to 1,000,000, in terms of the weight-average molecular weight. A weight-average molecular weight in this range is preferred due to sufficient mechanical strength and a viscosity adjustable without problems for processing.

The organic group CL including the chelating functional group is introduced into an acidic polysaccharide or a basic polysaccharide through a spacer -A-. "A" denotes an organic group with 3 to 30 carbon atoms, preferably a divalent hydrocarbon group, such as a propylene group, a butylene group or a phenylene group, or a group produced by introducing a hydroxy group or the like into the hydrocarbon group. Some examples of the spacer include 2-hydroxypropylene, 2,2-bis[4-(hydroxypropyloxy)phenyl]propane, 1,2-bis(2-hydroxypropyloxy)ethyl and 1,3-bis(2-hydroxypropyloxy)benzene. The organic group used in the second aspect of the present invention refers to a group containing a heteroatom, such as oxygen, nitrogen, phosphorus or sulfur, in addition to carbon and hydrogen.

Among the chelating polymers (I), a particularly preferred chelating polymer is a chelating polymer with the structure represented by the following general formula (2).

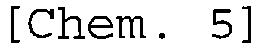

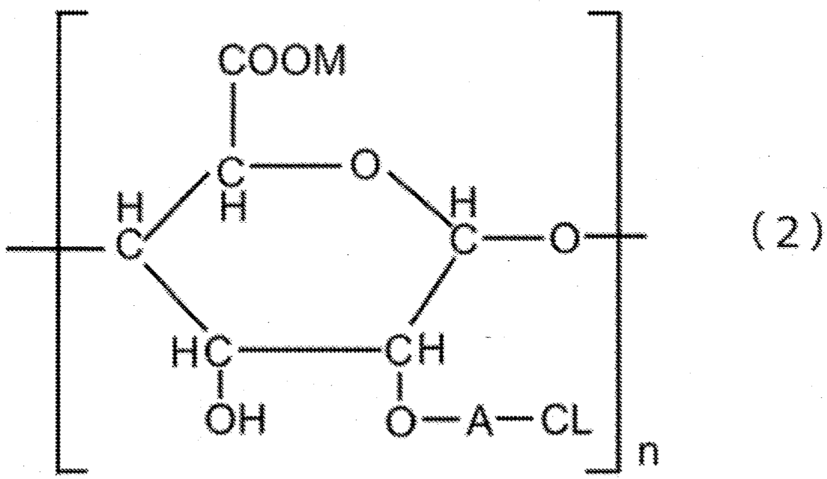

(In the formula, A and CL have the same meanings as described above. M denotes a hydrogen atom or an alkali metal ion, and n denotes an integer in the range of 10 to 1000.)

The chelating polymer (I) is produced by introducing a chelating functional group into an alginic acid or an alginate salt with high oxidation resistance through a covalent bond and can trap and remove heavy-metal ions even under severe conditions.

Next, a method (I) for producing the chelating polymer (I) is described. The production method (I) is a method of reacting an acidic polysaccharide and/or a basic polysaccharide with an epihalohydrin and/or a polyfunctional epoxy compound having 2 to 6 epoxy groups and then with a compound having an amino group and a chelating functional group to introduce the chelating functional group into the acidic polysaccharide or the basic polysaccharide through a covalent bond. The first reaction is a reaction between a hydroxy group of the acidic polysaccharide or an amino group of the basic polysaccharide and the epihalohydrin and/or the polyfunctional epoxy compound having 2 to 6 epoxy groups. The reaction between the amino group of the basic polysaccharide and the epihalohydrin and/or the polyfunctional epoxy compound having 2 to 6 epoxy groups does not particularly require the addition of a base, but the reaction between the hydroxy group of the acidic polysaccharide and the epihalohydrin and/or the polyfunctional epoxy compound having 2 to 6 epoxy groups requires the addition of a base, such as sodium hydroxide. The base is added in an amount in the range of 0.5 to 2 moles per mole of hydroxy groups of the acidic polysaccharide. The reaction may be performed in a heterogeneous system using an alcohol or a water/alcohol mixed solvent as a solvent, but to ensure the uniformity of the reaction, the reaction is preferably performed by dissolving the acidic polysaccharide or the basic polysaccharide in water. The concentration of the polysaccharide aqueous solution is preferably, but not limited to, in the range of 0.1% to 5% in terms of high handleability and productivity. The -reaction temperature is preferably a low temperature to suppress hydrolysis of the polysaccharide and preferably ranges from 0°C to 20°C. The reaction time preferably depends on the reaction temperature and preferably ranges from 3 hours to 24 hours.

Some examples of the epihalohydrin include epichlorohydrin, epibromohydrin, epiiodohydrin and mixtures thereof. Some examples of the polyfunctional epoxy compound having 2 to 6 epoxy groups include bisphenol A diglycidyl ether, bisphenol F diglycidyl ether, resorcin diglycidyl ether, ethylene glycol diglycidyl ether, glycerin triglycidyl ether and 1,3-bis(oxiran-2-ylmethoxy)-2,2-bis[(oxiran-2-ylmethoxy)methyl]propane.

The epihalohydrin and/or the polyfunctional epoxy compound having 2 to 6 epoxy groups may be added in an amount in the range of 1 to 20 moles per mole of the monosaccharide unit of the polysaccharide. The acidic polysaccharide or the basic polysaccharide is reacted with the epihalohydrin and/or the polyfunctional epoxy compound having 2 to 6 epoxy groups under such conditions to introduce a chloromethyl group or an epoxy group into the polysaccharide. The polysaccharide into which a chloromethyl group or an epoxy group has been introduced may be precipitated and recovered by adding dropwise the reaction solution into a poor solvent for the polysaccharide, such as an alcohol or acetone, or may be used in the next reaction after removing unreacted epihalohydrin or polyfunctional epoxy compounds by heating or the like. The chloromethyl group or the epoxy group thus introduced into the polysaccharide reacts with the amino group in the compound having the amino group and the chelating functional group, and the chelating functional group is introduced into the polysaccharide through a covalent bond. This reaction is also preferably performed under mild conditions to suppress hydrolysis of the polysaccharide, and the reaction temperature preferably ranges from 40°C to 80°C. The reaction time preferably depends on the reaction temperature and preferably ranges from 1 to 8 hours. The compound having the amino group and the chelating functional group may be added in an amount in the range of 1 to 20 moles per mole of the monosaccharide unit of the polysaccharide. Specific examples of the compound having the amino group and the chelating functional group include iminodiacetic acid, nitrilotriacetic acid, ethylenediaminetetraacetic acid, N,N-bis(2-hydroxyethyl) glycine, 1,2-diaminocyclohexanetetraacetic acid, diethylenetriaminepentaacetic acid, N-(2-hydroxyethyl)ethylenediaminetriacetic acid, bis(2-aminoethyl)ethylene glycol tetraacetic acid, bis(2-aminophenyl)ethylene glycol tetraacetic acid, N-(2-hydroxyethyl)iminodiacetic acid, tetrakis(2-pyridylmethyl)ethylenediamine, triethylenetetraminehexaacetic acid, polyethyleneimine, aminomethylphosphonic acid, aminoethylphosphonic acid, aminopropylphosphonic acid, nitrilotris(methylphosphonic acid) and salts thereof. These chelate compounds having an amino group may be used alone or in combination.

Next, the chelating polymer (II) according to the second aspect of the present invention is described. The chelating polymer (II) is represented by the following general formula (3).

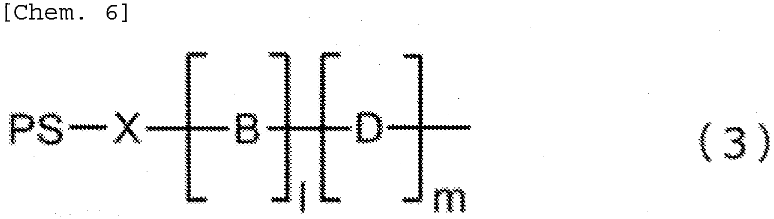

(In the formula, PS and X have the same meanings as described above. B denotes a vinyl monomer residue with 4 to 30 carbon atoms having a chelating functional group, D denotes a vinyl monomer residue with 4 to 30 carbon atoms having no chelating functional group, and 1 and m each independently denote an integer in the range of 10 to 500.)

In the chelating polymer (II), the chelating functional group is introduced into a graft polymer chain and is bonded to an acidic polysaccharide or a basic polysaccharide through a covalent bond. The chelating functional group may be the same as that of the chelating polymer (I). The vinyl monomer residue having the chelating functional group denoted by B in the general formula (3) is, for example, a reaction product of an epoxy group in a vinyl monomer residue having the epoxy group, such as glycidyl methacrylate, and an amino group in a compound having the amino group and the chelating functional group. The vinyl monomer residue with 4 to 30 carbon atoms having no chelating functional group denoted by D in the general formula (3) is, for example, a vinyl monomer residue having an epoxy group, such as glycidyl methacrylate, in which the epoxy group remains as it is, a vinyl monomer residue ring-opened by hydrolysis or a vinyl monomer residue having no epoxy group.

The amount of the chelating functional group in the chelating polymer (II) ranges from 0.2 to 5 mmol/g, preferably 0.5 to 5 mmol/g. A chelating functional group content in this range is preferred due to rapid trapping of heavy-metal ions and a sufficient amount of heavy-metal ions trapped.

The chelating polymer (II) preferably has a molecular weight in the range of 10,000 to 1,000,000, more preferably 50,000 to 1,000,000, in terms of the weight-average molecular weight. A weight-average molecular weight in this range is preferred due to sufficient mechanical strength and a viscosity adjustable without problems for processing.

Among the chelating polymers (II) according to the second aspect of the present invention, a particularly preferred chelating polymer is a chelating polymer with the structure represented by the following general formula (4).

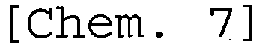

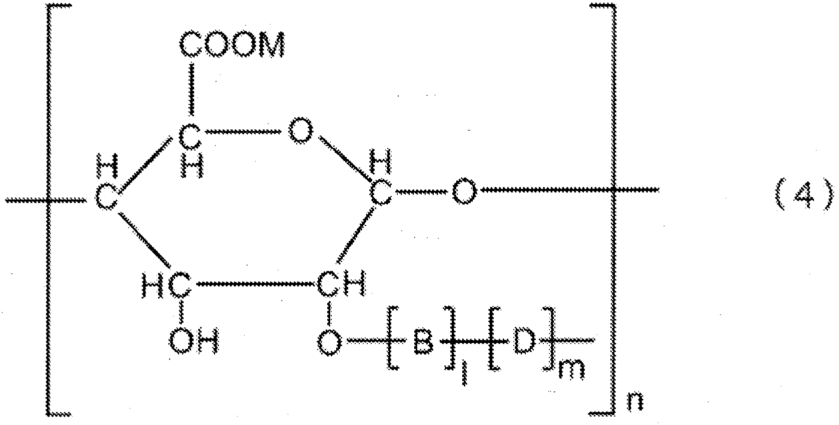

(In the formula, B, D, M, 1, m and n have the same meanings as described above.)

The chelating polymer (II) has a structure in which a polymer having a chelating functional group is grafted to an alginic acid or an alginate salt with high oxidation resistance, and the chelating functional group introduced into a graft chain with high molecular mobility can quickly adsorb heavy-metal ions and rapidly trap and remove a trace amount of heavy-metal ions.

The chelating polymer (II) is produced by a method of graft-polymerizing a vinyl monomer having an epoxy group to an acidic polysaccharide and/or a basic polysaccharide and performing a reaction with a compound having an amino group and a chelating functional group to introduce the chelating functional group into the acidic polysaccharide and/or the basic polysaccharide through a covalent bond. The vinyl monomer having the epoxy group may be glycidyl methacrylate, glycidyl acrylate, 1-vinyl-3,4-epoxycyclohexane, allyl glycidyl ether, vinyloxyethyl glycidyl ether or a mixture thereof. The vinyl monomer having the epoxy group may be mixed with a vinyl monomer having no epoxy group. The vinyl monomer having no epoxy group may be a (meth)acrylate, such as methyl (meth)acrylate or ethyl (meth)acrylate; a vinylcarboxylic acid, such as (meth)acrylic acid, itaconic acid, maleic acid, fumaric acid or vinyl benzoate, or a salt thereof; a vinylsulfonic acid, such as vinylsulfonic acid or styrenesulfonic acid, or a salt thereof; an aromatic vinyl compound, such as styrene, vinyltoluene, vinylpyridine or vinylnaphthalene; a diene, such as butadiene, isoprene or chloroprene; a vinyl halide, such as vinyl chloride, vinylidene chloride, vinyl fluoride, vinylidene fluoride or tetrafluoroethylene; or an α-olefin, such as ethylene, propylene, butene or hexene.

An initiator used for the graft polymerization is preferably a redox catalyst system. More specifically, hydrogen peroxide, benzoyl peroxide, cumene hydroperoxide or the like is used as an oxidizing agent, and a divalent iron salt, thiourea dioxide, a sulfite, hydrazine or the like is used as a reducing agent. A preferred initiator may be cerium ammonium nitrate or ferrous ammonium sulfate/hydrogen peroxide/thiourea dioxide.

The graft polymerization is performed by adding the vinyl monomer to the acidic polysaccharide or the basic polysaccharide dissolved or dispersed in water or an organic solvent and further adding the initiator. The concentration of the acidic polysaccharide or the basic polysaccharide is preferably, but not limited to, 0.1% to 5% by weight when the polysaccharide is dissolved and 3% to 20% by weight when the polysaccharide is dispersed. A concentration in such a range is preferred because the stirring state can be continued even when the polymerization proceeds, and uniform graft polymerization can be performed. The initial concentration of the vinyl monomer preferably ranges from 3% to 30% by weight. A concentration in such a range is preferred because polymerization heat generation can be easily controlled, and the polymerization can be easily controlled. The polymerization temperature and the polymerization time are not particularly limited, and the polymerization may be performed in the range of 0°C to 50°C for 1 to 24 hours.

After completion of the polymerization, the unreacted monomer is removed for purification to isolate the graft polymer. The isolation method may be a method of removing the residual monomer and the solvent by heating to isolate the graft polymer or a method of adding dropwise the polymerization product to a solvent that dissolves the monomer but does not dissolve the graft polymer to precipitate and recover the graft polymer.

The graft polymer is dissolved or dispersed in a solvent, and the compound having the amino group and the chelating functional group is added to react with the epoxy group in the graft polymer. The reaction conditions may be the same as the reaction conditions of the chloromethyl group or the epoxy group introduced into the polysaccharide and the amino group in the compound having the amino group and the chelating functional group in the method for producing the chelating polymer (I).

The chelating polymer (II) may be stored in the form of a solution in a solvent or a dispersion liquid or may be isolated and stored as a solid. The solid isolation method may be an isolation method of heating the solution or dispersion liquid after the reaction to remove the solvent or an isolation method of adding dropwise the solution or dispersion liquid to a poor solvent for the chelating polymer (II), such as an alcohol or acetone, to precipitate the polymer.

The chelating polymer (I) or (II) can be added to a solution containing heavy-metal ions to trap the heavy-metal ions with the chelating polymer.

The third aspect of the present invention is described in detail below.

The third aspect of the present invention is a lithium-ion battery electrode mixture composition, a slurry for forming a lithium-ion battery electrode mixture layer containing the composition, a lithium-ion battery electrode produced from the composition and a lithium-ion battery including the electrode.

In the lithium-ion battery electrode mixture composition according to the third aspect of the present invention, an electrode mixture containing an active material, a binder and an optional conductive additive contains water-insoluble or organic-solvent-insoluble polymer fine particles having a chelating group. The chelating group in the water-insoluble or organic-solvent-insoluble polymer fine particles having the chelating group refers to a ligand with a plurality of coordination sites and is a functional group that can form a chelate with a polyvalent metal ion. A chelating group having an aminocarboxylate group or an aminophosphonate group is suitably used as the chelating group. Some examples of the chelating group having the aminocarboxylate group include an iminodiacetate group, a nitrilotriacetate group, a hydroxyethyl glycine group, and a hydroxyethyl iminodiacetate group. Some examples of the chelating group having the aminophosphonic acid include an aminomethylphosphonate group and a nitrilotris(methylphosphonic acid) group. The amount of the chelating group in the water-insoluble or organic-solvent-insoluble polymer fine particles having the chelating group ranges from 0.2 to 6 mmol/g, preferably 0.5 to 5 mmol/g. A chelating group content in this range is preferred due to rapid trapping of heavy-metal ions and a sufficient amount of heavy-metal ions trapped.

In the water-insoluble polymer fine particles, the chelating group can be introduced into the polymer through an ionic bond and/or a covalent bond. On the other hand, in the organic-solvent-insoluble polymer fine particles, the chelating group may be introduced into the polymer through an ionic bond and/or a covalent bond, or the organic-solvent-insoluble polymer may be only physically mixed with a low-molecular-weight compound having a chelating group.

The water-insoluble polymer in the water-insoluble polymer fine particles having the chelating group refers to a synthetic polymer, such as a vinyl polymer, a polyamide, a polyurethane or a polyester, or a natural polymer, such as a polysaccharide, a protein or a nucleic acid, that is cross-linked through a covalent bond or an ionic bond to be insolubilized in water or that has high crystallinity and has a polymer chain constrained at a crystal site to be insoluble in water. Among these water-insoluble polymers, polymers with high stability in both oxidation resistance and reduction resistance are preferably used. More specifically, fluoropolymers with a fluorine atom in a main chain and/or a side chain or polysaccharides are preferably used, and polysaccharides are particularly preferably used. The polysaccharides refer to substances with a structure in which a large number of monosaccharides are linked through a glycosidic bond. A polysaccharide preferably used as a polymer in the water-insoluble polymer fine particles having the chelating group may be amylose, amylopectin, dextrin, glycogen, cellulose, carboxymethyl cellulose, hydroxyalkyl cellulose, cellulose acetate, pectin, pullulan, curdlan, chitin, chitosan, agarose, xanthan gum, guar gum, gellan gum, locust bean gum, gum arabic, tamarind seed gum, psyllium seed gum, carrageenan, alginic acid, an alginic acid derivative, heparin, hyaluronic acid, chondroitin sulfate, xyloglucan or glucomannan.

In the water-insoluble polymer, the cross-linking density is preferably, but not limited to, such that the polymer is not dissolved but swells in a solvent.

The water-insoluble or organic-solvent-insoluble polymer fine particles having the chelating group preferably have a particle size in the range of 0.1 to 10 µm, more preferably 0.5 to 5 pm, in terms of median size. The water-insoluble or organic-solvent-insoluble polymer fine particles having the chelating group having the particle size in such a range are well dispersed in a mixture layer and more efficiently trap manganese ions and nickel ions due to their large specific surface area.

The amount of the water-insoluble or organic-solvent-insoluble polymer fine particles having the chelating group in an electrode mixture preferably ranges from 1% to 10% by mass, more preferably 2% to 5% by mass. The amount of the water-insoluble or organic-solvent-insoluble polymer fine particles having the chelating group in such a range is preferred because manganese ions and nickel ions can be quantitatively trapped, the active material content of an electrode mixture is not largely reduced, and the battery capacity can be maintained.

When the water-insoluble polymer fine particles having the chelating group are used, a water-soluble polymer is used as a binder used in a -lithium-ion battery electrode mixture composition.

The water-soluble polymer may be a polysaccharide, a (meth)acrylic acid homopolymer or copolymer, a maleic acid homopolymer or copolymer or a salt thereof, preferably a neutral polysaccharide or an acidic polysaccharide. Specific examples thereof include amylose, amylopectin, carboxymethyl cellulose, guar gum, gellan gum, xanthan gum, gum arabic, alginic acid, alginic acid derivatives, agarose, carrageenan and chondroitin sulfate. More preferably, alginic acid or an alginic acid derivative is used due to its high oxidation resistance and reduction resistance. The alginic acid derivative refers to a compound produced by introducing a substituent into an alginic acid, for example, an alkali metal alginate, an alkaline-earth metal alginate, an ammonium alginate, an alginate ester or a sulfated alginic acid.

A specific example of alginic acid or the alginic acid derivative is preferably an alginic acid, an alginate salt or an alginate ester represented by the following general formula (5).

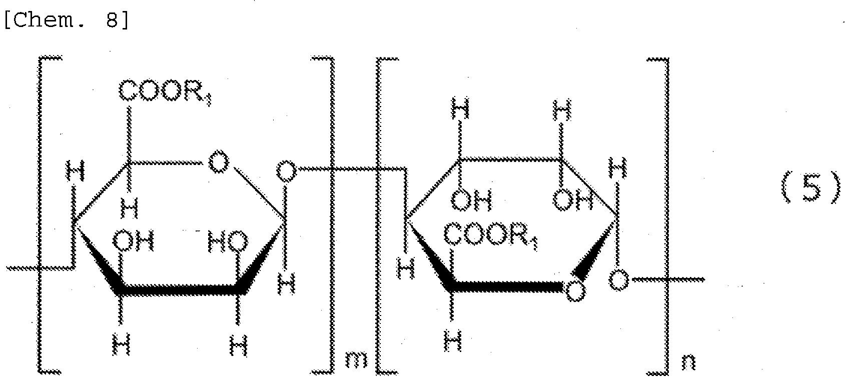

(In the formula, m and n each independently denote an integer of 1 or more, R₁s may be the same or different and each denote one selected from the group consisting of hydrogen, an alkali metal, an alkaline-earth metal, a quaternary ammonium and a group represented by -R₃-OH, and R₃ denotes a divalent hydrocarbon group with 2 to 6 carbon atoms.)

The divalent hydrocarbon group with 2 to 6 carbon atoms denoted by R₃ may be an ethylene group, an ethylidene group, a vinylene group, a trimethylene group, a methylethylene group, a 1-methylethylidene group, a propenylene group, a tetramethylene group, a methyltrimethylene group, a dimethylethylene group, a 1-ethylethylidene group, an ethylethylene group, a pentamethylene group, a methyltetramethylene group, a dimethyltrimethylene group, a methylethylethylene group, a hexamethylene group, a cyclohexylene group or a cyclohexylidene group.

An alginic acid is a compound in which each R₁ in the formula (5) is hydrogen, an alginate salt is a compound in which at least part of R₁ in the formula (5) is an alkali metal (for example, lithium, sodium or potassium), an alkaline-earth metal (for example, magnesium or calcium) or quaternary ammonium (for example, ammonium or tetramethylammonium), and an alginate ester is a compound in which at least part of R₁ in the formula (5) is a group represented by -R₃-OH (R₃ denotes a divalent hydrocarbon group with 2 to 6 carbon atoms). Such an alginate ester can be produced by a reaction between an alginic acid and an epoxy compound.

The ratio of mannuronic acid to guluronic acid, which are components of alginic acid, is arbitrary, and alginic acid with a high mannuronic acid ratio, which forms a flexible gel, or alginic acid with a high guluronic acid ratio, which forms a rigid gel, can be used.

The polysaccharide used as the binder preferably has a molecular weight in the range of 10,000 to 2,000,000 in terms of the weight-average molecular weight. A weight-average molecular weight in this range is preferred due to good mechanical characteristics and slurry viscosity suitable for electrode production.

A sulfated polysaccharide produced by introducing a sulfate group and/or an alkali metal sulfate group into the polysaccharide is also suitably used. The sulfate group is introduced into a hydroxy group in the polysaccharide structure, and hydrogen of the hydroxy group is substituted with -SO₃H.

The amount of the sulfate group and/or the alkali metal sulfate group introduced into the polysaccharide preferably ranges from 0.5 to 6.0 mmol/g. An amount of the sulfate group and/or the alkali metal sulfate group introduced in this range is preferred due to improved oxidation resistance and a high affinity for an electrolyte solution while the binding force to an active material is maintained.

One example of the polysaccharide having the sulfate group and/or the alkali metal sulfate group is an alginic acid derivative with the structure represented by the following general formula (6).

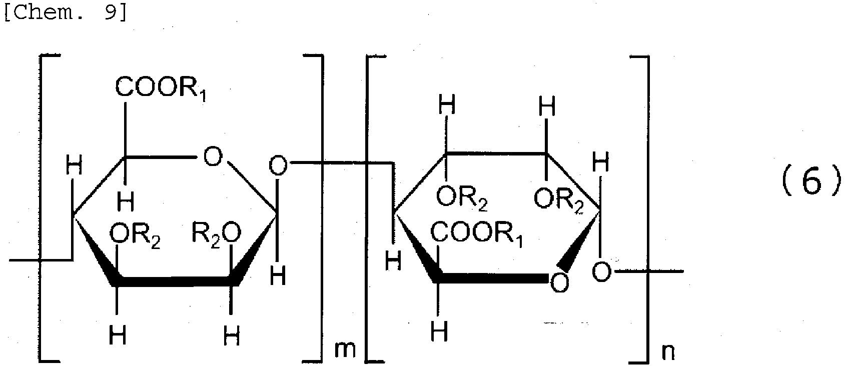

(In the formula, m and n each independently denote an integer of 1 or more, R₁s may be the same or different and each denote one selected from the group consisting of hydrogen, an alkali metal, an alkaline-earth metal, quaternary ammonium and a group represented by -R₃-O-R₂, R₃ denotes a divalent hydrocarbon group with 2 to 6 carbon atoms, R₂s may be the same or different and each denote hydrogen or -SO₃M (M denotes hydrogen or an alkali metal), and at least one R₂ is -SO₃M.)

In the general formula (6), m and n may each independently denote an integer of 1 or more but are preferably selected so that the polysaccharide having the sulfate group and/or the alkali metal sulfate group represented by the general formula (6) has a weight-average molecular weight in the range of 10,000 to 2,000,000, and m and n each independently preferably range from 30 to 6000.

The polysaccharide having the sulfate group and/or the alkali metal sulfate group may be produced by any method, for example, by a reaction between the polysaccharide and a sulfating reagent in an aprotic polar solvent. The reaction can be performed in a slurry system or in a homogeneous system.

The solvent used in the reaction is preferably an aprotic polar solvent and, more specifically, may be dimethyl sulfoxide, formamide, dimethylformamide, dimethylacetamide, N-methyl-2-pyrrolidone (NMP), 1,3-dimethyl-2-imidazolidinone, acetonitrile, hexamethylphosphoric triamide, tetramethylurea, N,N'-dimethylpropyleneurea, tetrahydrofuran, dioxane, pyridine, bipyridine or phenanthroline.

The polysaccharide to be used is preferably a polysaccharide with high solubility in an aprotic polar solvent and may be amylose, amylopectin, dextrin, glycogen, cellulose, carboxymethyl cellulose, hydroxyalkyl cellulose, cellulose acetate, pectin, pullulan, curdlan, chitin, chitosan, agarose, xanthan gum, guar gum, gellan gum, locust bean gum, gum arabic, tamarind seed gum, psyllium seed gum, carrageenan, alginic acid, an alginate salt, an alginate ester, heparin, hyaluronic acid, chondroitin sulfate, xyloglucan or glucomannan. Preferred examples include amylose, amylopectin, carboxymethyl cellulose, guar gum, gellan gum, xanthan gum, gum arabic, alginic acid, an alginate salt, an alginate ester, agarose, carrageenan and chondroitin sulfate. More preferably, alginic acid and an alginate ester may be mentioned.

The sulfating reagent to be used is a reagent that can react with a hydroxy group to introduce a sulfate group, and specific examples thereof include concentrated sulfuric acid, chlorosulfonic acid, a sulfur trioxide pyridine complex, a sulfur trioxide trimethylamine complex, a sulfur trioxide dimethylformamide complex, a sulfur trioxide dimethyl sulfoxide complex and a sulfur trioxide dioxane complex. Among these sulfating reagents, a reagent that causes a less reduction in the molecular weight of the polysaccharide is preferably used. A preferred sulfating reagent may be a sulfur trioxide complex, and a particularly preferred sulfating reagent may be a sulfur trioxide pyridine complex or a sulfur trioxide dimethylformamide complex. The amount of the sulfating reagent to be used is preferably, but not limited to, in the range of 1 to 5 times the number of moles of monosaccharide units in the polysaccharide. A sulfating reagent used in this range is preferred due to a large amount of the sulfate group introduced, a less reduction in the molecular weight of the polysaccharide and the polysaccharide with a high molecular weight.

Other reaction conditions can be arbitrarily determined, and the reaction temperature preferably ranges from 0°C to 100°C, the reaction time preferably ranges from 30 minutes to 12 hours, and the concentration of the polysaccharide during the reaction preferably ranges from 0.1% to 50% by mass.

The polysaccharide having the sulfate group and/or the alkali metal sulfate group may be isolated from the reaction liquid after completion of the reaction by any method, for example, by a method of removing the solvent by heating to isolate the polysaccharide having the sulfate group and/or the alkali metal sulfate group or by a method of adding dropwise the reaction solution to a poor solvent to precipitate and collect by filtration the polysaccharide having the sulfate group and/or the alkali metal sulfate group.

Although the polysaccharide having the sulfate group and/or the alkali metal sulfate group in which the introduced sulfate group is in a regenerated form (-SO₃H) is initially produced, at least part of the regenerated form may be ion-exchanged to an alkali metal salt form (-SO₃M', wherein M' denotes an alkali metal (for example, lithium, sodium or potassium)). For the ion exchange from the regenerated form to the salt form, in the same manner as in a typical ion exchanger, a binder in the regenerated form can be brought into contact with a solution containing an alkali metal ion to be ion-exchanged to a binder in the salt form.

The organic-solvent-insoluble polymer in the organic-solvent-insoluble polymer fine particles having the chelating group refers to a synthetic polymer, such as a vinyl polymer, a polyamide, a polyurethane or a polyester, or a natural polymer, such as a polysaccharide, a protein or a nucleic acid, that is insoluble in an organic solvent due to its high polarity, that is cross-linked through a covalent bond or an ionic bond to be insolubilized in an organic-solvent or that has high crystallinity and has a polymer chain constrained at a crystal site to be insoluble in an organic solvent. Among the organic-solvent-insoluble polymers, polymers with high stability in both oxidation resistance and reduction resistance are preferably used. More specifically, polycarboxylic acids, such as poly(acrylic acid) and acidic polysaccharides, and polyhydroxy compounds, such as poly(vinyl alcohol) and neutral polysaccharides, may be mentioned, and acidic polysaccharides are particularly preferably used. The polysaccharides refer to substances with a structure in which a large number of monosaccharides are linked through a glycosidic bond. A polysaccharide preferably used as a polymer in the organic-solvent-insoluble polymer fine particles having the chelating group may be amylose, amylopectin, dextrin, glycogen, cellulose, carboxymethyl cellulose, hydroxyalkyl cellulose, cellulose acetate, pectin, pullulan, curdlan, chitin, chitosan, agarose, xanthan gum, guar gum, gellan gum, locust bean gum, gum arabic, tamarind seed gum, psyllium seed gum, carrageenan, alginic acid, an alginic acid derivative, heparin, hyaluronic acid, chondroitin sulfate, xyloglucan or glucomannan.

An organic solvent for the organic-solvent-insoluble polymer is preferably an amide solvent. Specific examples of the amide solvent include formamide, dimethylformamide, diethylformamide, dimethylacetamide, N-methyl-2-pyrrolidone, 1,3-dimethyl-2-imidazolidinone, hexamethylphosphoric triamide, tetramethylurea and N,N'-dimethylpropyleneurea. Among these, preferred organic solvents include dimethylformamide, dimethylacetamide, N-methyl-2-pyrrolidone and 1,3-dimethyl-2-imidazolidinone due to high dissolving ability for a binder and high stability against an active material, and N-methyl-2-pyrrolidone is particularly preferred.

When the organic-solvent-insoluble polymer fine particles having the chelating group are used, a fluoropolymer is used as a binder in a lithium-ion battery electrode mixture composition. Specific examples of the fluoropolymer include poly(vinylidene difluoride), vinylidene fluoride-hexafluoropropylene copolymers, perfluoromethyl vinyl ether-tetrafluoroethylene copolymers, polytetrafluoroethylene and fluororubber. Among these fluoropolymers, poly(vinylidene difluoride) and vinylidene fluoride-hexafluoropropylene copolymers are preferably used.

As the binder, poly(vinyl alcohol), a styrene-butadiene copolymer, a polyimide, poly(acrylic acid), poly(methacrylic acid) or a salt thereof may be mixed without departing from the object of the third aspect of the present invention.

The active material in the lithium-ion battery electrode mixture composition according to the third aspect of the present invention is a material involved in an electrochemical reduction-oxidation reaction in the battery and is different in the positive electrode and the negative electrode.

The positive-electrode active material may be a lithium composite oxide, such as Li_{X}CoO₂, Li_{X}NiO₂, Li_{X}MnO₂, Li_{X}Mn₂O₄, LiNi_{X}Co_{(1-X)}O₂, LiNi_{X}Mn_{(2-X)}O₄, LiMnₐNi_{b}Co_{c}O₂ (a + b + c = 1) or LiFePO₄. Among these, composite oxides of lithium and at least one selected from transition metals, such as Co, Ni and Mn, are preferred, and specific examples thereof include LiCoO₂, LiNiO₂, LiMnO₂, LiMn₂O₄, LiNi_{X}Co_{(1-X)}O₂, LiNi_{X}Mn_{(2-X)}O₄ and LiMnₐNi_{b}Co_{c}O₂ (a + b + c = 1) . These lithium composite oxides may be doped with a small amount of an element, such as fluorine, boron, Al, Cr, Zr, Mo or Fe, or the surfaces of particles of the lithium composite oxides may be treated with carbon, MgO, Al₂O₃, SiO₂ or the like.

The negative-electrode active material may be any material that can intercalate and deintercalate lithium ions, for example, natural graphite, artificial graphite, graphite, mesocarbon microbeads (MCMB), tin and/or a tin alloy, a tin oxide, silicon and/or a silicon alloy or a silicon oxide. When the negative-electrode active material is an alloy, the negative-electrode active material may contain a material that is alloyed with lithium. The material that is alloyed with lithium is, for example, germanium, tin, lead, zinc, magnesium, sodium, aluminum, gallium, indium or an alloy thereof.

When these active materials are in the form of particles, the average particle size thereof is preferably, but not limited to, 5 µm or more and 20 µm or less.

The conductive additive optionally contained in the lithium-ion battery electrode mixture composition according to the third aspect of the present invention may be any electrically conductive material that does not adversely affect battery characteristics. Specific examples thereof include electrically conductive carbons, such as Ketjen black and acetylene black, carbon materials, such as natural graphite, artificial graphite, carbon whisker, carbon nanotube and carbon fiber powders, metal powders and metal fibers of Cu, Fe, Ag, Ni, Pd, Au, Pt, In, W and the like and electrically conductive metal oxides, such as indium oxide and tin oxide. The amount of the conductive additive preferably ranges from 1% to 30% by mass based on the active material.

When the binder is a water-soluble polymer, the slurry for forming a lithium-ion battery electrode mixture layer according to the third aspect of the present invention contains the water-insoluble polymer fine particles having the chelating group, a binder, an active material and, if necessary, a conductive additive and water. The slurry may contain a viscosity modifier, such as carboxymethyl cellulose, or a pH regulator, such as an acid or an alkali, if necessary.

On the other hand, when the binder is a fluoropolymer, the slurry for forming a lithium-ion battery electrode mixture layer contains the organic-solvent-insoluble polymer fine particles having the chelating group, a binder, an active material and, if necessary, a conductive additive and an organic solvent. The slurry may contain a viscosity modifier, such as carboxymethyl cellulose, or a pH regulator, such as an acid or an alkali, if necessary.

The solid concentration of the slurry is preferably, but not limited to, 20% to 80% by mass in consideration of the viscosity of the slurry, the dispersibility of a solid component, the load on a drying process and the like. The component ratio in the slurry is preferably active material:conductive additive:binder:water-insoluble polymer fine particles having chelating group or organic-solvent-insoluble polymer fine particles having chelating group = 70 to 98:0 to 10:1 to 10:1 to 10 in mass ratio.

The slurry may be prepared by any method, for example, by a method of mixing, dispersing or dissolving a binder, an active material, a conductive additive and water-insoluble polymer fine particles having a chelating group or organic-solvent-insoluble polymer fine particles having a chelating group together in water or an organic solvent, by a method of first dissolving or dispersing a binder in water or an organic solvent, then adding an active material, a conductive additive and water-insoluble polymer fine particles having a chelating group or organic-solvent-insoluble polymer fine particles having a chelating group to the binder solution, and mixing them, or by a method of first mixing an active material, a conductive additive and water-insoluble polymer fine particles having a chelating group or organic-solvent-insoluble polymer fine particles having a chelating group and then mixing it with a binder solution. Furthermore, the slurry may be prepared with any mixer, such as a mortar, a rolling mill, a ball mill, a screw mill, a vibrating mill, a homogenizer or a planetary mixer.

The lithium-ion battery electrode according to the third aspect of the present invention contains the electrode mixture composition. Such a lithium-ion battery electrode is composed of an electrode mixture layer, which is formed by applying the slurry to a current collector and drying the slurry, and the current collector. The electrode mixture layer composed of the active material, the binder, the conductive additive, and the water-insoluble polymer fine particles having a chelating group or the organic-solvent-insoluble polymer fine particles having a chelating group preferably has a thickness in the range of 10 to 200 um. To form the electrode mixture layer with such a thickness on the current collector, the electrode mixture layer may have a mass per unit area in the range of 4 to 25 mg/cm². The lithium-ion battery electrode may be produced by any method and may be produced by applying the slurry to the current collector and drying the slurry. The slurry may be applied by any method, such as slit coating, die coating, roll coating, dip coating, blade coating, knife coating or wire bar coating. The drying method and conditions are not particularly limited, and a typical hot-air circulating dryer, vacuum dryer, infrared dryer or microwave heating dryer can be used. The heating temperature is also not particularly limited, and the heating and drying can be performed in the range of 50°C to 150°C. Furthermore, the electrode can be pressed under pressure during drying or after drying to make the porous structure uniform.

The current collector only needs to be an electric conductor with an electrically conductive surface in contact with the electrode mixture layer, for example, an electric conductor formed of a metal, such as copper, gold, aluminum, titanium, nickel, stainless steel or an alloy thereof, an electrically conductive metal oxide, such as indium oxide or tin oxide, or an electrically conductive material, such as electrically conductive carbon. The current collector may have any shape, such as a foil shape, a film shape, a sheet shape, a net shape, an expanded metal shape, a perforated metal shape or a foam shape. The thickness of the current collector is preferably, but not limited to, approximately 1 to 100 µm.

The lithium-ion battery according to the third aspect of the present invention includes the lithium-ion battery electrode. The lithium-ion battery electrode can be used to provide a high-performance lithium-ion battery with good charge-discharge characteristics and an extended cycle life. A lithium-ion battery is typically composed of a positive electrode, a negative electrode, a separator, a non-aqueous electrolyte solution and the like. The positive electrode is produced by binding the positive-electrode active material onto a positive-electrode current collector using the binder together with the conductive additive and the water-insoluble polymer fine particles having the chelating group or the organic-solvent-insoluble polymer fine particles having the chelating group and has a structure in which a positive-electrode mixture layer composed of the positive-electrode active material, the binder, the conductive additive and the water-insoluble polymer fine particles having the chelating group or the organic-solvent-insoluble polymer fine particles having the chelating group is formed on the current collector. The negative electrode also has a structure similar to that of the positive electrode and is produced by binding the negative-electrode active material, the water-insoluble polymer fine particles having the chelating group or the organic-solvent-insoluble polymer fine particles having the chelating group and, if necessary, the conductive additive onto a negative-electrode current collector using the binder. The water-insoluble polymer fine particles having the chelating group or the organic-solvent-insoluble polymer fine particles having the chelating group only need to be contained in at least one of the positive electrode and the negative electrode.

The separator is typically a porous film made of polyolefin or the like and is interposed between the positive electrode and the negative electrode to perform a shutdown function in case of a thermal runaway of the battery. The separator may be, but is not limited to, a known separator. Specific examples of the separator include polyethylene microporous membranes, polypropylene microporous membranes, multilayer membranes of a polyethylene microporous membrane and a polypropylene microporous membrane, non-woven fabrics made of polyester fiber, aramid fiber, glass fiber or the like and the microporous membranes coated with a ceramic, aramid or PVDF.

The non-aqueous electrolyte solution is prepared by dissolving an electrolyte salt, such as LiPF₄, in an organic solvent, such as a cyclic carbonate. The battery is filled with the non-aqueous electrolyte solution, and lithium ions move from the positive electrode to the negative electrode during charging and move from the negative electrode to the positive electrode during discharging. The non-aqueous electrolyte solution may be, but is not limited to, a known material, and the electrolyte salt may be CF₃SO₃Li, (CF₃SO₂)₂NLi, (CF₃SO₂)₂CLi, LiBF₄, LiB(C₆H₈)₄, LiPF₄, LiClO₄, LiAsF₆, LiCl or LiBr. The organic solvent for dissolving the electrolyte salt may be ethylene carbonate, vinylene carbonate, propylene carbonate, butylene carbonate, dimethyl carbonate, diethyl carbonate, ethyl methyl carbonate, 1,2-dimethoxyethane, 1,2-diethoxyethane, γ-butyrolactone, tetrahydrofuran, 1,4-dioxane, anisole, diethyl ether, sulfolane, methylsulfolane, acetonitrile, propionitrile, butyronitrile, valeronitrile, benzonitrile, dimethylformamide, dimethyl sulfoxide, trimethyl phosphate or triethyl phosphate. The concentration of the electrolyte salt in the non-aqueous electrolyte solution can range from 0.1 to 5 mol/L, preferably 0.5 to 3 mol/L.

The fourth aspect of the present invention is described in detail below.

The fourth aspect of the present invention is a lithium-ion battery electrode binder, a slurry for forming a lithium-ion battery electrode mixture layer containing the binder, a lithium-ion battery electrode containing the binder and a lithium-ion battery including the electrode.

The lithium-ion battery electrode binder according to the fourth aspect of the present invention contains a polymer having a chelating group.

The chelating group refers to a ligand with a plurality of coordination sites and is a functional group that can form a chelate with a polyvalent metal ion. The chelating group is preferably an aminocarboxylic acid chelating group, an aminophosphonic acid chelating group or a polyamine chelating group. Some examples of the aminocarboxylic acid chelating functional group include an iminodiacetate group, a nitrilotriacetate group, a N,N-bis(2-hydroxyethyl)glycine group, a hydroxyethyl iminodiacetate group, an ethylenediaminetriacetate group, an ethylenediaminetetraacetate group, a 1,2-bis(2-aminophenoxy)ethanetetraacetate group, a 1,2-diaminocyclohexanetetraacetate group, a diethylenetriamine pentaacetate group, a (2-hydroxyethyl)ethylenediaminetriacetate group, a bis(2-aminoethyl)ethylene glycol tetraacetate group and a triethylenetriaminehexaacetate group. Some examples of the aminophosphonic acid chelating group include an aminomethylphosphonate group and nitrilotris(methylphosphonic acid). Some examples of the polyamine chelating group include a polyethyleneimine group, a polyamidoamine dendrimer group and a tetrakis(2-pyridylmethyl)ethylenediamine group. When the chelating group contains a carboxylic acid or a phosphonic acid, an acidic functional group thereof is preferably in the form of a monovalent salt, such as an alkali metal salt or an ammonium salt, rather than in the form of a proton to facilitate ion-exchange with heavy-metal ions.

The amount of the chelating group in the polymer having the chelating group ranges from 0.2 to 6 mmol/g, preferably 0.5 to 5 mmol/g. A chelating group content in this range is preferred due to rapid trapping of heavy-metal ions and a sufficient amount of heavy-metal ions trapped.

The chelating group may be introduced into any polymer, such as a vinyl polymer, a polyamide, a polyester, a polyurethane, a polysaccharide, a cellulose or the like. The polymer is preferably hydrophilic because the polymer is preferably soluble in water when the chelating group is introduced.

The polymer having the chelating group has a molecular weight in the range of 10,000 to 1,000,000, preferably 50,000 to 1,000,000, in terms of the weight-average molecular weight. A weight-average molecular weight in this range is preferred due to sufficient mechanical strength and a viscosity adjustable without problems for electrode coating.

The polymer having the chelating group in the fourth aspect of the present invention refers to a polymer to which the chelating group is bonded through a covalent bond and/or an ionic bond. In the fourth aspect of the present invention, the chelating group is preferably bonded to the polymer through ionic bond.

When the chelating group is bonded to the polymer through a covalent bond, an example of the structure thereof is represented by the following general formula (1).

PS-X-A-CL (1)

In the formula, PS denotes an acidic polysaccharide or a basic polysaccharide. X denotes a group represented by - O- or -N(R)-, R denotes a hydrogen atom or a hydrocarbon group with 1 to 6 carbon atoms. A denotes an organic group with 3 to 30 carbon atoms, and CL denotes an organic group with 1 to 30 carbon atoms including the chelating group.

The general formula (1) is the same as the general formula (1) in the second aspect of the present invention.

PS in the general formula (1) denotes an acidic polysaccharide or a basic polysaccharide. The acidic polysaccharide refers to a polysaccharide having an acidic functional group, such as a carboxy group or a sulfate group, for example, carboxymethyl cellulose, gellan gum, alginic acid, sulfated alginic acid, carrageenan, xanthan gum, chondroitin sulfate, heparin, hyaluronic acid, pectic acid, gum arabic, agar, gum tragacanth or a salt thereof. Furthermore, it may be mixed with a neutral polysaccharide or another water-soluble polymer as long as the amount of the chelating group introduced is not significantly reduced. Among these acidic polysaccharides, alginic acid, sulfated alginic acid or a salt thereof is preferably used in terms of high oxidation resistance and mechanical strength. The ratio of mannuronic acid to guluronic acid, which are components of alginic acid, is arbitrary, and alginic acid with a high mannuronic acid ratio, which forms a flexible gel, or alginic acid with a high guluronic acid ratio, which forms a rigid gel, can be used. On the other hand, the basic polysaccharide refers to a polysaccharide having a basic functional group, such as an amino group, for example, chitosan.

A sulfated polysaccharide in which a sulfate group is introduced into a polysaccharide is also suitably used in the fourth aspect of the present invention. The sulfate group is a strongly acidic cation exchange group that can exchange ions not only with basic salts but also with neutral salts, such as NaCl and CaCl₂. The sulfate group is introduced into a hydroxy group in the polysaccharide structure, and hydrogen of the hydroxy group is substituted with -SO₃H. The amount of the sulfate group introduced into the polysaccharide preferably ranges from 0.5 to 5.0 mmol/g. An amount of the sulfate group introduced in this range is preferred due to an improvement in oxidation resistance while the amount of the chelating group introduced is maintained.

In the general formula (1), X denotes a group represented by -O- or -N(R)-, and R denotes a hydrogen atom or a hydrocarbon group with 1 to 6 carbon atoms. The hydrocarbon group with 1 to 6 carbon atoms may be a methyl group, an ethyl group, a n-propyl group, an isopropyl group, a n-butyl group, a sec-butyl group, a tert-butyl group, an isobutyl group, a n-pentyl group, a sec-pentyl group, a tert-pentyl group, an isopentyl group, a neopentyl group, a 3-pentyl group, a cyclopentyl group, a n-hexyl group, an isohexyl group, a sec-hexyl group, a tert-hexyl group, a neohexyl group, a 2-methylpentyl group, a 3-methylpentyl group, a 1,2-dimethylbutyl group, a 2,2-dimethylbutyl group, a 1-ethylbutyl group, a 2-ethylbutyl group or a cyclohexyl group.

In general formula (1), "A" denotes an organic group with 3 to 30 carbon atoms, preferably a divalent hydrocarbon group, such as a propylene group, a butylene group or a phenylene group, or a group produced by introducing a hydroxy group or the like into the hydrocarbon group. Some examples of the spacer include 2-hydroxypropylene, 2,2-bis[4-(hydroxypropyloxy)phenyl]propane, 1,2-bis(2-hydroxypropyloxy)ethyl and 1,3-bis(2-hydroxypropyloxy)benzene. The organic group used in the fourth aspect of the present invention refers to a group containing a heteroatom, such as oxygen, nitrogen, phosphorus or sulfur, in addition to carbon and hydrogen.

In the general formula (1), CL only needs to have the chelating group and may have 1 to 30 carbon atoms and contain a heteroatom, such as oxygen, nitrogen, phosphorus or sulfur, in addition to carbon and hydrogen. CL may be only the chelating group, but a hydrocarbon group, such as a methyl group, an ethyl group or a phenyl group, an ester group, such as acetate, an ether group, such as ethyl ether, an amide group, such as benzamide, a sulfonate group, such as toluenesulfonate, or the like may be bonded to the chelating group.

When the chelating group is bonded to the polymer through a covalent bond, a polymer with a structure represented by the following general formula (3) in which the chelating group is introduced into a graft chain is also suitably used in the fourth aspect of the present invention.

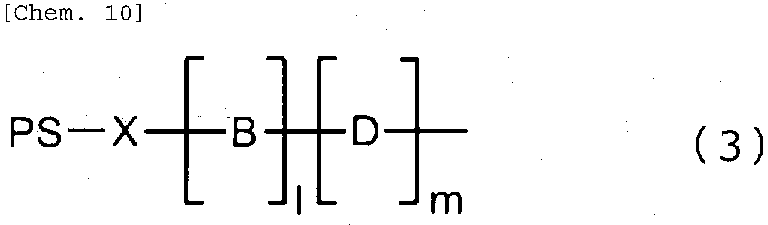

(In the formula, PS and X have the same meanings as PS and X in the general formula (1). B denotes a vinyl monomer residue with 4 to 30 carbon atoms having a chelating group, D denotes a vinyl monomer residue with 4 to 30 carbon atoms having no chelating group, and 1 and m each independently denote an integer in the range of 10 to 500.)

The general formula (3) is the same as the general formula (3) in the second aspect of the present invention.

In the general formula (3), the chelating group is introduced into a graft polymer chain and is bonded to an acidic polysaccharide or a basic polysaccharide through a covalent bond. The chelating group may be the same as the chelating group of the polymer having the chelating group represented by the general formula (1). The vinyl monomer residue having the chelating functional group denoted by B in the general formula (3) is, for example, a reaction product of an epoxy group in a vinyl monomer residue having the epoxy group, such as glycidyl methacrylate, and an amino group in a compound having the amino group and the chelating functional group. The vinyl monomer residue with 4 to 30 carbon atoms having no chelating group denoted by D in the general formula (3) is, for example, a vinyl monomer residue having an epoxy group, such as glycidyl methacrylate, in which the epoxy group remains as it is, a vinyl monomer residue ring-opened by hydrolysis or a vinyl monomer residue having no epoxy group.

A chelating group bonded to a polymer through a covalent bond can be identified, for example, by measuring the weight increased by the introduction of the chelating group.

On the other hand, a chelating group bonded to a polymer through an ionic bond is exemplified by a structure in which a polymer having an anionic functional group is bonded through an ionic bond to a compound having a chelating group and having a cationic functional group. The anionic functional group may be a carboxy group, a sulfonate group, a phosphate group or a phenolic hydroxy group. Specific examples of the anionic functional group polymer include vinyl polymers, such as poly(acrylic acid), poly(methacrylic acid), poly(itaconic acid), poly(maleic acid), ethylene-maleic acid copolymers, isobutene-maleic acid copolymers, methyl vinyl ether-maleic acid copolymers, styrene-maleic acid copolymers, poly(fumaric acid), poly(vinylsulfonic acid), poly(styrenesulfonic acid), poly(2-sulfoethyl methacrylate), poly(2-sulfoethyl acrylate), poly(3-sulfopropyl methacrylate), poly(3-sulfopropyl acrylate), poly(4-sulfobutyl methacrylate), poly(4-sulfobutyl acrylate), poly(2-acrylamido-2-methylpropanesulfonic acid), poly(2-methacrylamido-2-methylpropanesulfonic acid) and copolymers thereof; and acidic polysaccharides, such as carboxymethyl cellulose, gellan gum, alginic acid, sulfated alginic acid, carrageenan, xanthan gum, chondroitin sulfate, heparin, hyaluronic acid, pectic acid, gum arabic, agar and gum tragacanth. These polymers may be copolymerized with another monomer as long as oxidation resistance and reduction resistance are acceptable. Among these polymers, an acidic polysaccharide with high oxidation resistance is preferably used as a binder for a positive electrode, and alginic acid or sulfated alginic acid is more preferably used. On the other hand, as a binder for a negative electrode, poly(acrylic acid), poly(styrenesulfonic acid) or a copolymer thereof, alginic acid or sulfated alginic acid, which has high reduction resistance, is preferably used.

On the other hand, the compound having the chelating group and having the cationic functional group may be a compound having a chelating group and having an ammonium group, a phosphonium group, a sulfonium group or the like. A specific compound may be iminodiacetic acid, nitrilotriacetic acid, ethylenediaminetetraacetic acid, N,N-bis(2-hydroxyethyl)glycine, 1,2-diaminocyclohexanetetraacetic acid, diethylenetriaminepentaacetic acid, N-(2-hydroxyethyl)ethylenediaminetriacetic acid, bis(2-aminoethyl)ethylene glycol tetraacetic acid, bis(2-aminophenyl)ethylene glycol tetraacetic acid, N-(2-hydroxyethyl)iminodiacetic acid, tetrakis(2-pyridylmethyl)ethylenediamine, triethylenetetraminehexaacetic acid, aminomethylphosphonic acid, aminoethylphosphonic acid, aminopropylphosphonic acid, nitrilotris(methylphosphonic acid) or a salt thereof. The acetate group and the phosphonate group in these compounds are preferably in the form of a monovalent salt, such as an alkali metal salt or an ammonium salt, rather than in the form of a proton, because the monovalent salts thereof are easily ion-exchanged with heavy-metal ions.

A chelating group bonded to a polymer through an ionic bond can be identified, for example, by FT-IR measurement.

Although the lithium-ion battery electrode binder may be composed only of the polymer having the chelating group, when another binder component is contained, the amount of the polymer having the chelating group is preferably 10% by mass or more. The other binder as a binder for a positive electrode may be a fluoropolymer, such as poly(vinylidene difluoride), a vinylidene fluoride-hexafluoropropylene copolymer, a perfluoromethyl vinyl ether-tetrafluoroethylene copolymer, polytetrafluoroethylene or fluororubber, and as a binder for a negative electrode may be a fluoropolymer, such as poly(vinylidene difluoride), a vinylidene fluoride-hexafluoropropylene copolymer, a perfluoromethyl vinyl ether-tetrafluoroethylene copolymer, polytetrafluoroethylene or fluororubber, a hydrocarbon elastomer, such as a styrene-butadiene copolymer or an ethylene-propylene copolymer, or a polyimide.

The amount of a binder containing the polymer having the chelating group preferably ranges from 1% to 20% by mass, more preferably 3% to 10% by mass, based on the total amount of the active material, the binder and the conductive additive.

A binder has high flexibility and can follow the volume change of an electrode during charge and discharge, thereby preventing the electrode from being cracked due to the volume change, the active material from being separated and dropped and a conductive channel from being destroyed. Furthermore, the binder according to the fourth aspect of the present invention has good properties as a lithium-ion battery electrode binder, such as high ionic conductivity due to a high affinity for an electrolyte solution and high oxidation resistance and reduction resistance that can ensure the stability of the electrode.

Furthermore, a chelating group introduced into the binder can trap manganese ions and the like eluted from the positive-electrode active material near the positive electrode and/or the negative electrode, suppress precipitation and deposition on the negative-electrode active material and achieve good charge-discharge characteristics and extension of cycle life.

In the fourth aspect of the present invention, the positive-electrode active material may be any material that can intercalate and/or deintercalate lithium ions, for example, a transition metal oxide, such as CuO, Cu₂O, MnO₂, MoO₃, V₂O₅, CrO₃, Fe₂O₃, Ni₂O₃ or CoO₃, or a lithium composite oxide, such as Li_{X}CoO₂, Li_{X}NiO₂, Li_{X}MnO₂, Li_{X}Mn₂O₄, LiNi_{X}Co_{(1-X)}O₂, LiNiₐCO_{b}Al_{c}O₂ (a + b + c = 1), LiNi_{X}Mn_{(2-X)}O₄, LiMnₐNi_{b}Co_{c}O₂ (a + b + c = 1), LiFePO₄ or LiMn_{X}Fe_{(1-X)}PO₄. Among these, composite oxides of lithium and at least one selected from transition metals, such as Co, Ni and Mn, are preferred, and specific examples thereof include LiCoO₂, LiNiO₂, LiMnO₂, LiMn₂O₄, LiNi_{X}Co_{(1-X)}O₂, LiNiₐCo_{b}Al_{c}O₂ (a + b + c = 1), LiNi_{X}Mn_{(2-X)}O₄, LiMnₐNi_{b}Co_{c}O₂ (a + b + c = 1) and LiMn_{X}Fe_{(1-X)}PO₄. These lithium composite oxides may be doped with a small amount of an element, such as fluorine, boron, Al, Cr, Zr, Mo or Fe, or the surfaces of particles of the lithium composite oxides may be treated with carbon, MgO, Al₂O₃, SiO₂ or the like.

In the fourth aspect of the present invention, the negative-electrode active material may be any material that can intercalate and/or deintercalate lithium ions, for example, a lithium metal, natural graphite, artificial graphite, graphite, mesocarbon microbeads (MCMB), tin and/or a tin alloy, a tin oxide, silicon and/or a silicon alloy or a silicon oxide. When the negative-electrode active material is an alloy, the negative-electrode active material may contain a material that is alloyed with lithium. The material that is alloyed with lithium is, for example, germanium, tin, lead, zinc, magnesium, sodium, aluminum, gallium, indium or an alloy thereof.

When these active materials are in the form of particles, the average particle size thereof is preferably, but not limited to, 5 um or more and 20 µm or less.

The amount of these active materials preferably ranges from 70% to 98% by mass based on the total amount of the active material, the binder and the conductive additive.

The conductive additive in the electrode may be any electrically conductive material that does not adversely affect battery characteristics. Specific examples thereof include electrically conductive carbons, such as Ketjen black and acetylene black, carbon materials, such as natural graphite, artificial graphite, carbon whisker, carbon nanotube and carbon fiber powders, metal powders and metal fibers of Cu, Fe, Ag, Ni, Pd, Au, Pt, In, W and the like and electrically conductive metal oxides, such as indium oxide and tin oxide. The amount of the conductive additive preferably ranges from 1% to 30% by mass based on the active material.

The slurry for forming a lithium-ion battery electrode mixture layer according to the fourth aspect of the present invention is described in detail below.

The slurry for forming a lithium-ion battery electrode mixture layer according to the fourth aspect of the present invention includes the binder, the active material, the conductive additive and water. The slurry may contain a viscosity modifier, such as carboxymethyl cellulose, or a pH regulator, such as an acid or an alkali, if necessary. The solid concentration of the slurry is preferably, but not limited to, 20% to 80% by mass in consideration of the viscosity of the slurry, the dispersibility of a solid component, the load on a drying process and the like. The ratio of the solid components in the slurry is preferably positive-electrode active material:conductive additive:binder = 70 to 98:1 to 30:1 to 20 in mass ratio. The slurry may be prepared by any method, for example, by a method of mixing, dispersing or dissolving a binder, an active material and a conductive additive together in water, by a method of first dissolving a binder in water, then adding an active material and a conductive additive to the binder aqueous solution and mixing them, or by a method of first mixing an active material and a conductive additive and then mixing it with a binder aqueous solution. Furthermore, the slurry may be prepared with any mixer, such as a mortar, a rolling mill, a ball mill, a screw mill, a vibrating mill, a homogenizer or a planetary mixer.

The lithium-ion battery electrode according to the fourth aspect of the present invention is described in detail below.

The lithium-ion battery electrode according to the fourth aspect of the present invention contains the binder. The lithium-ion battery electrode is composed of an electrode mixture layer, which is formed by applying the slurry to a current collector and drying the slurry, and the current collector. The electrode mixture layer composed of the active material, the binder and the conductive additive preferably has a thickness in the range of 10 to 200 µm. To form the electrode mixture layer with such a thickness on the current collector, the electrode mixture layer may have a mass per unit area in the range of 4 to 25 mg/cm².

The current collector only needs to be an electric conductor with an electrically conductive surface in contact with the electrode mixture layer, for example, an electric conductor formed of a metal, such as copper, gold, aluminum, titanium, nickel, stainless steel or an alloy thereof, an electrically conductive metal oxide, such as indium oxide or tin oxide, or an electrically conductive material, such as electrically conductive carbon. The current collector may have any shape, such as a foil shape, a film shape, a sheet shape, a net shape, an expanded metal shape, a perforated metal shape or a foam shape. The thickness of the current collector is preferably, but not limited to, approximately 1 to 100 µm.

The lithium-ion battery electrode may be produced by any method and may be produced by applying the slurry to the current collector and drying the slurry. The slurry may be applied by any method, such as slit coating, die coating, roll coating, dip coating, blade coating, knife coating or wire bar coating. The drying method and conditions are not particularly limited, and a typical hot-air circulating dryer, vacuum dryer, infrared dryer or microwave heating dryer can be used. The heating temperature is also not particularly limited, and the heating and drying can be performed in the range of 50°C to 150°C. Furthermore, the electrode can be pressed under pressure during drying or after drying to make the porous structure uniform.

The lithium-ion battery according to the fourth aspect of the present invention is described in detail below.

The lithium-ion battery according to the fourth aspect of the present invention includes the lithium-ion battery electrode. The lithium-ion battery may be a lithium-ion primary battery or a lithium-ion secondary battery. The lithium-ion battery electrode can be used to provide a high-performance lithium-ion battery with good charge-discharge characteristics and an extended life.

A lithium-ion battery is typically composed of a positive electrode, a negative electrode, a separator, a non-aqueous electrolyte solution and the like and typically has a cylindrical shape, a square or rectangular shape, a laminate shape or a coin shape. The positive electrode is produced by binding the positive-electrode active material together with the conductive additive onto a positive-electrode current collector using the binder and has a structure in which a positive-electrode mixture layer composed of the positive-electrode active material, the binder and the conductive additive is formed on the current collector. The negative electrode also has a structure similar to that of the positive electrode and is produced by binding the following negative-electrode active material and the conductive additive onto a negative-electrode current collector using a binder. The separator is typically a porous film made of polyolefin or the like and is interposed between the positive electrode and the negative electrode to perform a shutdown function in case of a thermal runaway of the battery. The non-aqueous electrolyte solution is prepared by dissolving an electrolyte salt, such as LiPF₄, in an organic solvent, such as a cyclic carbonate. The battery is filled with the non-aqueous electrolyte solution, and lithium ions in a primary battery move from the negative electrode to the positive electrode during discharging, and in a secondary battery move from the positive electrode to the negative electrode during charging and from the negative electrode to the positive electrode during discharging.

The non-aqueous electrolyte solution may be, but is not limited to, a known material. The non-aqueous electrolyte solution is prepared by dissolving an electrolyte salt in an organic solvent, and the electrolyte salt is, for example, CF₃SO₃Li, (CF₃SO₂)₂NLi, (CF₃SO₂)₃CLi, LiBF₄, LiB(C₆H₅)₄, LiPF₆, LiClO₄, LiAsF₆, LiCl or LiBr. The organic solvent for dissolving the electrolyte salt may be ethylene carbonate, vinylene carbonate, propylene carbonate, butylene carbonate, dimethyl carbonate, diethyl carbonate, ethyl methyl carbonate, 1,2-dimethoxyethane, 1,2-diethoxyethane, γ-butyrolactone, tetrahydrofuran, 1,4-dioxane, anisole, diethyl ether, sulfolane, methylsulfolane, acetonitrile, propionitrile, butyronitrile, valeronitrile, benzonitrile, dimethylformamide, dimethyl sulfoxide, trimethyl phosphate or triethyl phosphate. The concentration of the electrolyte salt in the non-aqueous electrolyte solution can range from 0.1 to 5 mol/L, preferably 0.5 to 3 mol/L.

The separator may be, but is not limited to, a known separator. The separator may be a non-woven fabric made of a polyethylene microporous membrane, a polypropylene microporous membrane, a multilayer membrane of a polyethylene microporous membrane and a polypropylene microporous membrane, polyester fiber, aramid fiber, glass fiber or the like.

The fifth aspect of the present invention is described in detail below.

The fifth aspect of the present invention is a composition, a lithium-ion battery electrode binder containing the composition, a slurry for forming a lithium-ion battery electrode mixture layer containing the composition, a lithium-ion battery electrode containing the composition and a lithium-ion battery including the electrode.

The composition according to the fifth aspect of the present invention is a physical mixture of a polymer and a low-molecular-weight compound having a chelating group.

The low-molecular-weight compound having the chelating group according to the fifth aspect of the present invention has a chelating group. The chelating group refers to a ligand with a plurality of coordination sites and is a functional group that can form a chelate with a polyvalent metal ion. The chelating group is preferably an aminocarboxylic acid chelating group, an aminophosphonic acid chelating group or a polyamine chelating group. Some examples of the aminocarboxylic acid chelating functional group include an iminodiacetate group, a nitrilotriacetate group, a N,N-bis(2-hydroxyethyl)glycine group, a hydroxyethyl iminodiacetate group, an ethylenediaminetriacetate group, an ethylenediaminetetraacetate group, a 1,2-bis(2-aminophenoxy)ethanetetraacetate group, a 1,2-diaminocyclohexanetetraacetate group, a diethylenetriamine pentaacetate group, a (2-hydroxyethyl)ethylenediaminetriacetate group, a bis(2-aminoethyl)ethylene glycol tetraacetate group and a triethylenetriaminehexaacetate group. Some examples of the aminophosphonic acid chelating group include an aminomethylphosphonate group and nitrilotris(methylphosphonic acid). Some examples of the polyamine chelating group include a polyethyleneimine group, a polyamidoamine dendrimer group and a tetrakis(2-pyridylmethyl)ethylenediamine group. When the chelating group contains a carboxylic acid or a phosphonic acid, an acidic functional group thereof is preferably in the form of a monovalent salt, such as an alkali metal salt or an ammonium salt, rather than in the form of a proton to facilitate ion-exchange with heavy-metal ions.

The low-molecular-weight compound having the chelating group according to the fifth aspect of the present invention is preferably a water-soluble compound.

The low-molecular-weight compound having the chelating group according to the fifth aspect of the present invention preferably has a molecular weight of 10,000 or less, more preferably 1,000 or less.

The low-molecular-weight compound having the chelating group according to the fifth aspect of the present invention is not particularly limited as long as it has the chelating group. Specific examples of the low-molecular-weight compound having the chelating group according to the fifth aspect of the present invention include formic acid, citric acid, porphyrin, polyethyleneimine, iminodiacetic acid, nitrilotriacetic acid, ethylenediaminetetraacetic acid, N,N-bis(2-hydroxyethyl)glycine, 1,2-diaminocyclohexanetetraacetic acid, diethylenetriaminepentaacetic acid, N-(2-hydroxyethyl)ethylenediaminetriacetic acid, bis(2-aminoethyl)ethylene glycol tetraacetic acid, bis(2-aminophenyl)ethylene glycol tetraacetic acid, N-(2-hydroxyethyl)iminodiacetic acid, tetrakis(2-pyridylmethyl)ethylenediamine, triethylenetetraminehexaacetic acid, aminomethylphosphonic acid, aminoethylphosphonic acid, aminopropylphosphonic acid, nitrilotris(methylphosphonic acid) and salts thereof.

The polymer according to the fifth aspect of the present invention is not particularly limited but is preferably hydrophilic or soluble in water because it is preferred to have a good affinity for the low-molecular-weight compound having the chelating group. The molecular weight of the polymer used in the fifth aspect of the present invention is, but not limited to, in the range of 10,000 to 1,000,000, preferably 50,000 to 1,000,000, in terms of the weight-average molecular weight. A weight-average molecular weight in this range is preferred due to sufficient mechanical strength and a viscosity adjustable without problems for electrode coating. Some examples of the polymer used in the fifth aspect of the present invention include vinyl polymers, such as poly(acrylic acid), poly(methacrylic acid), poly(itaconic acid), poly(maleic acid), ethylene-maleic acid copolymers, isobutene-maleic acid copolymers, methyl vinyl ether-maleic acid copolymers, styrene-maleic acid copolymers, poly(fumaric acid), poly(vinylsulfonic acid), poly(styrenesulfonic acid), poly(2-sulfoethyl methacrylate), poly(2-sulfoethyl acrylate), poly(3-sulfopropyl methacrylate), poly(3-sulfopropyl acrylate), poly(4-sulfobutyl methacrylate), poly(4-sulfobutyl acrylate), poly(2-acrylamido-2-methylpropanesulfonic acid), poly(2-methacrylamido-2-methylpropanesulfonic acid) and copolymers thereof; and acidic polysaccharides, such as carboxymethyl cellulose, gellan gum, alginic acid, sulfated alginic acid, carrageenan, xanthan gum, chondroitin sulfate, heparin, hyaluronic acid, pectic acid, gum arabic, agar and gum tragacanth, and alkali metal salts thereof.

The "physical mixture of a polymer and a low-molecular-weight compound having a chelating group" in the composition according to the fifth aspect of the present invention means that a chemical bond, such as a covalent bond or an ionic bond, is not formed between the polymer and the low-molecular-weight compound having the chelating group.

The blend ratio of the polymer and the low-molecular-weight compound having the chelating group used in the fifth aspect of the present invention is preferably, but not limited to, polymer:low-molecular-weight compound having a chelating group = 100:30 to 500 in weight ratio.

The method of physically mixing the compound having the chelating group and the polymer may be, but is not limited to, a method of mixing both in a powder form, a method of dissolving both in a solvent, such as water, uniformly mixing them and then removing the solvent to produce a powder or a method of dissolving both in a solvent, such as water, uniformly mixing them and then directly using them.

In the composition according to the fifth aspect of the present invention, the polymer may be one type or two or more types. When another polymer (hereinafter referred to as a "second polymer") is contained in addition to the polymer, the amount of the polymer is preferably 10% by mass or more, that is, the amount of the second polymer is preferably 90% by mass or less. For use in the positive electrode, the second polymer may be a fluoropolymer, such as poly(vinylidene difluoride), a vinylidene fluoride-hexafluoropropylene copolymer, a perfluoromethyl vinyl ether-tetrafluoroethylene copolymer, polytetrafluoroethylene or fluororubber. For use in the negative electrode, it may be a fluoropolymer, such as poly(vinylidene difluoride), a vinylidene fluoride-hexafluoropropylene copolymer, a perfluoromethyl vinyl ether-tetrafluoroethylene copolymer, polytetrafluoroethylene or fluororubber, a hydrocarbon elastomer, such as a styrene-butadiene copolymer or an ethylene-propylene copolymer, or a polyimide.

The lithium-ion battery electrode binder according to the fifth aspect of the present invention is described in detail below.

The composition according to the fifth aspect of the present invention can be suitably used as a lithium-ion battery electrode binder. The amount of the binder according to the fifth aspect of the present invention preferably ranges from 1% to 20% by mass, more preferably 3% to 10% by mass, based on the total amount of the active material, the binder and the conductive additive.

The binder according to the fifth aspect of the present invention has high flexibility and can follow the volume change of an electrode during charge and discharge, thereby preventing the electrode from being cracked due to the volume change, the active material from being separated and dropped and a conductive channel from being destroyed. Furthermore, the binder according to the fifth aspect of the present invention has many hydrophilic functional groups, has a high affinity for the active material and has high coatability on the active material. Furthermore, the binder according to the fifth aspect of the present invention has good properties as a lithium-ion battery electrode binder, such as high ionic conductivity due to a high affinity for an electrolyte solution and high oxidation resistance and reduction resistance that can ensure the stability of the electrode.

Furthermore, a chelating group introduced into the binder can trap manganese ions and the like eluted from the positive-electrode active material near the positive electrode and/or the negative electrode, suppress precipitation and deposition on the negative-electrode active material and achieve good charge-discharge characteristics and extension of cycle life.

In the fifth aspect of the present invention, the positive-electrode active material may be any material that can intercalate and deintercalate lithium ions, for example, a transition metal oxide, such as CuO, Cu₂O, MnO₂, MoO₃, V₂O₅, CrO₃, Fe₂O₃, Ni₂O₃ or CoO₃, or a lithium composite oxide, such as Li_{X}CoO₂, Li_{X}NiO₂, Li_{X}MnO₂, Li_{X}Mn₂O₄, LiNi_{X}CO_{(1-X)}O₂, LiNi_{X}Mn_{(2-X)}O₄, LiMnₐNi_{b}Co_{c}O₂ (a + b + c = 1) or LiFePO₄. Among these, composite oxides of lithium and at least one selected from transition metals, such as Co, Ni and Mn, are preferred, and specific examples thereof include LiCoO₂, LiNiO₂, LiMnO₂, LiMn₂O₄, LiNi_{X}Co_{(1-X)}O₂, LiNi_{X}Mn_{(2-X)}O₄ and LiMnₐNi_{b}Co_{c}O₂ (a + b + c = 1). These lithium composite oxides may be doped with a small amount of an element, such as fluorine, boron, Al, Cr, Zr, Mo or Fe, or the surfaces of particles of the lithium composite oxides may be treated with carbon, MgO, Al₂O₃, SiO₂ or the like.

In the fifth aspect of the present invention, the negative-electrode active material may be any material that can intercalate and deintercalate lithium ions, for example, natural graphite, artificial graphite, graphite, mesocarbon microbeads (MCMB), tin and/or a tin alloy, a tin oxide, silicon and/or a silicon alloy or a silicon oxide. When the negative-electrode active material is an alloy, the negative-electrode active material may contain a material that is alloyed with lithium. The material that is alloyed with lithium is, for example, germanium, tin, lead, zinc, magnesium, sodium, aluminum, gallium, indium or an alloy thereof.

When these active materials are in the form of particles, the average particle size thereof is preferably, but not limited to, 5 µm or more and 20 um or less.

The conductive additive in the electrode may be any electrically conductive material that does not adversely affect battery characteristics. Specific examples thereof include electrically conductive carbons, such as Ketjen black and acetylene black, carbon materials, such as natural graphite, artificial graphite, carbon whisker, carbon nanotube and carbon fiber powders, metal powders and metal fibers of Cu, Fe, Ag, Ni, Pd, Au, Pt, In, W and the like and electrically conductive metal oxides, such as indium oxide and tin oxide. The amount of the conductive additive preferably ranges from 1% to 30% by mass based on the active material.

The slurry for forming a lithium-ion battery electrode mixture layer according to the fifth aspect of the present invention is described in detail below.

The slurry for forming a lithium-ion battery electrode mixture layer according to the fifth aspect of the present invention includes the binder, the active material, the conductive additive and water. The slurry may contain a viscosity modifier, such as carboxymethyl cellulose, or a pH regulator, such as an acid or an alkali, if necessary. The solid concentration of the slurry is preferably, but not limited to, 20% to 80% by mass in consideration of the viscosity of the slurry, the dispersibility of a solid component, the load on a drying process and the like. The ratio of the solid components in the slurry is preferably positive-electrode active material:conductive additive:binder = 70 to 98:1 to 30:1 to 20 in mass ratio. The slurry may be prepared by any method, for example, by a method of mixing, dispersing or dissolving a binder, an active material and a conductive additive together in water, by a method of first dissolving a binder in water, then adding an active material and a conductive additive to the binder aqueous solution and mixing them, or by a method of first mixing an active material and a conductive additive and then mixing it with a binder aqueous solution. Furthermore, the slurry may be prepared with any mixer, such as a mortar, a rolling mill, a ball mill, a screw mill, a vibrating mill, a homogenizer or a planetary mixer.

The lithium-ion battery according to the fifth aspect of the present invention is described in detail below.

The lithium-ion battery electrode according to the fifth aspect of the present invention contains the binder. The lithium-ion battery electrode is composed of an electrode mixture layer, which is formed by applying the slurry to a current collector and drying the slurry, and the current collector. The electrode mixture layer composed of the active material, the binder and the conductive additive preferably has a thickness in the range of 10 to 200 um. To form the electrode mixture layer with such a thickness on the current collector, the electrode mixture layer may have a mass per unit area in the range of 4 to 25 mg/cm².

The current collector only needs to be an electric conductor with an electrically conductive surface in contact with the electrode mixture layer, for example, an electric conductor formed of a metal, such as copper, gold, aluminum, titanium, nickel, stainless steel or an alloy thereof, an electrically conductive metal oxide, such as indium oxide or tin oxide, or an electrically conductive material, such as electrically conductive carbon. The current collector may have any shape, such as a foil shape, a film shape, a sheet shape, a net shape, an expanded metal shape, a perforated metal shape or a foam shape. The thickness of the current collector is preferably, but not limited to, approximately 1 to 100 um.

The lithium-ion battery electrode may be produced by any method and may be produced by applying the slurry to the current collector and drying the slurry. The slurry may be applied by any method, such as slit coating, die coating, roll coating, dip coating, blade coating, knife coating or wire bar coating. The drying method and conditions are not particularly limited, and a typical hot-air circulating dryer, vacuum dryer, infrared dryer or microwave heating dryer can be used. The heating temperature is also not particularly limited, and the heating and drying can be performed in the range of 50°C to 150°C. Furthermore, the electrode can be pressed under pressure during drying or after drying to make the porous structure uniform.

The lithium-ion battery according to the fifth aspect of the present invention includes the lithium-ion battery electrode. The lithium-ion battery electrode can be used to provide a high-performance lithium-ion battery with good charge-discharge characteristics and an extended cycle life. A lithium-ion battery is typically composed of a positive electrode, a negative electrode, a separator, a non-aqueous electrolyte solution and the like and has a laminated cell shape, for example. The positive electrode is produced by binding the positive-electrode active material together with the conductive additive onto a positive-electrode current collector using the binder and has a structure in which a positive-electrode mixture layer composed of the positive-electrode active material, the binder and the conductive additive is formed on the current collector. The negative electrode also has a structure similar to that of the positive electrode and is produced by binding the following negative-electrode active material and the conductive additive onto a negative-electrode current collector using a binder. The separator is typically a porous film made of polyolefin or the like and is interposed between the positive electrode and the negative electrode to perform a shutdown function in case of a thermal runaway of the battery. The non-aqueous electrolyte solution is prepared by dissolving an electrolyte salt, such as LiPF₄, in an organic solvent, such as a cyclic carbonate. The battery is filled with the non-aqueous electrolyte solution, and lithium ions move from the positive electrode to the negative electrode during charging and move from the negative electrode to the positive electrode during discharging.

The non-aqueous electrolyte solution may be, but is not limited to, a known material. The non-aqueous electrolyte solution is prepared by dissolving an electrolyte salt in an organic solvent, and the electrolyte salt is, for example, CF₃SO₃Li, (CF₃SO₂)₂NLi, (CF₃SO₂)₂CLi, LiBF₄, LiB(C₆H₈)₄, LiPF₄, LiClO₄, LiAsF₆, LiCl or LiBr. The organic solvent for dissolving the electrolyte salt may be ethylene carbonate, vinylene carbonate, propylene carbonate, butylene carbonate, dimethyl carbonate, diethyl carbonate, ethyl methyl carbonate, 1,2-dimethoxyethane, 1,2-diethoxyethane, γ-butyrolactone, tetrahydrofuran, 1,4-dioxane, anisole, diethyl ether, sulfolane, methylsulfolane, acetonitrile, propionitrile, butyronitrile, valeronitrile, benzonitrile, dimethylformamide, dimethyl sulfoxide, trimethyl phosphate or triethyl phosphate. The concentration of the electrolyte salt in the non-aqueous electrolyte solution can range from 0.1 to 5 mol/L, preferably 0.5 to 3 mol/L.

The separator may be, but is not limited to, a known separator. The separator may be a non-woven fabric made of a polyethylene microporous membrane, a polypropylene microporous membrane, a multilayer membrane of a polyethylene microporous membrane and a polypropylene microporous membrane, polyester fiber, aramid fiber, glass fiber or the like.

The sixth aspect of the present invention is described in detail below.

The sixth aspect of the present invention is a composition, a lithium-ion battery electrode binder containing the composition, a slurry for forming a lithium-ion battery electrode mixture layer containing the composition, a lithium-ion battery electrode containing the composition and a lithium-ion battery including the electrode.

The composition according to the sixth aspect of the present invention is described in detail below.

The composition according to the sixth aspect of the present invention is a composition containing a hydrogen-ion-form alginic acid and a compound having a chelating group. Thus, in the presence of water, the hydrogen-ion-form alginic acid and the compound having the chelating group form an ionic bond in water. To form an ionic bond between components of the composition, at least a basic functional group needs to be introduced into the compound having the chelating group.

The compound having the chelating group in the sixth aspect of the present invention is a low-molecular-weight compound having a chelating group. The chelating group refers to a ligand with a plurality of coordination sites and is a functional group that can form a chelate with a polyvalent metal ion. Furthermore, the compound having the chelating group is preferably a compound having a basic functional group, such as an amino group. The basic functional group may be a primary amino group, a secondary amino group, a tertiary amino group or an imino group. The chelating group is preferably an aminocarboxylic acid chelating group, an aminophosphonic acid chelating group or a polyamine chelating group. Some examples of the aminocarboxylic acid chelating functional group include an iminodiacetate group, a nitrilotriacetate group, a N,N-bis(2-hydroxyethyl)glycine group, a hydroxyethyl iminodiacetate group, an ethylenediaminetriacetate group, an ethylenediaminetetraacetate group, a 1,2-bis(2-aminophenoxy)ethanetetraacetate group, a 1,2-diaminocyclohexanetetraacetate group, a diethylenetriamine pentaacetate group, a (2-hydroxyethyl)ethylenediaminetriacetate group, a bis(2-aminoethyl)ethylene glycol tetraacetate group and a triethylenetriaminehexaacetate group. Some examples of the aminophosphonic acid chelating group include an aminomethylphosphonate group and nitrilotris(methylphosphonic acid). Some examples of the polyamine chelating group include a polyethyleneimine group, a polyamidoamine dendrimer group and a tetrakis(2-pyridylmethyl)ethylenediamine group. When the chelating group contains a carboxylic acid or a phosphonic acid, an acidic functional group thereof is preferably in the form of a monovalent salt, such as an alkali metal salt or an ammonium salt, rather than in the form of a proton to facilitate ion-exchange with heavy-metal ions.

The compound having the chelating group in the sixth aspect of the present invention is preferably a water-soluble compound. The term "water-soluble", as used herein, means that the compound having the chelating group is soluble in water in an amount of 1% by weight or more.

The compound having the chelating group in the sixth aspect of the present invention preferably has a molecular weight of 10,000 or less, more preferably 1,000 or less.

The compound having the chelating group in the sixth aspect of the present invention is not particularly limited as long as it has the chelating group. Specific examples of the compound having the chelating group according to the present invention include formic acid, citric acid, porphyrin, polyethyleneimine, iminodiacetic acid, nitrilotriacetic acid, ethylenediaminetetraacetic acid, N,N-bis(2-hydroxyethyl)glycine, 1,2-diaminocyclohexanetetraacetic acid, diethylenetriaminepentaacetic acid, N-(2-hydroxyethyl)ethylenediaminetriacetic acid, bis(2-aminoethyl)ethylene glycol tetraacetic acid, bis(2-aminophenyl)ethylene glycol tetraacetic acid, N-(2-hydroxyethyl)iminodiacetic acid, tetrakis(2-pyridylmethyl)ethylenediamine, triethylenetetraminehexaacetic acid, aminomethylphosphonic acid, aminoethylphosphonic acid, aminopropylphosphonic acid, nitrilotris(methylphosphonic acid) and salts thereof. Among these compounds having the chelating group, the compound having the chelating group and having a basic functional group, such as an amino group or an imino group, is preferred because this compound in combination with a hydrogen-ion-form alginic acid can produce, through an ionic bond in water, a compound into which the compound having the chelating group is introduced.

The compound having the chelating group in the sixth aspect of the present invention is preferably a compound with a pH in the range of 3 to 9 when dissolved in water as an aqueous solution. The compound having the chelating group with a pH in the range of 3 to 9 as an aqueous solution is preferably used as a component of the binder because, when a lithium-ion battery electrode is produced, this can prevent the pH of an aqueous slurry for forming an electrode mixture layer containing a positive-electrode active material with a high nickel content from becoming strongly alkaline and can prevent a current collector from being corroded. The pH is a value measured when the concentration of the compound having the chelating group in the aqueous solution is 1.0 mol/L.

Some examples of the compound having the chelating group with a pH in the range of 3 to 9 include disodium nitrilotriacetate, disodium ethylenediaminetetraacetate, trisodium ethylenediaminetetraacetate, dipotassium ethylenediaminetetraacetate, tripotassium ethylenediaminetetraacetate, diammonium ethylenediaminetetraacetate, calcium ethylenediaminetetraacetate, magnesium ethylenediaminetetraacetate, tetrapotassium O,O'-bis(2-aminophenyl)ethylene glycol-N,N,N',N'-tetraacetate, N,N-bis(2-hydroxyethyl)glycine, trisodium diethylenetriaminepentaacetate, sodium gluconate, trisodium nitrilotrismethylphosphonate and disodium hydroxyethylidenediphosphonate.

The hydrogen-ion-form alginic acid in the sixth aspect of the present invention preferably has a molecular weight in the range of 10,000 to 2,000,000, more preferably 500,000 to 1,500,000, in terms of the weight-average molecular weight. A weight-average molecular weight in this range is preferred because it can provide an electrode with sufficient mechanical strength when used as a lithium-ion battery electrode binder and the viscosity is adjustable without problems for electrode coating.

The weight-average molecular weight of the high-molecular-weight hydrogen-ion-form alginic acid in the sixth aspect of the present invention can be calculated in terms of PEO by gel permeation chromatography (GPC) measurement of the alginic acid dissolved in a buffer solution with a pH of approximately 8.

The high-molecular-weight hydrogen-ion-form alginic acid in the sixth aspect of the present invention has a hydrogen ion substitution rate in the range of 80% to 99%. The term "hydrogen ion substitution rate", as used herein, refers to the rate at which a counter ion of a carboxy group in uronic acid, which is a component of alginic acid, is a hydrogen ion. The hydrogen ion substitution rate is calculated by quantifying inorganic ions, such as alkali metal ions and alkaline-earth metal ions, and organic ions, such as tetramethylammonium ions, in the high-molecular-weight hydrogen-ion-form alginic acid. A hydrogen ion substitution rate in this range means that most of the alginic acid is in a hydrogen ion form, and the alginic acid used as a binder raw material interacts easily with the compound having the chelating group and provides preferred results.

In the composition according to the sixth aspect of the present invention, the blending ratio of the hydrogen-ion-form alginic acid to the compound having the chelating group is preferably such that the acidic functional group of the hydrogen-ion-form alginic acid and the basic functional group of the compound having the chelating group are present in equal amounts.

The composition according to the sixth aspect of the present invention preferably contains the compound having the chelating group in an amount in the range of 0.1 to 1.1 moles per mole of the carboxy group in the high-molecular-weight hydrogen-ion-form alginic acid.

The hydrogen-ion-form alginic acid and the compound having the chelating group may be physically mixed together by any method, for example, a method of simply mixing both in a powder form, a method of grinding and mixing both in a powder form or a method of dispersing both in a poor solvent, uniformly mixing them and then removing the solvent to produce a powder.

The composition according to the sixth aspect of the present invention may contain only the hydrogen-ion-form alginic acid and the compound having the chelating group but may also contain another polymer. In the latter case, the amount of the hydrogen-ion-form alginic acid and the compound having the chelating group is preferably 10% by mass or more based on the total amount of the composition.

For use in the positive electrode, the polymer different from the hydrogen-ion-form alginic acid may be a fluoropolymer, such as poly(vinylidene difluoride), a vinylidene fluoride-hexafluoropropylene copolymer, a perfluoromethyl vinyl ether-tetrafluoroethylene copolymer, polytetrafluoroethylene or fluororubber. For use in the negative electrode, it may be a fluoropolymer, such as poly(vinylidene difluoride), a vinylidene fluoride-hexafluoropropylene copolymer, a perfluoromethyl vinyl ether-tetrafluoroethylene copolymer, polytetrafluoroethylene or fluororubber, a hydrocarbon elastomer, such as a styrene-butadiene copolymer or an ethylene-propylene copolymer, or a polyimide.

The composition according to the sixth aspect of the present invention may contain only the hydrogen-ion-form alginic acid and the compound having the chelating group but may further contain a material acting as an active material of a lithium-ion battery. The active material is, for example, the same active material as those described later.

Next, the lithium-ion battery electrode binder according to the sixth aspect of the present invention is described.

The composition according to the sixth aspect of the present invention can be suitably used as a lithium-ion battery electrode binder. More specifically, when the binder also contains the compound having the chelating group, the hydrogen-ion-form alginic acid forms a compound with the compound having the chelating group and is therefore suitably used as a lithium-ion battery electrode binder for binding an active material, a conductive additive and a current collector. The compound has high toughness, mechanical strength and binding properties to an active material, a conductive additive and a current collector and can provide a lithium-ion battery electrode without cracking, separation or peeling off.

The amount of the binder according to the sixth aspect of the present invention preferably ranges from 1% to 20% by mass, more preferably 2% to 10% by mass, based on the total amount of the active material, the binder and the conductive additive.

The binder according to the sixth aspect of the present invention has high flexibility and can follow the volume change of an electrode during charge and discharge, thereby preventing the electrode from being cracked due to the volume change, the active material from being separated and dropped and a conductive channel from being destroyed. Furthermore, the binder according to the sixth aspect of the present invention has many hydrophilic functional groups, has a high affinity for the active material and has high coatability on the active material. Furthermore, the binder according to the sixth aspect of the present invention has good properties as a lithium-ion battery electrode binder, such as high ionic conductivity due to a high affinity for an electrolyte solution and high oxidation resistance and reduction resistance that can ensure the stability of the electrode.

Furthermore, the chelating group in the binder according to the sixth aspect of the present invention can trap manganese ions and the like eluted from the positive-electrode active material near the positive electrode and/or the negative electrode, suppress precipitation and deposition on the surface of the negative-electrode active material and achieve good charge-discharge characteristics and extension of cycle life.

Next, the slurry for forming a lithium-ion battery electrode mixture layer according to the sixth aspect of the present invention is described.

The slurry for forming a lithium-ion battery electrode mixture layer according to the sixth aspect of the present invention includes the binder, the active material, the conductive additive and water. The slurry may contain a viscosity modifier, such as carboxymethyl cellulose, or a pH regulator, such as an acid or an alkali, if necessary. The solid concentration of the slurry is preferably, but not limited to, 20% to 80% by mass in consideration of the viscosity of the slurry, the dispersibility of a solid component, the load on a drying process and the like. The ratio of the solid components in the slurry is preferably active material:conductive additive:binder = 70 to 98:1 to 30:1 to 20 in mass ratio. The slurry may be prepared by any method, for example, by a method of mixing, dispersing or dissolving a binder, an active material and a conductive additive together in water, by a method of first dissolving a binder in water, then adding an active material and a conductive additive to the binder aqueous solution and mixing them, or by a method of first mixing an active material and a conductive additive and then mixing it with a binder aqueous solution. Furthermore, the slurry may be prepared with any mixer, such as a mortar, a rolling mill, a ball mill, a screw mill, a vibrating mill, a homogenizer or a planetary mixer.

For an electrode for the positive electrode, the active material used in the sixth aspect of the present invention is a positive-electrode active material. For an electrode for the negative electrode, the active material is a negative-electrode active material.

In the sixth aspect of the present invention, the positive-electrode active material may be any material that can intercalate and/or deintercalate lithium ions, for example, a transition metal oxide, such as CuO, Cu₂O, MnO₂, MoO₃, V₂O₅, CrO₃, Fe₂O₃, Ni₂O₃ or CoO₃, or a lithium composite oxide, such as Li_{X}CoO₂, Li_{X}NiO₂, Li_{X}MnO₂, Li_{X}Mn₂O₄, LiNi_{X}Co_{(1-X})O₂, LiNi_{X}Mn_{(2-X)}O₄, LiMnₐNi_{b}Co_{c}O₂ (a + b + c = 1), LiNi_{0.8}Co_{0.15}Al_{0.05}O₂, LiFePO₄ or LiMn_{X}Fe_{(1-X)}PO₄. Among these, composite oxides of lithium and at least one selected from transition metals, such as Co, Ni and Mn, are preferred, and specific examples thereof include LiCoO₂, LiNiO₂, LiMnO₂, LiMn₂O₄, LiNixCo_{(1-X)}O₂, LiNi_{X}Mn_{(2-X)}O₄, LiMnₐNi_{b}Co_{c}O₂ (a + b + c = 1), LiNi_{0.8}Co_{0.15}Al_{0.05}O₂ and LiMn_{X}Fe_{(1-X)}PO₄. These lithium composite oxides may be doped with a small amount of an element, such as fluorine, boron, Al, Cr, Zr, Mo or Fe, or the surfaces of particles of the lithium composite oxides may be treated with carbon, MgO, Al₂O₃, SiO₂ or the like.

In the sixth aspect of the present invention, the negative-electrode active material may be any material that can intercalate and/or deintercalate lithium ions, for example, a lithium metal, natural graphite, artificial graphite, graphite, mesocarbon microbeads (MCMB), tin and/or a tin alloy, a tin oxide, silicon and/or a silicon alloy or a silicon oxide. When the negative-electrode active material is an alloy, the negative-electrode active material may contain a material that is alloyed with lithium. The material that is alloyed with lithium is, for example, germanium, tin, lead, zinc, magnesium, sodium, aluminum, gallium, indium or an alloy thereof.

When these active materials are in the form of particles, the average particle size thereof is preferably, but not limited to, 5 µm or more and 20 µm or less. The amount of these active materials preferably ranges from 70% to 98% by mass based on the total amount of the active material, the binder and the conductive additive.

The conductive additive in the electrode may be any electrically conductive material that does not adversely affect battery characteristics. Specific examples thereof include electrically conductive carbons, such as Ketjen black and acetylene black, carbon materials, such as natural graphite, artificial graphite, carbon whisker, carbon nanotube and carbon fiber powders, metal powders and metal fibers of Cu, Fe, Ag, Ni, Pd, Au, Pt, In, W and the like and electrically conductive metal oxides, such as indium oxide and tin oxide. The amount of the conductive additive preferably ranges from 1% to 30% by mass based on the active material.

Next, the lithium-ion battery electrode according to the sixth aspect of the present invention is described.

The lithium-ion battery electrode according to the sixth aspect of the present invention contains an active material, a conductive additive and the lithium-ion battery electrode binder.

The lithium-ion battery electrode is composed of an electrode mixture layer, which is formed by applying the slurry to a current collector and drying the slurry, and the current collector. The electrode mixture layer composed of the active material, the binder and the conductive additive preferably has a thickness in the range of 10 to 200 um. To form the electrode mixture layer with such a thickness on the current collector, the electrode mixture layer may have a mass per unit area in the range of 4 to 25 mg/cm².

The current collector only needs to be an electric conductor with an electrically conductive surface in contact with the electrode mixture layer, for example, an electric conductor formed of a metal, such as copper, gold, aluminum, titanium, nickel, stainless steel or an alloy thereof, an electrically conductive metal oxide, such as indium oxide or tin oxide, or an electrically conductive material, such as electrically conductive carbon. The current collector may have any shape, such as a foil shape, a film shape, a sheet shape, a net shape, an expanded metal shape, a perforated metal shape or a foam shape. The thickness of the current collector is preferably, but not limited to, approximately 1 to 100 µm.

The lithium-ion battery electrode may be produced by any method and may be produced by applying the slurry to the current collector and drying the slurry. The slurry may be applied by any method, such as slit coating, die coating, roll coating, dip coating, blade coating, knife coating or wire bar coating. The drying method and conditions are not particularly limited, and a typical hot-air circulating dryer, vacuum dryer, infrared dryer or microwave heating dryer can be used. The heating temperature is also not particularly limited, and the heating and drying can be performed in the range of 50°C to 150°C. Furthermore, the electrode can be pressed under pressure during drying or after drying to make the porous structure uniform.

The lithium-ion battery according to the sixth aspect of the present invention is described below.

The lithium-ion battery according to the sixth aspect of the present invention includes the lithium-ion battery electrode. The lithium-ion battery according to the sixth aspect of the present invention includes a lithium-ion primary battery and a lithium-ion secondary battery. The lithium-ion battery electrode can be used to provide a high-performance lithium-ion battery with good charge-discharge characteristics and an extended cycle life. A lithium-ion battery is typically composed of a positive electrode, a negative electrode, a separator, a non-aqueous electrolyte solution and the like and has a laminated cell shape, for example. The positive electrode is produced by binding the positive-electrode active material together with the conductive additive onto a positive-electrode current collector using the binder and has a structure in which a positive-electrode mixture layer composed of the positive-electrode active material, the binder and the conductive additive is formed on the current collector. The negative electrode also has a structure similar to that of the positive electrode and is produced by binding the following negative-electrode active material and the conductive additive onto a negative-electrode current collector using a binder. The separator is typically a porous film made of polyolefin or the like and is interposed between the positive electrode and the negative electrode to perform a shutdown function in case of a thermal runaway of the battery. The non-aqueous electrolyte solution is prepared by dissolving an electrolyte salt, such as LiPF₄, in an organic solvent, such as a cyclic carbonate. The battery is filled with the non-aqueous electrolyte solution, and lithium ions move from the positive electrode to the negative electrode during charging and move from the negative electrode to the positive electrode during discharging.

The non-aqueous electrolyte solution may be, but is not limited to, a known material. The non-aqueous electrolyte solution is prepared by dissolving an electrolyte salt in an organic solvent, and the electrolyte salt is, for example, CF₃SO₃Li, (CF₃SO₂)₂NLi, (CF₃SO₂)₃CLi, LiBF₄, LiB(C₆H₅)₄, LiPF₆, LiClO₄, LiAsF₆, LiCl or LiBr. The organic solvent for dissolving the electrolyte salt may be ethylene carbonate, vinylene carbonate, propylene carbonate, butylene carbonate, dimethyl carbonate, diethyl carbonate, ethyl methyl carbonate, 1,2-dimethoxyethane, 1,2-diethoxyethane, γ-butyrolactone, tetrahydrofuran, 1,4-dioxane, anisole, diethyl ether, sulfolane, methylsulfolane, acetonitrile, propionitrile, butyronitrile, valeronitrile, benzonitrile, dimethylformamide, dimethyl sulfoxide, trimethyl phosphate or triethyl phosphate. The concentration of the electrolyte salt in the non-aqueous electrolyte solution can range from 0.1 to 5 mol/L, preferably 0.5 to 3 mol/L.

The separator may be, but is not limited to, a known separator. The separator may be a non-woven fabric made of a polyethylene microporous membrane, a polypropylene microporous membrane, a multilayer membrane of a polyethylene microporous membrane and a polypropylene microporous membrane, polyester fiber, aramid fiber, glass fiber or the like.

The seventh aspect of the present invention is described in detail below.

The seventh aspect of the present invention is a high-molecular-weight hydrogen-ion-form alginic acid, a method for producing the high-molecular-weight hydrogen-ion-form alginic acid, a lithium-ion battery electrode binder containing the alginic acid, a slurry for forming a lithium-ion battery electrode mixture layer containing the binder, a lithium-ion battery electrode containing the binder and a lithium-ion battery including the electrode.

The high-molecular-weight hydrogen-ion-form alginic acid according to the seventh aspect of the present invention is described in detail below.

The high-molecular-weight hydrogen-ion-form alginic acid according to the seventh aspect of the present invention is a linear polysaccharide composed of two uronic acids (mannuronic acid and guluronic acid), in which a counter ion of a carboxy group in the uronic acids is in a hydrogen ion form. The ratio of mannuronic acid to guluronic acid, which are components of alginic acid, is arbitrary, and alginic acid with a high mannuronic acid ratio, which forms a flexible gel, or alginic acid with a high guluronic acid ratio, which forms a rigid gel, can be used. The sequence of the two uronic acids is not particularly limited and may be random or block.

The high-molecular-weight hydrogen-ion-form alginic acid according to the seventh aspect of the present invention needs to have a weight-average molecular weight in the range of 500,000 to 1,500,000. A lithium-ion battery electrode binder produced by using the high-molecular-weight hydrogen-ion-form alginic acid with a weight-average molecular weight in this range as a raw material has good binding properties and toughness and has preferred characteristics as a binder. Furthermore, a slurry for forming an electrode mixture layer containing an active material, a conductive additive, a binder containing the high-molecular-weight hydrogen-ion-form alginic acid and water, which is used for producing a lithium-ion battery electrode binder, can have a viscosity in a range that ensures good applicability, and a lithium-ion battery electrode produced using the slurry has no cracking, separation or peeling off and can provide a battery with a long life and high durability.

The weight-average molecular weight of the high-molecular-weight hydrogen-ion-form alginic acid according to the seventh aspect of the present invention can be calculated in terms of PEO by gel permeation chromatography (GPC) measurement of the alginic acid dissolved in a buffer solution with a pH of approximately 8.

The high-molecular-weight hydrogen-ion-form alginic acid according to the seventh aspect of the present invention has a hydrogen ion substitution rate in the range of 80% to 99%. The term "hydrogen ion substitution rate", as used herein, refers to the rate at which a counter ion of a carboxy group in uronic acid, which is a component of alginic acid, is a hydrogen ion. The hydrogen ion substitution rate is calculated by quantifying inorganic ions, such as alkali metal ions and alkaline-earth metal ions, and organic ions, such as tetramethylammonium ions, in the high-molecular-weight hydrogen-ion-form alginic acid. A hydrogen ion substitution rate in this range means that most of the alginic acid is in a hydrogen ion form, and the alginic acid used as a binder raw material interacts easily with the compound having the chelating group and provides preferred results.

Next, the method for producing the hydrogen-ion-form alginic acid according to the seventh aspect of the present invention is described.

The production method according to the present invention is characterized by dispersing an alkali metal alginate or an alkaline-earth metal alginate as a raw material in a poor solvent therefor, adding an acid thereto and bringing the alkali metal alginate or the alkaline-earth metal alginate not dissolved but dispersed in the solvent into contact with the acid for ion exchange into a hydrogen ion form. In a known production method, an alkali metal alginate or an alkaline-earth metal alginate dissolved in water increases the viscosity of the aqueous solution even at a low concentration, limits the production to a low concentration condition and makes the production at a high concentration with high productivity difficult. Thus, it has been found that a hydrogen-ion-form alginic acid can be produced at a high concentration with high productivity by studying a method for producing the hydrogen-ion-form alginic acid by dispersing the alginate salt in a poor solvent in which an alkali metal alginate or an alkaline-earth metal alginate is insoluble and adding an acid in a heterogeneous system to perform an ion-exchange reaction. The production method according to the seventh aspect of the present invention can be used not only for the production of a high-molecular-weight hydrogen-ion-form alginic acid but also for the production of a hydrogen-ion-form alginic acid with a relatively low molecular weight.

The poor solvent used in the heterogeneous reaction described above may be any solvent in which the alkali metal alginate and the alkaline-earth metal alginate are insoluble, and a poor solvent that is mutually soluble with water is preferred for promoting a reaction with an acid. Some preferred examples of the poor solvent include alcohols, such as methanol, ethanol, isopropanol and butanol; glycols, such as ethylene glycol, propylene glycol, glycerin and diethylene glycol; cyclic ethers, such as tetrahydrofuran, dioxane and trioxane; ketones, such as acetone and 2-butanone; and mixed solvents of these solvents and water. When a mixed solvent of a poor solvent and water is used, the ratio of water in the mixed solvent preferably ranges from 1% to 30% by mass.

The heterogeneous reaction proceeds in a slurry state, and the slurry concentration at that time preferably ranges from 10% to 40% by mass. The slurry concentration refers to the concentration of the alginate salt in the slurry.

Although the reaction temperature, the reaction time, the type of acid and the addition amount are not particularly limited, mild conditions are preferred for suppressing hydrolysis of the alginic acid. For example, preferred conditions include a reaction temperature in the range of 0°C to 30°C, a reaction time in the range of 1 minute to 5 hours, an acid type of at least one selected from the group consisting of hydrochloric acid, sulfuric acid, phosphoric acid and sulfonic acid and an acid addition amount in the range of 1 to 10 equivalents with respect to the carboxy group of the alginic acid. After completion of the reaction, the high-molecular-weight hydrogen-ion-form alginic acid, which maintains a slurry state, is collected by filtration or the like and, if necessary, is washed with water and is dried to isolate.

Next, the lithium-ion battery electrode binder according to the seventh aspect of the present invention is described.

The high-molecular-weight hydrogen-ion-form alginic acid can be suitably used as a lithium-ion battery electrode binder. More specifically, when the binder also contains the compound having the chelating group, the high-molecular-weight hydrogen-ion-form alginic acid forms a compound with the compound having the chelating group and is therefore suitably used as a lithium-ion battery electrode binder for binding an active material, a conductive additive and a current collector. Having a high molecular weight, the compound has high toughness, mechanical strength and binding properties to an active material, a conductive additive and a current collector and can provide a lithium-ion battery electrode without cracking, separation or peeling off.

The compound having the chelating group used in the seventh aspect of the present invention is a compound that has a chelating group. The chelating group refers to a ligand with a plurality of coordination sites and is a functional group that can form a chelate with a polyvalent metal ion.

The chelating group is preferably an aminocarboxylic acid chelating group, an aminophosphonic acid chelating group or a polyamine chelating group.

Some examples of the aminocarboxylic acid chelating functional group include an iminodiacetate group, a nitrilotriacetate group, a N,N-bis(2-hydroxyethyl)glycine group, a hydroxyethyl iminodiacetate group, an ethylenediaminetriacetate group, an ethylenediaminetetraacetate group, a 1,2-bis(2-aminophenoxy)ethanetetraacetate group, a 1,2-diaminocyclohexanetetraacetate group, a diethylenetriamine pentaacetate group, a (2-hydroxyethyl)ethylenediaminetriacetate group, a bis(2-aminoethyl)ethylene glycol tetraacetate group and a triethylenetriaminehexaacetate group.

Some examples of the aminophosphonic acid chelating group include an aminomethylphosphonate group and nitrilotris(methylphosphonic acid). Some examples of the polyamine chelating group include a polyethyleneimine group, a polyamidoamine dendrimer group and a tetrakis(2-pyridylmethyl)ethylenediamine group.

When the chelating group contains a carboxylic acid or a phosphonic acid, an acidic functional group thereof is preferably in the form of a monovalent salt, such as an alkali metal salt or an ammonium salt, rather than in the form of a proton to facilitate ion-exchange with heavy-metal ions.

Some specific examples of the compound having the chelating functional group include iminodiacetic acid, nitrilotriacetic acid, ethylenediaminetetraacetic acid, N,N-bis(2-hydroxyethyl)glycine, 1,2-diaminocyclohexanetetraacetic acid, diethylenetriaminepentaacetic acid, N-(2-hydroxyethyl)ethylenediaminetriacetic acid, bis(2-aminoethyl)ethylene glycol tetraacetic acid, bis(2-aminophenyl)ethylene glycol tetraacetic acid, N-(2-hydroxyethyl)iminodiacetic acid, tetrakis(2-pyridylmethyl)ethylenediamine, triethylenetetraminehexaacetic acid, aminomethylphosphonic acid, aminoethylphosphonic acid, aminopropylphosphonic acid, nitrilotris(methylphosphonic acid) and salts thereof. These chelate compounds having an amino group may be used alone or in combination.

A binder of the present invention preferably contains a high-molecular-weight hydrogen-ion-form alginic acid and a compound having a chelating group. In such a case, the binder may be a compound produced by reacting the high-molecular-weight hydrogen-ion-form alginic acid with the compound having the chelating group in advance or a composition produced by simply mixing the high-molecular-weight hydrogen-ion-form alginic acid with the compound having the chelating group. When simply mixed, the high-molecular-weight hydrogen-ion-form alginic acid and the compound having the chelating group practically form an ionic bond. For example, since the composition also contains water when an aqueous slurry for forming a lithium-ion battery electrode mixture layer is prepared to produce a lithium-ion battery electrode, the high-molecular-weight hydrogen-ion-form alginic acid and the compound having the chelating group react in the system and form a compound. For example, the following is a compound formation reaction using a hydrogen-ion-form alginic acid and disodium iminodiacetate as a compound having a chelating group.

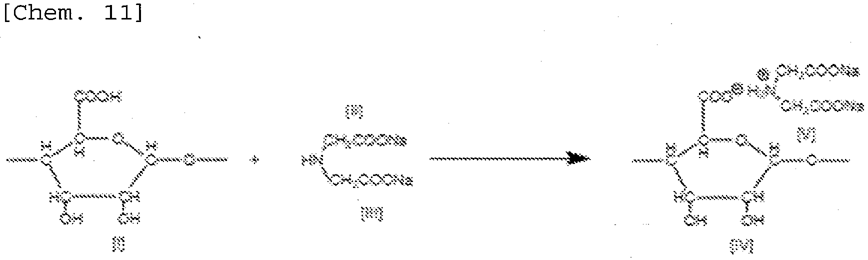

The amount of the chelating group in the compound of the high-molecular-weight hydrogen-ion-form alginic acid and the compound having the chelating group ranges from 0.2 to 6 mmol/g, preferably 0.5 to 5 mmol/g. A chelating group content in this range is preferred due to rapid trapping of heavy-metal ions and a sufficient amount of heavy-metal ions trapped.

The composition preferably contains the compound having the chelating functional group in an amount in the range of 0.1 to 1.1 moles per mole of the carboxy group in the high-molecular-weight hydrogen-ion-form alginic acid.

The lithium-ion battery electrode binder may contain only the compound of the high-molecular-weight hydrogen-ion-form alginic acid and the compound having the chelating group but may also contain another binder component. In the latter case, the amount of the binder composed of the compound is preferably 10% by mass or more. The other binder as a binder for a positive electrode may be a fluoropolymer, such as poly(vinylidene difluoride), a vinylidene fluoride-hexafluoropropylene copolymer, a perfluoromethyl vinyl ether-tetrafluoroethylene copolymer, polytetrafluoroethylene or fluororubber, and as a binder for a negative electrode may be a fluoropolymer, such as poly(vinylidene difluoride), a vinylidene fluoride-hexafluoropropylene copolymer, a perfluoromethyl vinyl ether-tetrafluoroethylene copolymer, polytetrafluoroethylene or fluororubber, a hydrocarbon elastomer, such as a styrene-butadiene copolymer or an ethylene-propylene copolymer, or a polyimide.

Next, the slurry for forming a lithium-ion battery electrode mixture layer according to the seventh aspect of the present invention is described.

The slurry for forming a lithium-ion battery electrode mixture layer according to the seventh aspect of the present invention includes the binder, the active material, the conductive additive and water. The slurry may contain a viscosity modifier, such as carboxymethyl cellulose, or a pH regulator, such as an acid or an alkali, if necessary. The solid concentration of the slurry is preferably, but not limited to, 20% to 80% by mass in consideration of the viscosity of the slurry, the dispersibility of a solid component, the load on a drying process and the like. The ratio of the solid components in the slurry is preferably active material:conductive additive:binder = 70 to 98:1 to 30:1 to 20 in mass ratio. The slurry may be prepared by any method, for example, by a method of mixing, dispersing or dissolving a binder, an active material and a conductive additive together in water, by a method of first dissolving a binder in water, then adding an active material and a conductive additive to the binder aqueous solution and mixing them, or by a method of first mixing an active material and a conductive additive and then mixing it with a binder aqueous solution. Furthermore, the slurry may be prepared with any mixer, such as a mortar, a rolling mill, a ball mill, a screw mill, a vibrating mill, a homogenizer or a planetary mixer.

For an electrode for the positive electrode, the active material used in the seventh aspect of the present invention is a positive-electrode active material. For an electrode for the negative electrode, the active material is a negative-electrode active material.

The positive-electrode active material used in the seventh aspect of the present invention may be any material that can intercalate lithium ions in a primary battery or that can intercalate and/or deintercalate lithium ions in a secondary battery, for example, a transition metal oxide, such as CuO, Cu₂O, MnO₂, MoO₃, V₂O₅, CrO₃, Fe₂O₃, Ni₂O₃ or CoO₃, or a lithium composite oxide, such as Li_{X}CoO₂, Li_{X}NiO₂, Li_{X}MnO₂, Li_{X}Mn₂O₄, LiNi_{X}CO_{(1-X)}O₂, LiNi_{X}Mn_{(2-X)}O₄, LiMnₐNi_{b}Co_{c}O₂ (a + b + c = 1), LiFePO₄ or LiMn_{(1-X)}Fe_{X}PO₄. Among these, MnO₂ is preferred as an active material in a primary battery, and a composite oxide of lithium and at least one transition metal selected from transition metals, such as Co, Ni and Mn, is preferred as an active material in a secondary battery. Specific examples thereof include LiCoO₂, LiNiO₂, LiMnO₂, LiMn₂O₄, LiNi_{X}Co_{(1-X)}O₂, LiNi_{X}Mn_{(2-X)}O₄, LiMnₐNi_{b}Co_{c}O₂ (a + b + c = 1), LiFePO₄ and LiMn_{(1-X)}Fe_{X}PO₄. These lithium composite oxides may be doped with a small amount of an element, such as fluorine, boron, Al, Cr, Zr, Mo or Fe, or the surfaces of particles of the lithium composite oxides may betreated with carbon, MgO, Al₂O₃, SiO₂ or the like.

The negative-electrode active material used in the seventh aspect of the present invention may be any material that can deintercalate lithium ions in a primary battery or that can intercalate and deintercalate lithium ions in a secondary battery, for example, a lithium metal, natural graphite, artificial graphite, graphite, mesocarbon microbeads (MCMB), tin and/or a tin alloy, a tin oxide, silicon and/or a silicon alloy or a silicon oxide. When the negative-electrode active material is an alloy, the negative-electrode active material may contain a material that is alloyed with lithium. The material that is alloyed with lithium is, for example, germanium, tin, lead, zinc, magnesium, sodium, aluminum, gallium, indium or an alloy thereof.

When these active materials are in the form of particles, the average particle size thereof is preferably, but not limited to, 5 µm or more and 20 µm or less. The amount of these active materials preferably ranges from 70% to 98% by mass based on the total amount of the active material, the binder and the conductive additive.

The conductive additive in the electrode may be any electrically conductive material that does not adversely affect battery characteristics. Specific examples thereof include electrically conductive carbons, such as Ketjen black and acetylene black, carbon materials, such as natural graphite, artificial graphite, carbon whisker, carbon nanotube and carbon fiber powders, metal powders and metal fibers of Cu, Fe, Ag, Ni, Pd, Au, Pt, In, W and the like and electrically conductive metal oxides, such as indium oxide and tin oxide. The amount of the conductive additive preferably ranges from 1% to 30% by mass based on the total amount of the active material, the binder and the conductive additive.

Next, the lithium-ion battery electrode according to the seventh aspect of the present invention is described.

The lithium-ion battery electrode according to the seventh aspect of the present invention contains an active material, a conductive additive and the lithium-ion battery electrode binder.

The lithium-ion battery electrode is composed of an electrode mixture layer, which is formed by applying the slurry to a current collector and drying the slurry, and the current collector. The electrode mixture layer composed of the active material, the binder and the conductive additive preferably has a thickness in the range of 10 to 200 um. To form the electrode mixture layer with such a thickness on the current collector, the electrode mixture layer may have a mass per unit area in the range of 4 to 25 mg/cm².

The current collector only needs to be an electric conductor with an electrically conductive surface in contact with the electrode mixture layer, for example, an electric conductor formed of a metal, such as copper, gold, aluminum, titanium, nickel, stainless steel or an alloy thereof, an electrically conductive metal oxide, such as indium oxide or tin oxide, or an electrically conductive material, such as electrically conductive carbon. The current collector may have any shape, such as a foil shape, a film shape, a sheet shape, a net shape, an expanded metal shape, a perforated metal shape or a foam shape. The thickness of the current collector is preferably, but not limited to, approximately 1 to 100 µm.

The lithium-ion battery electrode may be produced by any method and may be produced by applying the slurry to the current collector and drying the slurry. The slurry may be applied by any method, such as slit coating, die coating, roll coating, dip coating, blade coating, knife coating or wire bar coating. The drying method and conditions are not particularly limited, and a typical hot-air circulating dryer, vacuum dryer, infrared dryer or microwave heating dryer can be used. The heating temperature is also not particularly limited, and the heating and drying can be performed in the range of 50°C to 150°C. Furthermore, the electrode can be pressed under pressure during drying or after drying to make the porous structure uniform.

Next, the lithium-ion battery according to the seventh aspect of the present invention is described.

The lithium-ion battery according to the seventh aspect of the present invention includes the lithium-ion battery electrode. A lithium-ion battery of the present invention may be a primary battery or a secondary battery. The lithium-ion battery electrode can be used to provide a high-performance lithium-ion battery with good charge-discharge characteristics and an extended cycle life in the case of a secondary battery. A lithium-ion battery is typically composed of a positive electrode, a negative electrode, a separator, a non-aqueous electrolyte solution and the like and has a laminated cell shape, for example. The positive electrode is produced by binding the positive-electrode active material together with the conductive additive onto a positive-electrode current collector using the binder and has a structure in which a positive-electrode mixture layer composed of the positive-electrode active material, the binder and the conductive additive is formed on the current collector. The negative electrode also has a structure similar to that of the positive electrode and is produced by binding the following negative-electrode active material and the conductive additive onto a negative-electrode current collector using a binder. The separator is typically a porous film made of polyolefin or the like and is interposed between the positive electrode and the negative electrode to perform a shutdown function in case of a thermal runaway of the battery. The non-aqueous electrolyte solution is prepared by dissolving an electrolyte salt, such as LiPF₄, in an organic solvent, such as a cyclic carbonate. The battery is filled with the non-aqueous electrolyte solution, and lithium ions in a secondary battery move from the positive electrode to the negative electrode during charging and move from the negative electrode to the positive electrode during discharging.

The non-aqueous electrolyte solution may be, but is not limited to, a known material. The non-aqueous electrolyte solution is prepared by dissolving an electrolyte salt in an organic solvent, and the electrolyte salt is, for example, CF₃SO₃Li, (CF₃SO₂)₂NLi, (CF₃SO₂)₂CLi, LiBF₄, LiB(C₆H₆)₄, LiPF₄, LiClO₄, LiAsF₆, LiCl or LiBr. The organic solvent for dissolving the electrolyte salt may be ethylene carbonate, vinylene carbonate, propylene carbonate, butylene carbonate, dimethyl carbonate, diethyl carbonate, ethyl methyl carbonate, 1,2-dimethoxyethane, 1,2-diethoxyethane, γ-butyrolactone, tetrahydrofuran, 1,4-dioxane, anisole, diethyl ether, sulfolane, methylsulfolane, acetonitrile, propionitrile, butyronitrile, valeronitrile, benzonitrile, dimethylformamide, dimethyl sulfoxide, trimethyl phosphate or triethyl phosphate. The concentration of the electrolyte salt in the non-aqueous electrolyte solution can range from 0.1 to 5 mol/L, preferably 0.5 to 3 mol/L.

The separator may be, but is not limited to, a known separator. The separator may be a non-woven fabric made of a polyethylene microporous membrane, a polypropylene microporous membrane, a multilayer membrane of a polyethylene microporous membrane and a polypropylene microporous membrane, polyester fiber, aramid fiber, glass fiber or the like.

### EXAMPLES

The present invention will now be further described with examples. However, the present invention is not limited to these examples.

### (Examples of First Aspect of Present Invention)

### (Reference Example 1-1) Production of Sulfated Alginic Acid

3.0 g (17 mmol as a monosaccharide unit) of an H-form alginic acid (manufactured by Kimica Corporation, trade name Kimica Acid G) was added in small portions to 150 ml of dimethyl sulfoxide (hereinafter abbreviated to DMSO) with stirring and was uniformly dispersed. 6.75 g (42.5 mmol) of a sulfur trioxide pyridine complex was then added thereto with stirring, was uniformly dispersed and was heated and reacted at 40°C for 8 hours. The alginic acid dissolved with the progress of the reaction and became a homogeneous solution at the end of the reaction. After completion of the reaction, the reaction liquid was added dropwise to ethanol, and the precipitated product was collected with a glass filter, was washed with ethanol and was dried under reduced pressure at room temperature to isolate the product. The isolated yield was 5.8 g, the sulfur content determined by elemental analysis was 12.5% by mass, and the weight-average molecular weight determined by gel permeation chromatography (GPC) was 85,000. The sulfate group content calculated from the sulfur content was 3.9 mmol/g.

-

### (Example 1-1)

1.0 g (5.7 mmol as a monosaccharide unit) of a hydrogen-ion-form alginic acid (manufactured by Kimica Corporation, trade name Kimica Acid G) was added in small portions to 100 ml of pure water with stirring to prepare a white pasty uniform dispersion liquid. 2.72 g (5.7 mmol) of bis(2-aminoethyl)ethylene glycol tetraacetic acid (manufactured by Tokyo Chemical Industry Co., Ltd., hereinafter abbreviated to BAPTA) and 0.93 g (22.8 mmol) of sodium hydroxide (manufactured by Tokyo Chemical Industry Co., Ltd.) were then dissolved in 20 ml of pure water and were added dropwise to the alginic acid dispersion liquid. The dispersion liquid gradually became transparent with the dropwise addition and, after completion of the dropwise addition, became a transparent viscous brown aqueous solution. The aqueous solution was stirred at room temperature for 1 hour and was then added dropwise to 4 L of acetone to form a precipitate. The precipitate was collected by filtration, was washed with acetone and was then dried under reduced pressure to isolate. The isolated yield was 3.9 g, the nitrogen content determined by elemental analysis was 4.6% by mass, the chelating functional group content calculated from the nitrogen content was 3.3 mmol/g, and the product was readily soluble in water.

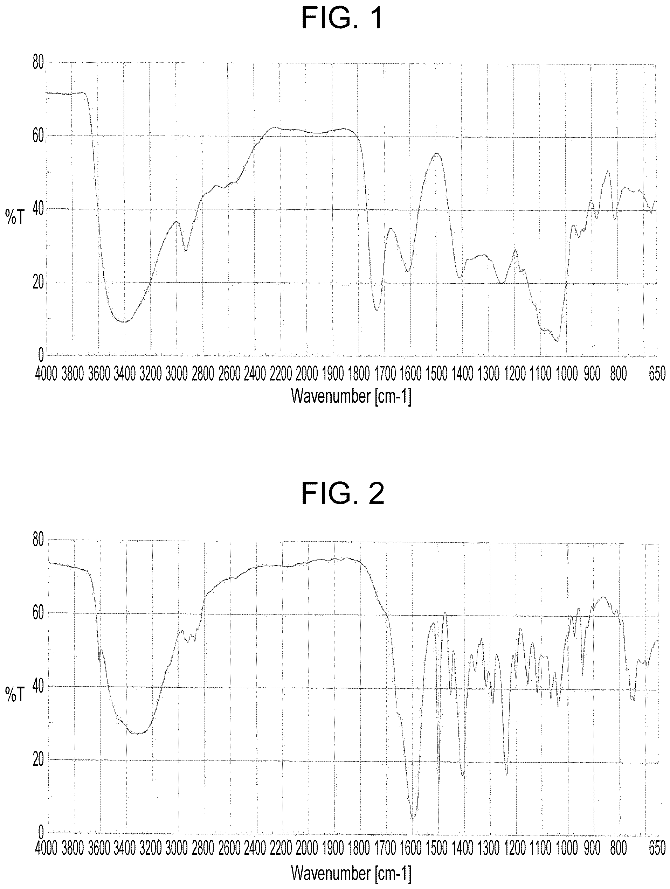

To confirm that the chelating functional group was introduced into the alginic acid, FT-IR spectra before and after the reaction were compared. Figs. 1 and 2 show the results. The hydrogen-ion-form alginic acid before the reaction had absorption at 1740 cm⁻¹ due to stretching vibration of carbonyl of a carboxylic acid, but the absorption at 1740 cm⁻¹ disappeared after the reaction, and new absorption due to stretching vibration of carbonyl of a carboxylate was observed at 1600 cm⁻¹. This shows that the alginic acid was bonded to BAPTA through an ionic bond.

The molecular weight of the chelating polymer was measured by aqueous GPC. The weight-average molecular weight was 350,000.

### <Evaluation of Heavy-Metal Ion Trapping Ability>

The following measurement was performed to evaluate the heavy-metal ion trapping ability of a chelating polymer. 0.1 g of the chelating polymer was dissolved in 20 ml of pure water, and 1.9 g of lithium manganate (produced in-house, crystal structure: spinel, hereinafter abbreviated to LMO) was added thereto to prepare a slurry. The slurry was concentrated with an evaporator and was then dried under reduced pressure at 80°C to remove water and thereby produce a mixture of the chelating polymer and LMO. 1.0 g of the mixture was taken and placed in a Teflon (registered trademark) vessel, was dried under reduced pressure at 120°C for 4 hours and was then sealed. The sealed Teflon (registered trademark) vessel was opened in a glove box, 15 ml of an electrolyte solution (manufactured by Kishida Chemical Co., Ltd., a solution of LiPF₆ dissolved at 1 mol/L in a mixed solvent of ethylene carbonate:dimethyl carbonate = 1:2) was added thereto, and the vessel was sealed again and heated at 85°C for 4 hours. After completion of the heating, the Teflon (registered trademark) vessel was opened in a glove box, and filtration was performed with a syringe filter to collect a filtrate. The filtrate was subjected to acidolysis, and manganese ions were quantified by ICP-MS. The concentration of manganese ions was less than 1 ppm, showing that manganese ions eluted from LMO by heating were trapped by the chelating polymer.

### (Example 1-2)

A chelating polymer was produced in the same manner as in Example 1-1 except that 1.1 g (5.7 mmol) of disodium iminodiacetate monohydrate (manufactured by Fujifilm Wako Pure Chemical Corporation) was used instead of BAPTA and sodium hydroxide. The isolated yield was 1.9 g, the nitrogen content determined by elemental analysis was 3.7% by mass, the chelating functional group content calculated from the nitrogen content was 2.6 mmol/g, and the product was readily soluble in water.

To confirm that the chelating functional group was introduced into the alginic acid, FT-IR spectra before and after the reaction were compared. The hydrogen-ion-form alginic acid before the reaction had absorption at 1740 cm⁻¹ due to stretching vibration of carbonyl of a carboxylic acid, but the absorption at 1740 cm⁻¹ disappeared after the reaction, and new absorption due to stretching vibration of carbonyl of a carboxylate was observed at 1620 cm⁻¹. This shows that the alginic acid was bonded to iminodiacetic acid through an ionic bond.

The molecular weight of the chelating polymer was measured by aqueous GPC. The weight-average molecular weight was 320,000.

### <Evaluation of Heavy-Metal Ion Trapping Ability>

The heavy-metal ion trapping ability of the chelating polymer produced in Example 1-2 was evaluated in the same manner as in Example 1-1. The concentration of manganese ions in the filtrate was less than 1 ppm, showing that manganese ions eluted from LMO by heating were trapped by the chelating polymer.

### (Example 1-3)

A chelating polymer was produced in the same manner as in Example 1-1 except that 2.37 g (5.7 mmol) of tetrasodium ethylenediaminetetraacetate (manufactured by Tokyo Chemical Industry Co., Ltd., hereinafter abbreviated to EDTA) was used instead of BAPTA and sodium hydroxide. The isolated yield was 2.4 g, the nitrogen content determined by elemental analysis was 3.9% by mass, the chelating functional group content calculated from the nitrogen content was 1.4 mmol/g, and the product was readily soluble in water.

To confirm that the chelating functional group was introduced into the alginic acid, FT-IR spectra before and after the reaction were compared. The hydrogen-ion-form alginic acid before the reaction had absorption at 1740 cm⁻¹ due to stretching vibration of carbonyl of a carboxylic acid, but the absorption at 1740 cm⁻¹ disappeared after the reaction, and new absorption due to stretching vibration of carbonyl of a carboxylate was observed at 1600 cm⁻¹. This shows that the alginic acid was bonded to EDTA through an ionic bond.

The molecular weight of the chelating polymer was measured by aqueous GPC. The weight-average molecular weight was 380,000.

### <Evaluation of Heavy-Metal Ion Trapping Ability>

The heavy-metal ion trapping ability of the chelating polymer produced in Example 1-3 was evaluated in the same manner as in Example 1-1. The concentration of manganese ions in the filtrate was less than 1 ppm, showing that manganese ions eluted from LMO by heating were trapped by the chelating polymer.

### (Example 1-4)

A chelating polymer was produced in the same manner as in Example 1-1 except that 0.63 g (5.7 mmol) of aminomethylphosphonic acid (manufactured by Tokyo Chemical Industry Co., Ltd., hereinafter abbreviated to AMP) and 0.46 g (11.4 mmol) of sodium hydroxide (manufactured by Tokyo Chemical Industry Co., Ltd.) were used instead of BAPTA and sodium hydroxide. The isolated yield was 1.7 g, the nitrogen content determined by elemental analysis was 2.8% by mass, the chelating functional group content calculated from the nitrogen content was 2.0 mmol/g, and the product was readily soluble in water.

To confirm that the chelating functional group was introduced into the alginic acid, FT-IR spectra before and after the reaction were compared. The hydrogen-ion-form alginic acid before the reaction had absorption at 1740 cm⁻¹ due to stretching vibration of carbonyl of a carboxylic acid, but the absorption at 1740 cm⁻¹ disappeared after the reaction, and new absorption due to stretching vibration of carbonyl of a carboxylate was observed at 1630 cm⁻¹. This shows that the alginic acid was bonded to AMP through an ionic bond.

The molecular weight of the chelating polymer was measured by aqueous GPC. The weight-average molecular weight was 300,000.

### <Evaluation of Heavy-Metal Ion Trapping Ability>

The heavy-metal ion trapping ability of the chelating polymer produced in Example 1-4 was evaluated in the same manner as in Example 1-1. The concentration of manganese ions in the filtrate was less than 1 ppm, showing that manganese ions eluted from LMO by heating were trapped by the chelating polymer.

### (Example 1-5)

A chelating polymer was produced in the same manner as in Example 1-1 except that 2.6 ml (5.7 mmol) of 50% aqueous solution of nitrilotris(methylphosphonic acid) (manufactured by Tokyo Chemical Industry Co., Ltd., hereinafter abbreviated to NTMP) and 1.37 g (34.2 mmol) of sodium hydroxide (manufactured by Tokyo Chemical Industry Co., Ltd.) were used instead of BAPTA and sodium hydroxide. The isolated yield was 3.3 g, the nitrogen content determined by elemental analysis was 1.8% by mass, the chelating functional group content calculated from the nitrogen content was 1.3 mmol/g, and the product was readily soluble in water.

To confirm that the chelating functional group was introduced into the alginic acid, FT-IR spectra before and after the reaction were compared. The hydrogen-ion-form alginic acid before the reaction had absorption due to stretching vibration of carbonyl of a carboxylic acid at 1740 cm⁻¹, but the absorption at 1740 cm⁻¹ disappeared after the reaction, and new absorption due to stretching vibration of carbonyl of a carboxylate was observed at 1640 cm⁻¹. This shows that the alginic acid was bonded to NTMP through an ionic bond.

The molecular weight of the chelating polymer was measured by aqueous GPC. The weight-average molecular weight was 350,000.

### <Evaluation of Heavy-Metal Ion Trapping Ability>

The heavy-metal ion trapping ability of the chelating polymer produced in Example 1-5 was evaluated in the same manner as in Example 1-1. The concentration of manganese ions in the filtrate was less than 1 ppm, showing that manganese ions eluted from LMO by heating were trapped by the chelating polymer.

### (Example 1-6)

A chelating polymer was produced in the same manner as in Example 1-1 except that 1.5 g (5.7 mmol as a monosaccharide unit) of the sulfated alginic acid produced in Reference Example 1-1 was used instead of the hydrogen-ion-form alginic acid and 2.2 g (11.4 mmol) of disodium iminodiacetate monohydrate (manufactured by Fujifilm Wako Pure Chemical Corporation) was used instead of BAPTA and sodium hydroxide. The isolated yield was 3.0 g, the nitrogen content determined by elemental analysis was 5.4% by mass, the chelating functional group content calculated from the nitrogen content was 3.9 mmol/g, and the product was readily soluble in water.

To confirm that the chelating functional group was introduced into the alginic acid, FT-IR spectra before and after the reaction were compared. The sulfated alginic acid before the reaction had absorption at 1730 cm⁻¹ due to stretching vibration of carbonyl of a carboxylic acid, but the absorption at 1730 cm⁻¹ disappeared after the reaction, and new absorption due to stretching vibration of carbonyl of a carboxylate was observed at 1620 cm⁻¹. This shows that the sulfated alginic acid was bonded to iminodiacetic acid through an ionic bond.

The molecular weight of the chelating polymer was measured by aqueous GPC. The weight-average molecular weight was 88,000.

### <Evaluation of Heavy-Metal Ion Trapping Ability>

The heavy-metal ion trapping ability of the chelating polymer produced in Example 1-6 was evaluated in the same manner as in Example 1-1. The concentration of manganese ions in the filtrate was less than 1 ppm, showing that manganese ions eluted from LMO by heating were trapped by the chelating polymer.

### (Example 1-7)

A chelating polymer was produced in the same manner as in Example 1-1 except that 1.0 g (13.9 mmol as a carboxy group) of poly(acrylic acid) (manufactured by Fujifilm Wako Pure Chemical Corporation, average molecular weight 1,000,000) was used instead of the hydrogen-ion-form alginic acid and 2.7 g (14 mmol) of disodium iminodiacetate monohydrate (manufactured by Fujifilm Wako Pure Chemical Corporation) was used instead of BAPTA and sodium hydroxide. The isolated yield was 2.6 g, the nitrogen content determined by elemental analysis was 6.1% by mass, the chelating functional group content calculated from the nitrogen content was 4.4 mmol/g, and the product was readily soluble in water.

To confirm that the chelating functional group was introduced into the poly(acrylic acid), FT-IR spectra before and after the reaction were compared. The poly(acrylic acid) before the reaction had absorption at 1710 cm⁻¹ due to stretching vibration of carbonyl of a carboxylic acid, but the absorption at 1710 cm⁻¹ disappeared after the reaction, and new absorption due to stretching vibration of carbonyl of a carboxylate was observed at 1570 cm⁻¹. This shows that the poly(acrylic acid) was bonded to iminodiacetic acid through an ionic bond.

The molecular weight of the chelating polymer was measured by aqueous GPC. The weight-average molecular weight was 340,000.

### <Evaluation of Heavy-Metal Ion Trapping Ability>

The heavy-metal ion trapping ability of the chelating polymer produced in Example 1-7 was evaluated in the same manner as in Example 1-1. The concentration of manganese ions in the filtrate was less than 1 ppm, showing that manganese ions eluted from LMO by heating were trapped by the chelating polymer.

### (Example 1-8)

300 ml of n-decane (manufactured by Fujifilm Wako Pure Chemical Corporation) was charged into a 1-L separable flask equipped with a Fullzone impeller blade, 37.1 g of sorbitan monooleate (manufactured by Fujifilm Wako Pure Chemical Corporation) was added thereto and dissolved with stirring, and the system was cooled to 5°C. 60 g (341 mmol as a monosaccharide unit) of a hydrogen-ion-form alginic acid (manufactured by Kimica Corporation, trade name Kimica Acid SA) was then added in small portions with stirring to prepare a light brown uniform dispersion liquid. On the other hand, 79.0 g (375 mmol) of disodium iminodiacetate hydrate (manufactured by Tokyo Chemical Industry Co., Ltd.) was dissolved in 220 ml of pure water and was slowly added dropwise to the alginic acid dispersion liquid over 1 hour. The dispersion liquid formed a w/o emulsion with the dropwise addition and became a light brown cream at the end of the dropwise addition, The aqueous solution was stirred at 5°C for 1 hour and was then added dropwise to 4 L of acetone to form a precipitate. The precipitate was collected by filtration, was washed with acetone and was then dried under reduced pressure to isolate. The isolated yield was 130.2 g, the nitrogen content determined by elemental analysis was 4.2% by mass, the chelating functional group content calculated from the nitrogen content was 3.0 mmol/g, and the product was readily soluble in water.

To confirm that the chelating functional group was introduced into the alginic acid, FT-IR spectra before and after the reaction were compared. The hydrogen-ion-form alginic acid before the reaction had absorption at 1740 cm⁻¹ due to stretching vibration of carbonyl of a carboxylic acid, but the absorption at 1740 cm⁻¹ disappeared after the reaction, and new absorption due to stretching vibration of carbonyl of a carboxylate was observed at 1620 cm⁻¹. This shows that the alginic acid was bonded to disodium iminodiacetate through an ionic bond.

The molecular weight of the chelating polymer was measured by aqueous GPC. The weight-average molecular weight was 160,000.

### <Evaluation of Heavy-Metal Ion Trapping Ability>

The heavy-metal ion trapping ability of the chelating polymer produced in Example 1-8 was evaluated in the same manner as in Example 1-1. The concentration of manganese ions in the filtrate was less than 1 ppm, showing that manganese ions eluted from LMO by heating were trapped by the chelating polymer.

### (Example 1-9)

A chelating polymer was produced in the same manner as in Example 1-8 except that 300 ml of soybean oil (manufactured by Fujifilm Wako Pure Chemical Corporation) was used instead of n-decane and sorbitan monooleate was not used. The isolated yield was 138.4 g, the nitrogen content determined by elemental analysis was 3.3% by mass, the chelating functional group content calculated from the nitrogen content was 2.4 mmol/g, and the product was readily soluble in water.

To confirm that the chelating functional group was introduced into the alginic acid, FT-IR spectra before and after the reaction were compared. The hydrogen-ion-form alginic acid before the reaction had absorption at 1740 cm⁻¹ due to stretching vibration of carbonyl of a carboxylic acid, but the absorption at 1740 cm⁻¹ disappeared after the reaction, and new absorption due to stretching vibration of carbonyl of a carboxylate was observed at 1620 cm⁻¹. This shows that the alginic acid was bonded to disodium iminodiacetate through an ionic bond.

The molecular weight of the chelating polymer was measured by aqueous GPC. The weight-average molecular weight was 160,000.

### <Evaluation of Heavy-Metal Ion Trapping Ability>

The heavy-metal ion trapping ability of the chelating polymer produced in Example 1-9 was evaluated in the same manner as in Example 1-1. The concentration of manganese ions in the filtrate was less than 1 ppm, showing that manganese ions eluted from LMO by heating were trapped by the chelating polymer.

### (Example 1-10)

A chelating polymer was produced in the same manner as in Example 1-8 except that the addition amount of the hydrogen-ion-form alginic acid was 30 g (171 mmol as a monosaccharide unit) and 71.1 g (171 mmol) of tetrasodium ethylenediaminetetraacetate dihydrate (manufactured by Tokyo Chemical Industry Co., Ltd.) was used instead of disodium iminodiacetate. The isolated yield was 95.0 g, the nitrogen content determined by elemental analysis was 5.0% by mass, the chelating functional group content calculated from the nitrogen content was 3.5 mmol/g, and the product was readily soluble in water.

To confirm that the chelating functional group was introduced into the alginic acid, FT-IR spectra before and after the reaction were compared. The hydrogen-ion-form alginic acid before the reaction had absorption at 1740 cm⁻¹ due to stretching vibration of carbonyl of a carboxylic acid, but the absorption at 1740 cm⁻¹ disappeared after the reaction, and new absorption due to stretching vibration of carbonyl of a carboxylate was observed at 1600 cm⁻¹. This shows that the alginic acid was bonded to EDTA through an ionic bond.

The molecular weight of the chelating polymer was measured by aqueous GPC. The weight-average molecular weight was 180,000.

### <Evaluation of Heavy-Metal Ion Trapping Ability>

The heavy-metal ion trapping ability of the chelating polymer produced in Example 1-10 was evaluated in the same manner as in Example 1-1. The concentration of manganese ions in the filtrate was less than 1 ppm, showing that manganese ions eluted from LMO by heating were trapped by the chelating polymer.

### (Example 1-11)

A chelating polymer was produced in the same manner as in Example 1-8 except that the addition amount of the hydrogen-ion-form alginic acid was 30 g (171 mmol as a monosaccharide unit), 300 ml of hexadecane (manufactured by Fujifilm Wako Pure Chemical Corporation) was used instead of n-decane, 100.5 g (171 mmol) of a 50% aqueous solution of NTMP (manufactured by Tokyo Chemical Industry Co., Ltd.) and 109.0 g (1363 mmol) of 50% aqueous sodium hydroxide (manufactured by Fujifilm Wako Pure Chemical Corporation) were used instead of the disodium iminodiacetate aqueous solution, and the reaction temperature was 20°C. The isolated yield was 118.3 g, the nitrogen content determined by elemental analysis was 2.3% by mass, the chelating functional group content calculated from the nitrogen content was 1.6 mmol/g, and the product was readily soluble in water.

To confirm that the chelating functional group was introduced into the alginic acid, FT-IR spectra before and after the reaction were compared. The hydrogen-ion-form alginic acid before the reaction had absorption at 1740 cm⁻¹ due to stretching vibration of carbonyl of a carboxylic acid, but the absorption at 1740 cm⁻¹ disappeared after the reaction, and new absorption due to stretching vibration of carbonyl of a carboxylate was observed at 1640 cm⁻¹. This shows that the alginic acid was bonded to NTMP through an ionic bond.

The molecular weight of the chelating polymer was measured by aqueous GPC. The weight-average molecular weight was 180,000.

### <Evaluation of Heavy-Metal Ion Trapping Ability>

The heavy-metal ion trapping ability of the chelating polymer produced in Example 1-11 was evaluated in the same manner as in Example 1-1. The concentration of manganese ions in the filtrate was less than 1 ppm, showing that manganese ions eluted from LMO by heating were trapped by the chelating polymer.

### (Comparative Example 1-1)

### <Evaluation of Heavy-Metal Ion Trapping Ability>

The elution behavior of manganese ions was evaluated using only LMO without using a chelating polymer under the same conditions as in Example 1-1. The concentration of manganese ions in the filtrate was 15 ppm, which was higher than those in Examples.

### (Comparative Example 1-2)

A chelating polymer was produced in the same manner as in Example 1-1 except that 1.0 g (5.0 mmol as a monosaccharide unit) of sodium alginate (manufactured by Kimica Corporation, trade name Algitex LL) was used instead of the hydrogen-ion-form alginic acid and 1.5 g (11.4 mmol) of iminodiacetic acid (manufactured by Tokyo Chemical Industry Co., Ltd.) was used instead of BAPTA and sodium hydroxide. The isolated yield was 2.0 g, the nitrogen content determined by elemental analysis was 2.9% by mass, and the chelating functional group content calculated from the nitrogen content was 2.1 mmol/g, which was lower than those in Examples. It is thought that the anionic polymer used was a sodium salt and therefore could not form an ionic bond with the chelate compound, so that the chelating functional group content of the product was reduced. The weight-average molecular weight measured by GPC was 300,000.

### <Evaluation of Heavy-Metal Ion Trapping Ability>

The heavy-metal ion trapping ability of the product in Comparative Example 1-2 was evaluated in the same manner as in Example 1-1. The concentration of manganese ions in the filtrate was 12 ppm, which was higher than those in Examples, showing that the product in Comparative Example 1-2 had lower manganese ion trapping ability than the chelating polymers of Examples.

### (Comparative Example 1-3)

### <Evaluation of Heavy-Metal Ion Trapping Ability>

The heavy-metal ion trapping ability of the sodium alginate used in Comparative Example 1-2 alone was evaluated in the same manner as in Example 1-1. The concentration of manganese ions in the filtrate was 14 ppm, which was higher than those in Examples. This shows that the manganese ion trapping ability of the sodium alginate alone is lower than that of the chelating polymers of Examples.

### (Comparative Example 1-4)

### <Evaluation of Heavy-Metal Ion Trapping Ability>

The heavy-metal ion trapping ability of the sulfated alginic acid produced in Reference Example 1-1 alone was evaluated in the same manner as in Example 1-1. The concentration of manganese ions in the filtrate was 11 ppm, which was higher than those in Examples. This shows that the manganese ion trapping ability of the sulfated alginic acid alone is lower than that of the chelating polymers of Examples.

### (Examples of Second Aspect of Present Invention)

### (Example 2-1)

### <Production of Chelating Polymer (I)>

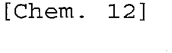

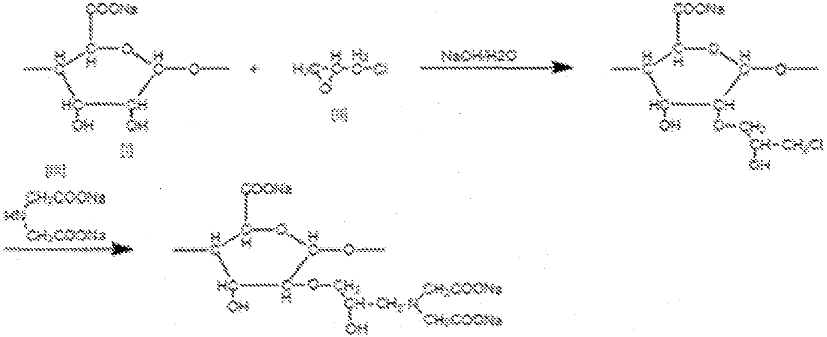

0.50 g (2.5 mmol as a monosaccharide unit) of sodium alginate (manufactured by Qingdao Gather Great Ocean Algae Industry Group Co., Ltd., weight-average molecular weight 1,300,000) was added in small portions to 50 ml of pure water with stirring to prepare a viscous homogeneous solution. 0.10 g (2.5 mmol) of sodium hydroxide (manufactured by Tokyo Chemical Industry Co., Ltd.) was then added thereto and was dissolved, and 3.10 g (50 mmol) of epichlorohydrin (manufactured by Tokyo Chemical Industry Co., Ltd.) was then added thereto and was reacted at 20°C for 6 hours. The solution after the reaction was added dropwise to 2 L of ethanol to form a precipitate, and the precipitate was collected by filtration, was washed with ethanol and was dried under reduced pressure to isolate. The isolated yield was 0.43 g, and the product was readily soluble in water. 0.30 g of the reaction product was weighed and dissolved in 100 ml of pure water. 8.4 g (43 mmol) of disodium iminodiacetate monohydrate (manufactured by Fujifilm Wako Pure Chemical Corporation) was then added thereto, was dissolved and was reacted at 80°C for 2 hours. The aqueous solution after the reaction was purified with an ultrafiltration membrane (manufactured by Nihon Pall Ltd., molecular weight cut-off 1000) to remove an excess amount of iminodiacetic acid. The aqueous solution after the purification was added dropwise to acetone to precipitate a polymer, and the polymer was filtered, collected and dried under reduced pressure to isolate. The isolated yield was 0.33 g, the product was soluble in water, and the weight-average molecular weight measured by aqueous GPC was 370,000. The nitrogen content was 2.2% by weight, and the iminodiacetate group content calculated from the nitrogen content was 1.6 mmol/g.

### <Evaluation of Heavy-Metal Ion Trapping Ability>

The following measurement was performed to evaluate the heavy-metal ion trapping ability of a chelating polymer. 0.1 g of the chelating polymer was dissolved in 20 ml of pure water, and 1.9 g of lithium manganate (produced in-house, hereinafter abbreviated to LMO) was added thereto to prepare a slurry. The slurry was concentrated with an evaporator and was then dried under reduced pressure at 80°C to remove water and thereby produce a mixture of the chelating polymer and LMO. 1.0 g of the mixture was taken and placed in a Teflon (registered trademark) vessel, was dried under reduced pressure at 120°C for 4 hours and was then sealed. The sealed Teflon (registered trademark) vessel was opened in a glove box, 15 ml of an electrolyte solution (manufactured by Kishida Chemical Co., Ltd., a solution of LiPF₆ dissolved at 1 mol/L in a mixed solvent of ethylene carbonate:dimethyl carbonate = 1:2) was added thereto, and the vessel was sealed again and heated at 85°C for 4 hours. After completion of the heating, the Teflon (registered trademark) vessel was opened in a glove box, and filtration was performed with a syringe filter to collect a filtrate. The filtrate was subjected to acidolysis, and manganese ions were quantified by ICP-MS. The concentration of manganese ions was less than 1 ppm, showing that manganese ions eluted from LMO by heating were trapped by the chelating polymer.

### (Example 2-2)

### <Production of Chelating Polymer (II)>

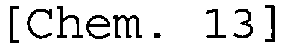

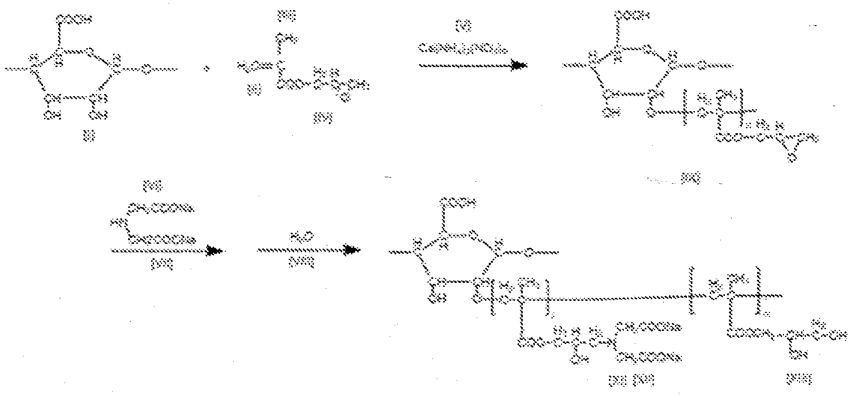

2.25 g (12.7 mmol as a monosaccharide unit) of a hydrogen-ion-form alginic acid (manufactured by Kimica Corporation, Kimica Acid G) was added in small portions to 150 ml of pure water with stirring to prepare a white dispersion liquid. 4.86 g (34.2 mmol) of glycidyl methacrylate (manufactured by Tokyo Chemical Industry Co., Ltd.) was then added thereto and was uniformly dispersed, and 0.16 g (0.3 mmol) of cerium (IV) ammonium nitrate (manufactured by Sigma-Aldrich Corporation) was then added thereto and was polymerized at 55°C for 5 hours. The solution after the polymerization was added dropwise to 2 L of methanol to form a precipitate, and the precipitate was collected by filtration, was washed with methanol and was dried under reduced pressure to isolate. The isolated yield was 7.15 g, and the percentage yield was 100% by weight. 2.25 g of the graft polymer thus produced was dispersed in 40 ml of a dioxane/water (4/6) mixed solvent, and 16.8 g (86 mmol) of a disodium iminodiacetate monohydrate (manufactured by Fujifilm Wako Pure Chemical Corporation) was added thereto, which was followed by heating to 80°C and a reaction for 6 hours. After completion of the reaction, dioxane was removed by evaporation, pure water was added thereto for dilution in a volumetric flask to 250 ml, the pH was adjusted to 3, and stirring was continued at room temperature for 48 hours. At the end of the reaction, the polymer was insoluble in water and was collected by filtration, was washed with water and methanol in this order and was dried under reduced pressure. The yield was 3.1 g, and the chelating functional group content calculated from the nitrogen content was 2.2 mmol/g. A comparison of IR spectra before and after the reaction showed that the reaction with disodium iminodiacetate decreased the absorption of the epoxy group at 1260 cm⁻¹ and increased the carbonyl absorption of disodium iminodiacetate at 1600 cm⁻¹, indicating the progress of the reaction.

### <Evaluation of Heavy-Metal Ion Trapping Ability>

Instead of 0.1 g of the chelating polymer produced in Example 2-1, the heavy-metal ion trapping ability of 0.1 g of a ground chelating polymer (D50 = 2.9 µm) produced in Example 2-2 was evaluated in the same manner as in Example 2-1. The concentration of manganese ions in the filtrate was less than 1 ppm, showing that manganese ions eluted from LMO by heating were trapped by the chelating polymer.

### (Example 2-3)

### <Production of Chelating Polymer (I)>

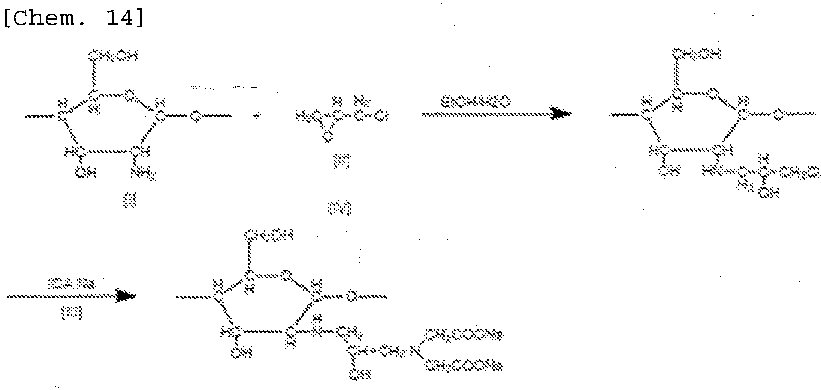

5.0 g (22 mmol as a monosaccharide unit) of chitosan (manufactured by Sigma-Aldrich Corporation, weight-average molecular weight 350,000) was added in small portions to a mixed solvent of 50 ml of pure water and 50 ml of ethanol with stirring to prepare a dispersion liquid. 10.0 g (164 mmol) of epichlorohydrin (manufactured by Tokyo Chemical Industry Co., Ltd.) was then added thereto, and the mixture was heated and reacted under reflux for 2 hours. After the reaction, the dispersion liquid was added dropwise to 2 L of ethanol and was stirred, and the precipitate was then collected by filtration, was washed with ethanol and was dried under reduced pressure. The isolated yield was 6.2 g. 0.8 g of the reaction product was weighed and dispersed in 100 ml of pure water. 16.8 g (86 mmol) of disodium iminodiacetate monohydrate (manufactured by Fujifilm Wako Pure Chemical Corporation) was then added thereto and was reacted at 80°C for 6 hours. The dispersion liquid after the reaction was filtered, was washed with pure water and was then dried under reduced pressure for isolation. The isolated yield was 0.9 g, the product was insoluble in water, the nitrogen content was 6.1% by weight, and the iminodiacetate group content calculated from the nitrogen content was 4.4 mmol/g.

### <Evaluation of Heavy-Metal Ion Trapping Ability>

The heavy-metal ion trapping ability was evaluated in the same manner as in Example 2-1 except that 0.1 g of the ground chelating polymer (D50 = 3.6 µm) produced in Example 2-3 and 0.1 g of sodium alginate (manufactured by Qingdao Gather Great Ocean Algae Industry Group Co., Ltd., weight-average molecular weight 1,300,000) were used instead of 0.1 g of the chelating polymer produced in Example 2-1 and the LMO addition amount was changed from 1.9 g to 1.8 g. The concentration of manganese ions in the filtrate was less than 1 ppm, showing that manganese ions eluted from LMO by heating were trapped by the chelating polymer.

### (Example 2-4)

### <Production of Chelating Polymer (I)>

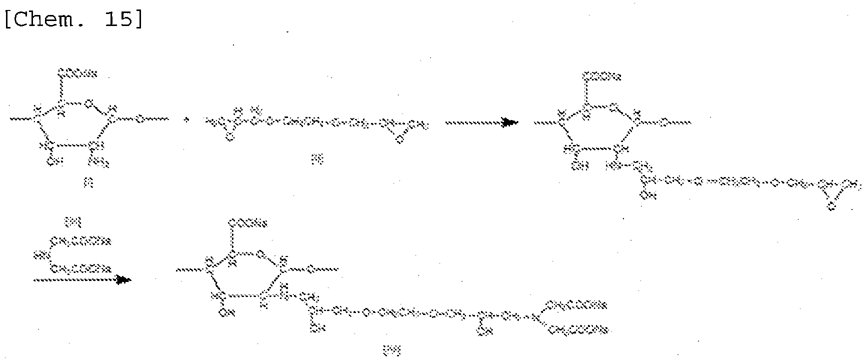

The same operation and reaction as in Example 2-3 were performed except that 28.6 g (164 mmol) of ethylene glycol diglycidyl ether (manufactured by Tokyo Chemical Industry Co., Ltd.) was used instead of epichlorohydrin. The yield of the resulting epoxy-modified chitosan was 8.0 g. 0.8 g of the epoxy-modified chitosan was reacted with sodium iminodiacetate in the same manner as in Example 2-3. The isolated yield was 0.9 g, the product was insoluble in water, the nitrogen content was 2.8% by weight, and the iminodiacetate group content calculated from the nitrogen content was 2.2 mmol/g. The nitrogen content determined by elemental analysis was 2.8% by mass, the chelating functional group content calculated from the nitrogen content was 2.0 mmol/g, and the product was insoluble in water.

### <Evaluation of Heavy-Metal Ion Trapping Ability>

The heavy-metal ion trapping ability was evaluated in the same manner as in Example 2-3 except that 0.1 g of the ground chelating polymer (D50 = 5.6 µm) produced in Example 2-4 was used instead of the ground chelating polymer produced in Example 2-3. The concentration of manganese ions in the filtrate was 3 ppm, showing that manganese ions eluted from LMO by heating were trapped by the chelating polymer.

### (Comparative Example 2-1)

### <Evaluation of Heavy-Metal Ion Trapping Ability>

The elution behavior of manganese ions was evaluated using only LMO without using a chelating polymer under the same conditions as in Example 2-1. The concentration of manganese ions in the filtrate was 15 ppm, which was higher than those in Examples.

### (Comparative Example 2-2)

### <Evaluation of Heavy-Metal Ion Trapping Ability>

The elution behavior of manganese ions was evaluated in the same manner as in Example 2-1 except that 0.1 g of sodium alginate (manufactured by Qingdao Gather Great Ocean Algae Industry Group Co., Ltd., weight-average molecular weight 1,300,000) was used instead of the chelating polymer produced in Example 2-1. The concentration of manganese ions in the filtrate was 14 ppm, which was higher than those in Examples.

### (Examples of Third Aspect of Present Invention)

### <Production of Water-Insoluble Polymer Fine Particles Having Chelating Group>

### (Reference Example 3-1) Introduction of Chelating Group into Alginic Acid Graft Polymer and Grinding Thereof

2.25 g (12.7 mmol as a monosaccharide unit) of an acid-form alginic acid (manufactured by Kimica Corporation, trade name Kimica Acid G) was added in small portions to 150 ml of pure water with stirring and was uniformly dispersed. 4.86 g (34.2 mmol) of glycidyl methacrylate (manufactured by Tokyo Chemical Industry Co., Ltd.) was then added thereto with stirring, and the stirring was continued overnight in a nitrogen stream. 0.162 g (0.297 mmol) of cerium (IV) ammonium nitrate (manufactured by Sigma-Aldrich Corporation) was then dissolved in 7.5 ml of 1 mol/L nitric acid (manufactured by Fujifilm Wako Pure Chemical Corporation) and was added to the aqueous dispersion using a syringe. After the addition, the system was heated for polymerization at 55°C for 5 hours. After completion of the polymerization, the resulting emulsion was added dropwise to methanol, and the precipitated product was collected with a glass filter, was washed with methanol and was then dried under reduced pressure at 40°C to isolate a graft polymer. The yield was 7.15 g, and the percentage yield was 100%. 6.0 g of the graft polymer was then dispersed in a mixed solvent of 180 ml of pure water and 120 ml of dioxane, and 50.4 g (258 mmol) of disodium iminodiacetate monohydrate (manufactured by Fujifilm Wako Pure Chemical Corporation) was added thereto and was heated for reaction at 80°C for 6 hours. After completion of the reaction, dioxane was removed from the dispersion liquid by evaporation, 300 ml of pure water was added thereto, the pH was adjusted to 3 with sulfuric acid, and stirring was continued at room temperature for 48 hours. After completion of the stirring, lithium hydroxide (manufactured by Fujifilm Wako Pure Chemical Corporation) was added thereto to adjust the pH to 7, and the dispersion liquid was filtered to recover a solid. The recovered solid was washed with ethanol and was dried under reduced pressure to isolate. The yield was 9.3 g, and the amount of iminodiacetate group introduced calculated from the nitrogen content was 2.2 mmol/g. The resulting alginic acid graft polymer having the introduced iminodiacetate group was ground using a jet mill (Nano Jetmizer NJ-50C manufactured by Aishin Nano Technologies Co., Ltd.). The median size after grinding was 2.9 µm.

### (Reference Example 3-2) Introduction of Chelating Group into Chitosan and Grinding Thereof

5.0 g of chitosan (manufactured by Sigma-Aldrich Corporation, deacetylation degree 75% or more, molecular weight 300,000) was dispersed in a mixed solvent of 50 ml of pure water and 50 ml of ethanol, and 10.0 g (164 mmol) of epichlorohydrin (manufactured by Fujifilm Wako Pure Chemical Corporation) was added thereto, was heated and was reacted under reflux for 2 hours. The resulting emulsion was added dropwise to ethanol, and the precipitate was collected, was washed with ethanol and was then dried under reduced pressure. The yield of the product was 6.2 g, and the percentage yield was 89%. 4.8 g of the product was taken and dispersed in 600 ml of pure water. 100.8 g (516 mmol) of disodium iminodiacetate monohydrate (manufactured by Fujifilm Wako Pure Chemical Corporation) was added thereto and was heated and reacted at 80°C for 6 hours. After completion of the reaction, the solid was collected by filtration, was washed with pure water and was then dried under reduced pressure to isolate. The yield was 5.5 g, and the amount of iminodiacetate group introduced calculated from the nitrogen content was 4.4 mmol/g. The resulting chitosan having the introduced iminodiacetate group was ground using a jet mill (Nano Jetmizer NJ-50C manufactured by Aishin Nano Technologies Co., Ltd.). The median size after grinding was 4.8 µm.

### (Reference Example 3-3) Grinding of Cellulose Having Iminodiacetate Group Introduced

Chelest fiber IRY-HW (manufactured by Chelest Corporation), which is a cellulose having an iminodiacetate group introduced, was dried under reduced pressure, and the nitrogen content was then measured to calculate the amount of iminodiacetate group introduced. The amount of iminodiacetate group introduced was 2.1 mmol/g. The resulting cellulose having the introduced iminodiacetate group was ground using a jet mill (Nano Jetmizer NJ-50C manufactured by Aishin Nano Technologies Co., Ltd.). The median size after grinding was 2.1 µm.

### <Production of Organic-Solvent-Insoluble Polymer Fine Particles Having Chelating Group>

### (Reference Example 3-4) Production of Sodium Alginate Having Chelating Group Introduced and Grinding Thereof

10.0 g (50 mmol as a monosaccharide unit) of sodium alginate (manufactured by Qingdao Gather Great Ocean Algae Industry Group Co., Ltd., weight-average molecular weight 1,300,000) was added in small portions to 1000 ml of pure water with stirring to prepare a viscous homogeneous solution. 2.0 g (50 mmol) of sodium hydroxide (manufactured by Tokyo Chemical Industry Co., Ltd.) was then added thereto and was dissolved, and 62.0 g (1.0 mol) of epichlorohydrin (manufactured by Tokyo Chemical Industry Co., Ltd.) was then added thereto and was reacted at 20°C for 6 hours. The solution after the reaction was added dropwise to 4 L of ethanol to form a precipitate, and the precipitate was collected by filtration, was washed with ethanol and was dried under reduced pressure to isolate. The isolated yield was 8.6 g, and the product was readily soluble in water. 6.0 g of the reaction product was weighed and dissolved in 600 ml of pure water. 168 g (860 mmol) of disodium iminodiacetate monohydrate (manufactured by Fujifilm Wako Pure Chemical Corporation) was then added thereto, was dissolved and was reacted at 80°C for 2 hours. The aqueous solution after the reaction was purified with an ultrafiltration membrane (manufactured by Nihon Pall Ltd., molecular weight cut-off 1000) to remove an excess amount of disodium iminodiacetate. The aqueous solution after the purification was added dropwise to acetone to precipitate a polymer, and the polymer was filtered, collected and dried under reduced pressure to isolate. The isolated yield was 6.6 g, the product was soluble in water, and the weight-average molecular weight measured by aqueous GPC was 370,000. The nitrogen content was 2.2% by weight, and the iminodiacetate group content calculated from the nitrogen content was 1.6 mmol/g. The resulting sodium alginate having the introduced iminodiacetate group was ground using a jet mill (Nano Jetmizer NJ-50C manufactured by Aishin Nano Technologies Co., Ltd.). The median size after grinding was 4.2 µm.

### (Reference Example 3-5) Production of Sodium Alginate/Disodium Iminodiacetate Mixture and Grinding Thereof

10 g (50 mmol as a monosaccharide unit) of sodium alginate (manufactured by Kimica Corporation, trade name Algitex L) was added in small portions to 500 ml of pure water with stirring to prepare a viscous homogeneous solution. 9.8 g (50 mmol) of disodium iminodiacetate monohydrate (manufactured by Fujifilm Wako Pure Chemical Corporation) was then added to and dissolved in the sodium alginate aqueous solution to prepare a homogeneous solution. The aqueous solution was stirred at room temperature for 1 hour and was then added dropwise to 4 L of acetone to form a precipitate. The precipitate was collected by filtration, was washed with acetone and was then dried under reduced pressure to isolate. The isolated yield was 17.5 g, the nitrogen content determined by elemental analysis was 4.1% by mass, the chelating functional group content calculated from the nitrogen content was 2.9 mmol/g, and the product was readily soluble in water. The resulting sodium alginate/disodium iminodiacetate mixture was ground using a jet mill (Nano Jetmizer NJ-50C manufactured by Aishin Nano Technologies Co., Ltd.). The median size after grinding was 3.7 µm.

### <Production of Laminated Cell>

### (Example 3-1)

A positive electrode slurry was prepared from the following materials to produce a positive electrode.
Positive-electrode active material: lithium manganate (LMO: produced in-house, LiMn₂O₄) 91 parts by mass
Conductive additive: acetylene black (AB: Li-400 manufactured by Denka Company Limited) 3 parts by mass
Water-insoluble polymer fine particles having a chelating group: alginic acid graft polymer having the introduced iminodiacetate group (Reference Example 3-1) 3 parts by mass
Binder: sodium alginate (Algitex L manufactured by Kimica Corporation) 3 parts by mass

3 parts by mass of sodium alginate was dissolved in water to prepare an aqueous solution. 91 parts by mass of LMO, 3 parts by mass of AB and the alginic acid graft polymer having the introduced iminodiacetate group produced in Reference Example 3-1 were added to the aqueous solution and, while water was added thereto, were stirred with a planetary mixer to prepare a positive electrode slurry. The slurry was applied to an aluminum foil with a film applicator, was dried under nitrogen at 80°C at atmospheric pressure for 24 hours, was further dried under reduced pressure at 120°C for 4 hours and was roll-pressed to produce a positive electrode. The basis weight was 1.45 mAh/cm².

Next, a negative electrode slurry was prepared from the following materials to produce a negative electrode.
Negative-electrode active material: massive artificial graphite (Gr: MAG-D manufactured by Showa Denko Materials Co., Ltd.) 95 parts by mass
Binder: poly(vinylidene difluoride) (PVDF: Solef 5130 manufactured by Solvay) 5 parts by mass

5 parts by mass of the PVDF was dissolved in N-methyl-2-pyrrolidone (NMP), and 95 parts by mass of Gr was added to the solution and, while NMP was added thereto, was stirred with a planetary mixer to prepare a negative electrode slurry. The slurry was applied to a copper foil with a film applicator, was dried under nitrogen at 80°C at atmospheric pressure for 24 hours, was further dried under reduced pressure at 150°C for 4 hours and was roll-pressed to produce a negative electrode. The basis weight was 1.74 mAh/cm², and the AC ratio was 1.20.

The positive electrode and the negative electrode thus produced were used to produce a laminated cell as described below. That is, vinylene carbonate was added at 1% by mass to an ethylene carbonate/diethyl carbonate (1/1) mixed solvent, and lithium hexafluorophosphate was dissolved therein at 1 mol/L to prepare an electrolyte solution. A polyethylene microporous membrane having one side coated with alumina (manufactured by Senior) was used as a separator. The positive electrode and the negative electrode were then disposed and stacked on both sides of the separator, and an electrolyte solution was injected to produce a laminated cell.

### (Example 3-2)

A positive electrode slurry was prepared from the following materials to produce a positive electrode in the same manner as in Example 3-1.
Positive-electrode active material: lithium manganate (LMO: produced in-house, LiMn₂O₄) 94 parts by mass
Conductive additive: acetylene black (AB: Li-400 manufactured by Denka Company Limited) 3 parts by mass
Binder: sodium alginate (Algitex L manufactured by Kimica Corporation) 3 parts by mass

The basis weight was 1.50 mAh/cm².

Next, a negative electrode slurry was prepared from the following materials to produce a negative electrode.
Negative-electrode active material: massive artificial graphite(Gr: MAG-D manufactured by Showa Denko Materials Co., Ltd.) 94 parts by mass
Water-insoluble polymer fine particles having a chelating group: alginic acid graft polymer having the introduced iminodiacetate group (Reference Example 3-1) 3 parts by mass
Binder: sodium alginate (Algitex L manufactured by Kimica Corporation) 1.5 parts by mass
Binder: styrene-butadiene rubber (SBR: TRD2001 manufactured by JSR) 1.5 parts by mass

1.5 parts by mass of the sodium alginate was dissolved in water to prepare an aqueous solution. 94 parts by mass of Gr, 3 parts by mass of the alginic acid graft polymer having the introduced iminodiacetate group produced in Reference Example 3-1 and 1.5 parts by mass of SBR were added to the aqueous solution and, while water was added thereto, were stirred with a planetary mixer to prepare a negative electrode slurry. The slurry was used to produce a negative electrode in the same manner as in Example 3-1. The basis weight was 1.80 mAh/cm², and the AC ratio was 1.20. The positive electrode and the negative electrode thus produced were used to produce a laminated cell in the same manner as in Example 3-1.

### (Example 3-3)

A positive electrode and a negative electrode were produced in the same manner as in Example 3-2 except that the chitosan having the introduced iminodiacetate group produced in Reference Example 3-2 was added to the negative electrode instead of the alginic acid graft polymer having the introduced iminodiacetate group produced in Reference Example 3-1. The basis weight of the positive electrode was 1.50 mAh/cm², the basis weight of the negative electrode was 1.80 mAh/cm², and the AC ratio was 1.20. The positive electrode and the negative electrode thus produced were used to produce a laminated cell in the same manner as in Example 3-1.

### (Example 3-4)

A positive electrode and a negative electrode were produced in the same manner as in Example 3-1 except that the cellulose having the introduced iminodiacetate group produced in Reference Example 3-3 was added to the positive electrode instead of the alginic acid graft polymer having the introduced iminodiacetate group produced in Reference Example 3-1. The basis weight of the positive electrode was 1.48 mAh/cm², the basis weight of the negative electrode was 1.74 mAh/cm², and the AC ratio was 1.18. The positive electrode and the negative electrode thus produced were used to produce a laminated cell in the same manner as in Example 3-1.

### (Example 3-5)

The positive electrode produced in Example 3-1 and the negative electrode produced in Example 3-2 were used to produce a laminated cell in the same manner as in Example 3-1. The basis weight of the positive electrode was 1.45 mAh/cm², the basis weight of the negative electrode was 1.80 mAh/cm², and the AC ratio was 1.24. The positive electrode and the negative electrode thus produced were used to produce a laminated cell in the same manner as in Example 3-1.

### (Example 3-6)

A positive electrode slurry was prepared from the following materials to produce a positive electrode.
Positive-electrode active material: lithium manganate (LMO: produced in-house, LiMn₂O₄) 91 parts by mass
Organic-solvent-insoluble polymer fine particles having a chelating group: alginic acid graft polymer having the introduced iminodiacetate group (Reference Example 3-1) 3 parts by mass
Conductive additive: acetylene black (AB: Li-400 manufactured by Denka Company Limited) 3 parts by mass
Binder: poly(vinylidene difluoride) (PVDF: Solef 5130 manufactured by Solvay) 3 parts by mass

3 parts by mass of the PVDF was dissolved in N-methyl-2-pyrrolidone (NMP), 91 parts by mass of LMO, 3 parts by mass of the alginic acid graft polymer having the introduced iminodiacetate group produced in Reference Example 3-1 and 3 parts by mass of AB were added to the solution and, while NMP was added thereto, were stirred with a planetary mixer to prepare a positive electrode slurry. The slurry was applied to an aluminum foil with a film applicator, was dried under nitrogen at 80°C at atmospheric pressure for 24 hours, was further dried under reduced pressure at 150°C for 4 hours and was roll-pressed to produce a positive electrode. On the other hand, a negative electrode was produced in the same manner as in Example 3-1. The basis weight of the positive electrode was 1.45 mAh/cm², the basis weight of the negative electrode was 1.74 mAh/cm², and the AC ratio was 1.20. The positive electrode and the negative electrode thus produced were used to produce a laminated cell in the same manner as in Example 3-1.

### (Example 3-7)

A positive electrode and a negative electrode were produced in the same manner as in Example 3-6 except that the sodium alginate having the introduced chelating group produced in Reference Example 3-4 was added to the positive electrode instead of the alginic acid graft polymer having the introduced iminodiacetate group produced in Reference Example 3-1. The basis weight of the positive electrode was 1.46 mAh/cm², the basis weight of the negative electrode was 1.74 mAh/cm², and the AC ratio was 1.19. The positive electrode and the negative electrode thus produced were used to produce a laminated cell in the same manner as in Example 3-1.

### (Example 3-8)

A positive electrode and a negative electrode were produced in the same manner as in Example 3-1 except that the sodium alginate/disodium iminodiacetate mixture produced in Reference Example 3-5 was added to the positive electrode instead of the alginic acid graft polymer having the introduced iminodiacetate group produced in Reference Example 3-1 and PVDF was used as a binder for a positive electrode instead of the sodium alginate. The basis weight of the positive electrode was 1.47 mAh/cm², the basis weight of the negative electrode was 1.74 mAh/cm², and the AC ratio was 1.18. The positive electrode and the negative electrode thus produced were used to produce a laminated cell in the same manner as in Example 3-1.

### (Comparative Example 3-1)

A positive electrode slurry was prepared from the following materials to produce a positive electrode in the same manner as in Example 3-1.
Positive-electrode active material: lithium manganate (LMO: produced in-house, LiMn₂O₄) 94 parts by mass
Conductive additive: acetylene black (AB: Li-400 manufactured by Denka Company Limited) 3 parts by mass
Binder: sodium alginate (Algitex L manufactured by Kimica Corporation) 3 parts by mass

The basis weight was 1.50 mAh/cm².

Next, a negative electrode was produced in the same manner as in Example 3-1. The basis weight was 1.80 mAh/cm², and the AC ratio was 1.20. The positive electrode and the negative electrode thus produced were used to produce a laminated cell in the same manner as in Example 3-1.

### (Comparative Example 3-2)

A positive electrode slurry was prepared from the following materials to produce a positive electrode.
Positive-electrode active material: lithium manganate (LMO: produced in-house, LiMn₂O₄) 94 parts by mass
Conductive additive: acetylene black (AB: Li-400 manufactured by Denka Company Limited) 3 parts by mass
Binder: poly(vinylidene difluoride) (PVDF: Solef 5130 manufactured by Solvay) 3 parts by mass

3 parts by mass of the PVDF was dissolved in N-methyl-2-pyrrolidone (NMP), 94 parts by mass of LMO and 3 parts by mass of AB were added to the solution and, while NMP was added thereto, were stirred with a planetary mixer to prepare a positive electrode slurry. The slurry was applied to an aluminum foil with a film applicator, was dried under nitrogen at 80°C at atmospheric pressure for 24 hours, was further dried under reduced pressure at 150°C for 4 hours and was roll-pressed to produce a positive electrode. The basis weight was 1.52 mAh/cm². Next, a negative electrode was produced in the same manner as in Example 3-1. The basis weight was 1.82 mAh/cm², and the AC ratio was 1.20. The positive electrode and the negative electrode thus produced were used to produce a laminated cell in the same manner as in Example 3-1.

### <Evaluation of Charge-Discharge Characteristics>

The charge-discharge characteristics of the laminated cells produced in Examples 3-1 to 3-8 and Comparative Examples 3-1 and 3-2 were evaluated under the following conditions.
Charging: constant current and constant voltage (CCCV mode)
Discharging: constant current (CC mode)
Potential range: 3.0 to 4.2 V
C rate: 1C
Temperature: 60°C

100 cycles of charge-discharge were performed under the above conditions. Table 1 shows the results. It can be seen that the addition of the water-insoluble polymer fine particles having the chelating group or the organic-solvent-insoluble polymer fine particles having the chelating group to the positive electrode and/or the negative electrode results in a higher capacity retention rate than those of Comparative Examples and improves the cycle characteristics.

**[Table 1]**

| | Positive electrode | | | | | | | | | | Negative electrode | | | | | | Capacity retention rate |
|---|---|---|---|---|---|---|---|---|---|---|---|---|---|---|---|---|---|
| | Active material | | Conductive additive | | Water-insoluble polymer fine particles having chelating group | | Organic-solvent polymer fine particles having chelating group | | Binder | | Active material | | Water-insoluble polymer fine particles having chelating group | | Binder | | |
| | Type | Parts by mass | Type | Parts by mass | Type | Parts by mass | Type | Parts by mass | Type | Parts by mass | Type | Parts by mass | Type | Parts by mass | Type | Parts by mass | % |
| Example 3-1 | LMO | 91 | AB | 3 | Alginic acid graft polymer having introduced iminodiacetate group^{*1} | 3 | - | 0 | Na alginate | 3 | Gr | 95 | - | 0 | PVDF | 5 | 86.6 |
| Example 3-2 | ↑ | 94 | ↑ | 3 | - | 0 | - | 0 | ↑ | 3 | ↑ | 94 | Alginic acid graft polymer having introduced iminodiacetate group^{*1} | 3 | Na alginate SBR | 1.5 | 85.8 |
| | | | | | | | | | | | | | | | | 1.5 | |
| Example 3-3 | ↑ | 94 | ↑ | 3 | - | 0 | - | 0 | ↑ | 3 | ↑ | 94 | Chitosan having introduced iminodiacetate group^{*2} | 3 | ↑ | 1.5 | 85.1 |
| | | | | | | | | | | | | | | | | 1.5 | |
| Example 3-4 | ↑ | 91 | ↑ | 3 | Cellulose having introduced iminodiacetate groups^{*3} | 3 | - | 0 | ↑ | 3 | ↑ | 95 | - | 0 | PVDF | 5 | 84.7 |
| Example 3-5 | ↑ | 91 | ↑ | 3 | Alginic acid graft polymer having introduced iminodiacetate group^{*1} | 3 | - | 3 | ↑ | 3 | ↑ | 94 | Alginic acid graft polymer having introduced iminodiacetate group^{*1} | 3 | Na alginate SBR | 1.5 | 88.2 |
| | | | | | | | | | | | | | | | | 1.5 | |
| Example 3-6 | ↑ | 91 | ↑ | 3 | - | 0 | Alginic acid graft polymer having introduced iminodiacetate group^{*1} | 3 | PVDF | 3 | ↑ | 95 | - | 0 | PVDF | 5 | 83.0 |
| Example 3-7 | ↑ | 91 | ↑ | 3 | - | 0 | Na alginate having introduced iminodiacetate group^{*4} | 3 | ↑ | 3 | ↑ | 95 | - | 0 | PVDF | 5 | 88.2 |
| Example 3-8 | ↑ | 91 | ↑ | 3 | - | 0 | Na alginate/Na iminodiacetate mixture^{*5} | 3 | ↑ | 3 | ↑ | 95 | - | 0 | ↑ | 5 | 88.2 |
| Comparative example 3-1 | ↑ | 94 | ↑ | 3 | - | 0 | - | 0 | Na alginate | 3 | ↑ | 95 | - | 0 | PVDF | 5 | 81.8 |
| Comparative example 3-2 | ↑ | 94 | ↑ | 3 | - | 0 | - | 0 | PVDF | 3 | ↑ | 95 | - | 0 | PVDF | 5 | 81.3 |

| | | | | | | | | | | | | | | | | | |
|---|---|---|---|---|---|---|---|---|---|---|---|---|---|---|---|---|---|
| *1 Produced in Reference Example 3-1 *2 Produced in Reference Example 3-2 *3 Produced in Reference Example 3-3 *4 Produced in Reference Example 3-4 *5 Produced in Reference Example 3-5 | | | | | | | | | | | | | | | | | |

### (Examples of Fourth Aspect of Present Invention)

### <Production of Polymer Having Chelating Group>

### (Reference Example 4-1) Production of Alginic Acid Having Iminodiacetate Group Introduced through Covalent Bond

0.50 g (2.5 mmol as a monosaccharide unit) of sodium alginate (manufactured by Qingdao Gather Great Ocean Algae Industry Group Co., Ltd., weight-average molecular weight 1,300,000) was added in small portions to 50 ml of pure water with stirring to prepare a viscous homogeneous solution. 0.10 g (2.5 mmol) of sodium hydroxide (manufactured by Tokyo Chemical Industry Co., Ltd.) was then added thereto and was dissolved, and 3.10 g (50 mmol) of epichlorohydrin (manufactured by Tokyo Chemical Industry Co., Ltd.) was then added thereto and was reacted at 20°C for 6 hours. The solution after the reaction was added dropwise to 2 L of ethanol to form a precipitate, and the precipitate was collected by filtration, was washed with ethanol and was dried under reduced pressure to isolate. The isolated yield was 0.43 g, and the product was readily soluble in water. 0.30 g of the reaction product was weighed and dissolved in 100 ml of pure water. 8.4 g (43 mmol) of disodium iminodiacetate monohydrate (manufactured by Fujifilm Wako Pure Chemical Corporation) was then added thereto, was dissolved and was reacted at 80°C for 2 hours. The aqueous solution after the reaction was purified for 24 hours with an ultrafiltration membrane (manufactured by Nihon Pall Ltd., molecular weight cut-off 1000) to remove an excess amount of iminodiacetic acid. The aqueous solution after the purification was added dropwise to acetone to precipitate a polymer, and the polymer was filtered, collected and dried under reduced pressure to isolate. The isolated yield was 0.33 g, the product was soluble in water, and the weight-average molecular weight measured by aqueous GPC was 370,000. The nitrogen content was 2.2% by weight, and the chelating group content calculated from the nitrogen content was 1.6 mmol/g.

### (Reference Example 4-2) Production of Alginic Acid Having Disodium Iminodiacetate Group Introduced through Ionic Bond

1.0 g (5.7 mmol as a monosaccharide unit) of a hydrogen-ion-form alginic acid (manufactured by Kimica Corporation, trade name Kimica Acid G) was added in small portions to 100 ml of pure water with stirring to prepare a white pasty uniform dispersion liquid. 1.1 g (5.7 mmol) of disodium iminodiacetate monohydrate (manufactured by Fujifilm Wako Pure Chemical Corporation) was then directly added to the alginic acid dispersion liquid and was stirred. The dispersion liquid gradually became transparent with the addition and, after completion of the dropwise addition, became a transparent viscous aqueous solution. The aqueous solution was stirred at room temperature for 1 hour and was then added dropwise to 4 L of acetone to form a precipitate. The precipitate was collected by filtration, was washed with acetone and was then dried under reduced pressure to isolate. The isolated yield was 1.9 g, the nitrogen content determined by elemental analysis was 3.7% by mass, the chelating group content calculated from the nitrogen content was 2.6 mmol/g, and the product was readily soluble in water. To confirm that the chelating group was introduced into the alginic acid, FT-IR spectra before and after the reaction were compared. The hydrogen-ion-form alginic acid before the reaction had absorption at 1740 cm⁻¹ due to stretching vibration of carbonyl of a carboxylic acid, but the absorption at 1740 cm⁻¹ disappeared after the reaction, and new absorption due to stretching vibration of carbonyl of a carboxylate was observed at 1620 cm⁻¹. This shows that the alginic acid was bonded to iminodiacetic acid through an ionic bond. The molecular weight of the polymer having the chelating group was then measured by aqueous GPC. The weight-average molecular weight was 320,000.

### (Reference Example 4-3) Production of Alginic Acid Having Nitrilotris(Sodium Methylenephosphonate) Group Introduced through Ionic Bond

An alginic acid having a chelating group introduced was produced in the same manner as in Reference Example 4-2 except that the addition amount of the hydrogen-ion-form alginic acid was 2.0 g (11.4 mmol as a monosaccharide unit) and 5.2 ml (11.4 mmol) of a 50% aqueous solution of nitrilotris(methylenephosphonic acid) (manufactured by Tokyo Chemical Industry Co., Ltd.) and 68.4 ml(68.4 mmol) of 1N aqueous sodium hydroxide (manufactured by Fujifilm Wako Pure Chemical Corporation) were used instead of the disodium iminodiacetate monohydrate. The isolated yield was 6.7 g, the nitrogen content determined by elemental analysis was 1.8% by mass, the chelating group content calculated from the nitrogen content was 1.3 mmol/g, and the product was readily soluble in water. To confirm that the chelating group was introduced into the alginic acid, FT-IR spectra before and after the reaction were compared. The hydrogen-ion-form alginic acid before the reaction had absorption at 1740 cm⁻¹ due to stretching vibration of carbonyl of a carboxylic acid, but the absorption at 1740 cm⁻¹ disappeared after the reaction, and new absorption due to stretching vibration of carbonyl of a carboxylate was observed at 1620 cm⁻¹. This shows that the alginic acid was bonded to iminodiacetic acid through an ionic bond. The molecular weight of the polymer having the chelating group was then measured by aqueous GPC. The weight-average molecular weight was 350,000.

### <Production of Laminated Cell>

### (Example 4-1)

A positive electrode slurry was prepared from the following materials to produce a positive electrode.
Positive-electrode active material: lithium manganate (LMO: produced in-house, LiMn₂O₄, crystalline phase: spinel) 94 parts by mass
Conductive additive: acetylene black (AB: Li-400 manufactured by Denka Company Limited) 3 parts by mass
Binder: alginic acid having a chelating group (Reference Example 4-1) 3 parts by mass

3 parts by mass of the alginic acid having the chelating group produced in Reference Example 4-1 was dissolved in water to prepare an aqueous solution. 94 parts by mass of LMO and 3 parts by mass of AB were added to the aqueous solution and, while water was added thereto, were stirred with a planetary mixer to prepare a positive electrode slurry. The slurry was applied to an aluminum foil with a film applicator, was dried under nitrogen at 80°C at atmospheric pressure for 24 hours and was further dried under reduced pressure at 120°C for 4 hours to produce a positive electrode. The basis weight was 1.50 mAh/cm². The produced positive electrode was wound around a cylinder with a diameter of 8 mm to observe the appearance of the positive electrode. The positive electrode had a good appearance without cracking of the mixture layer, separation or dropping from the current collector or the like.

Next, a negative electrode slurry was prepared from the following materials to produce a negative electrode.
Negative-electrode active material: massive artificial graphite (Gr: MAG-D manufactured by Showa Denko Materials Co., Ltd.) 95 parts by mass
Binder: poly(vinylidene difluoride) (PVDF: Solef 5130 manufactured by Solvay) 5 parts by mass

5 parts by mass of the PVDF was dissolved in N-methyl-2-pyrrolidone (NMP), and 95 parts by mass of Gr was added to the solution and, while NMP was added thereto, was stirred with a planetary mixer to prepare a negative electrode slurry. The slurry was applied to a copper foil with a film applicator, was dried under nitrogen at 80°C at atmospheric pressure for 24 hours and was further dried under reduced pressure at 150°C for 4 hours to produce a negative electrode. The basis weight was 1.80 mAh/cm², and the AC ratio was 1.20.

The positive electrode and the negative electrode thus produced were used to produce a laminated cell as described below.- That is, vinylene carbonate was added at 1% by mass to an ethylene carbonate/diethyl carbonate (1/1) mixed solvent, and lithium hexafluorophosphate was dissolved therein at 1 mol/L to prepare an electrolyte solution. A polyethylene microporous membrane having one side coated with alumina (manufactured by Senior) was used as a separator. The positive electrode and the negative electrode were then disposed and stacked on both sides of the separator, and an electrolyte solution was injected to produce a laminated cell.

### (Example 4-2)

A laminated cell was produced in the same manner as in Example 4-1 except that the polymer having the chelating group produced in Reference Example 4-2 was used as a binder for a positive electrode.

### (Example 4-3)

A laminated cell was produced in the same manner as in Example 4-1 except that the polymer having the chelating group produced in Reference Example 4-3 was used as a binder for a positive electrode.

### (Comparative Example 4-1)

A laminated cell was produced in the same manner as in Example 4-1 except that PVDF (Solef 5130 manufactured by Solvay) was used as a binder for a positive electrode and a positive electrode slurry was prepared using NMP as a solvent.

### <Evaluation of Charge-Discharge Characteristics>

The charge-discharge characteristics of the laminated cells produced in Examples 4-1 to 4-3 and Comparative Example 4-1 were evaluated under the following conditions.
Charging: constant current and constant voltage (CCCV mode)
Discharging: constant current (CC mode)
Potential range: 3.0 to 4.2 V
C rate: 1C
Temperature: 60°C

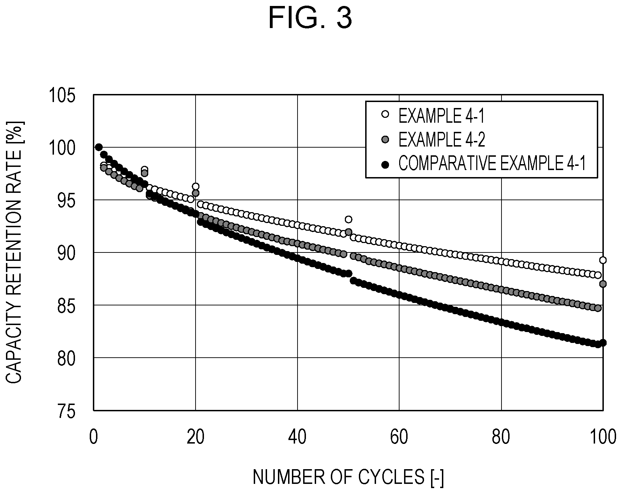

100 cycles of charge-discharge were performed under the above conditions. Fig. 3 shows the results. Fig. 3 is a graph showing the charge-discharge cycle characteristics of the laminated cells produced in Example 4-1, Example 4-2 and Comparative Example 4-1 and shows the transition of the discharge capacity with the number of cycles. These results show that, in the systems of Examples 4-1 and 4-2 in which the polymer having the chelating group according to the present invention was used as the binder, the discharge capacity had a small decrease even when the number of cycles increased, and the charge-discharge could be stable, whereas in the system of Comparative Example 4-1 in which PVDF was used as the binder, the discharge capacity decreased as the number of cycles increased. The capacity retention rate of the discharge capacity after 100 cycles was 88.4% in Example 4-1, 86.2% in Example 4-2 and 81.3% in Comparative Example 4-1. The laminated cell of Example 4-3 also had good charge-discharge cycle characteristics, and the capacity retention rate of the discharge capacity after 100 cycles was 88.6% in Example 4-3.

### <Production of Positive Electrode>

### (Example 4-4)

A positive electrode was produced in the same manner as in Example 4-1 except that a lithium composite oxide NCM523 (manufactured by Toshima Manufacturing Co., Ltd.) was used as a positive-electrode active material instead of LMO and the composition of the positive-electrode mixture layer was changed to active material:AB:binder = 94:4:2. The positive electrode was wound around a cylinder with a diameter of 8 mm to observe the appearance of the positive electrode. The positive electrode had a good appearance without cracking of the mixture layer, separation or dropping from the current collector or the like.

### (Example 4-5)

A positive electrode was produced in the same manner as in Example 4-1 except that electrolytic manganese dioxide (EMD: manufactured by Tosoh Corporation) was used as a positive-electrode active material instead of LMO and the composition of the positive-electrode mixture layer was changed to active material:AB:binder = 93:3:4. The positive electrode was wound around a cylinder with a diameter of 8 mm to observe the appearance of the positive electrode. The positive electrode had a good appearance without cracking of the mixture layer, separation or dropping from the current collector or the like.

### <Positive-Electrode Active Material Accelerated Degradation Test>

### (Example 4-6)

0.05 g of the polymer having the chelating group produced in Reference Example 4-1 was dissolved in 20 ml of pure water, and 0.95 g of LMO was then added thereto to prepare a slurry with stirring. The slurry was heated to remove water with an evaporator, and the resulting mixture was then ground with a mortar and was dried under reduced pressure at 120°C to completely remove water. In a glove box, 15 ml of an electrolyte solution (1 M LiPF₆, EC/DMC = 1/2, manufactured by Kishida Chemical Co., Ltd.) was added to the mixture, and the mixture was sealed and heated at 85°C for 4 days. After the heat treatment, the electrolyte solution was recovered by filtration, and the amount of Mn in the electrolyte solution was measured to be less than 1 ppm. This indicates that the polymer having the chelating group traps Mn ions eluted from LMO, and it is thought that the high capacity retention rate of the laminated cell to which the polymer having the chelating group is added is a result of suppression of accumulation of Mn in the negative electrode.

### (Example 4-7)

The accelerated degradation test was performed under the same conditions and operations as in Example 4-6 except that 0.25 g of the polymer having the chelating group produced in Reference Example 4-2 was used instead of 0.05 g of the polymer having the chelating group produced in Reference Example 4-1, 4.75 g of NCM523 was used instead of 0.95 g of LMO, and the number of days of the heat treatment was changed from 4 days to 18 days. The amounts of Mn and Ni in the electrolyte solution after the heat treatment were both less than 1 ppm.

### (Example 4-8)

The accelerated degradation test was performed under the same conditions and operations as in Example 4-6 except that 0.25 g of the polymer having the chelating group produced in Reference Example 4-2 was used instead of 0.05 g of the polymer having the chelating group produced in Reference Example 4-1, 4.75 g of EMD was used instead of 0.95 g of LMO, 1 M LiClO₄, PC/DME = 1/1 (manufactured by Toyama Yakuhin Kogyo) was used as an electrolyte solution, and the heat treatment conditions were changed from 85°C x 4 days to 80°C x 30 days. The amount of Mn in the electrolyte solution after the heat treatment was less than 1 ppm.

### (Comparative Example 4-2)

The accelerated degradation test was performed under the same conditions and operations as in Example 4-6 except that 1.0 g of LMO was used without the addition of the polymer having the chelating group. The amount of Mn in the electrolyte solution after the heat treatment was 14 ppm, and the elution of Mn was observed.

### (Comparative Example 4-3)

The accelerated degradation test was performed under the same conditions and operations as in Example 4-7 except that 5.0 g of NCM523 was used without the addition of the polymer having the chelating group. The amounts of Mn and Ni in the electrolyte solution after the heat treatment were 1 ppm and 28 ppm, respectively, and the elution of Mn and Ni was observed.

### (Comparative Example 4-4)

The accelerated degradation test was performed under the same conditions and operations as in Example_4-8 except that 5.0 g of EMD was used without the addition of the polymer having the chelating group. The amount of Mn in the electrolyte solution after the heat treatment was 28 ppm, and the elution of Mn was observed.

### (Examples of Fifth Aspect of Present Invention)

### <Production of Composition Containing Polymer and Low-Molecular-Weight Compound Having Chelating Group>

### (Example 5-1) Production of Composition of Sodium Alginate and Nitrilotris(Sodium Methylenephosphonate)

2.0 g (10 mmol as a monosaccharide unit) of sodium alginate (manufactured by Qingdao Gather Great Ocean Algae Industry Group Co., Ltd., weight-average molecular weight 1,300,000) was added in small portions to 100 ml of pure water with stirring to prepare a viscous homogeneous solution. 4.6 ml (10 mmol) of
nitrilotris(methylenephosphonic acid) (manufactured by Tokyo Chemical Industry Co., Ltd., 50% aqueous solution) and 60 ml (60 mmol) of 1 N aqueous sodium hydroxide (manufactured by Fujifilm Wako Pure Chemical Corporation) were then mixed together under ice-cold conditions, and the resulting liquid mixture was added to the aqueous sodium hydroxide. After the addition and mixing at room temperature for 1 hour, the liquid mixture was added dropwise to 2 L of acetone to form a precipitate, and the precipitate was collected by filtration, was washed with acetone and was then dried under reduced pressure to isolate. The isolated yield was 6.4 g, the nitrogen content of the mixture was 1.8% by weight, and the chelating group content calculated from the nitrogen content was 1.3 mmol/g. The composition calculated from the nitrogen content was 220 parts by weight of nitrilotris(methylenephosphonic acid) per 100 parts by weight of sodium alginate.

### (Example 5-2) Production of Composition of Sodium Alginate and Disodium Iminodiacetate

A physical mixture of sodium alginate and disodium iminodiacetate was produced in the same manner as in Example 5-1 except that 2.0 g (10 mmol) of disodium iminodiacetate monohydrate (manufactured by Fujifilm Wako Pure Chemical Corporation) was used instead of 4.6 ml (10 mmol) of nitrilotris(methylenephosphonic acid) (manufactured by Tokyo Chemical Industry Co., Ltd., 50% aqueous solution) and 60 ml (60 mmol) of 1 N aqueous sodium hydroxide (manufactured by Fujifilm Wako Pure Chemical Corporation). The isolated yield was 3.9 g, the nitrogen content of the mixture was 3.3% by weight, and the chelating group content calculated from the nitrogen content was 2.4 mmol/g. The composition calculated from the nitrogen content was 70 parts by weight of disodium iminodiacetate per 100 parts by weight of sodium alginate.

### <Production of Laminated Cell>

### (Example 5-3)

A positive electrode slurry was prepared from the following materials to produce a positive electrode.
Positive-electrode active material: lithium manganate (LMO: produced in-house, LiMn₂O₄, crystalline phase: spinel) 94 parts by mass
Conductive additive: acetylene black (AB: Li-400 manufactured by Denka Company Limited) 3 parts by mass
Binder: physical mixture of sodium alginate and nitrilotris(sodium methylenephosphonate) produced in Example 5-1 3 parts by mass

3 parts by mass of the binder produced in Example 5-1 was dissolved in water to prepare an aqueous solution. 94 parts by mass of LMO and 3 parts by mass of AB were added to the aqueous solution and, while water was added thereto, were stirred with a planetary mixer to prepare a positive electrode slurry. The slurry was applied to an aluminum foil with a film applicator, was dried under nitrogen at 80°C at atmospheric pressure for 24 hours and was further dried under reduced pressure at 120°C for 4 hours to produce a positive electrode. The basis weight was 1.50 mAh/cm².

Next, a negative electrode slurry was prepared from the following materials to produce a negative electrode.
Negative-electrode active material: massive artificial graphite (Gr: MAG-D manufactured by Showa Denko Materials Co., Ltd.) 95 parts by mass
Binder: poly(vinylidene difluoride) (PVDF: Solef 5130 manufactured by Solvay) 5 parts by mass

5 parts by mass of the PVDF was dissolved in N-methyl-2-pyrrolidone (NMP), and 95 parts by mass of Gr was added to the solution and, while NMP was added thereto, was stirred with a planetary mixer to prepare a negative electrode slurry. The slurry was applied to a copper foil with a film applicator, was dried under nitrogen at 80°C at atmospheric pressure for 24 hours and was further dried under reduced pressure at 150°C for 4 hours to produce a negative electrode. The basis weight was 1.80 mAh/cm², and the AC ratio was 1.20.

The positive electrode and the negative electrode thus produced were used to produce a laminated cell as described below. That is, vinylene carbonate was added at 1% by mass to an ethylene carbonate/diethyl carbonate (1/1) mixed solvent, and lithium hexafluorophosphate was dissolved therein at 1 mol/L to prepare an electrolyte solution. A polyethylene microporous membrane having one side coated with alumina (manufactured by Senior) was used as a separator. The positive electrode and the negative electrode were then disposed and stacked on both sides of the separator, and an electrolyte solution was injected to produce a laminated cell.

### (Example 5-4)

A laminated cell was produced in the same manner as in Example 5-3 except that the physical mixture of sodium alginate and disodium iminodiacetate produced in Example 5-2 was used as a binder for a positive electrode.

### (Comparative Example 5-1)

A laminated cell was produced in the same manner as in Example 5-3 except that PVDF (Solef 5130 manufactured by Solvay) was used as a binder for a positive electrode and a positive electrode slurry was prepared using NMP as a solvent.

### <Evaluation of Charge-Discharge Characteristics>

The charge-discharge characteristics of the laminated cells produced in Examples 5-3 and 5-4 and Comparative Example 5-1 were evaluated under the following conditions.
Charging: constant current and constant voltage (CCCV mode)
Discharging: constant current (CC mode)
Potential range: 3.0 to 4.2 V
Crate: 1C
Temperature: 60°C

100 cycles of charge-discharge were performed under the above conditions. In the systems of Examples 5-3 and 5-4 in which the physical mixture of the polymer and the low-molecular-weight compound having the chelating group according to the present invention was used as the binder, the discharge capacity had a small decrease even when the number of cycles increased, and the charge-discharge could be stable, whereas in the system of Comparative Example 5-1 in which PVDF was used as the binder, the discharge capacity decreased as the number of cycles increased. The capacity retention rate of the discharge capacity after 100 cycles was 88.9% in Example 5-3, 89.0% in Example 5-4 and 81.3% in Comparative Example 5-1.

### (Examples of Sixth Aspect of Present Invention)

### <Production of Composition Containing Polymer and Compound Having Chelating Group>

### (Example 6-1) Production of Composition of Hydrogen-Ion-Form Alginic Acid and Trisodium Nitrilotrismethylphosphonate

250 g (1.07 mol as a monosaccharide unit) of sodium alginate (manufactured by Shandong Jiejing, water content 15%, weight-average molecular weight 1,100,000) was added in small portions to 440 ml of ethanol (manufactured by Fujifilm Wako Pure Chemical Corporation) with stirring to prepare a brown dispersion liquid. 192 g (1.89 mol) of 35% hydrochloric acid (manufactured by Fujifilm Wako Pure Chemical Corporation) was then diluted with 188 g of pure water, was then added to the dispersion liquid and was reacted at 8°C for 2 hours. During the reaction, the dispersion state was maintained, and the slurry concentration was 26%. After completion of the reaction, the slurry was filtered, and the resulting solid component was redispersed in 4 L of pure water, was stirred for 1 hour, was then filtered and isolated and was dried under reduced pressure at 80°C The yield of the resulting hydrogen-ion-form alginic acid was 149 g, the weight-average molecular weight was 620,000, the sodium content was 0.91%, and the hydrogen ion substitution rate determined from the sodium content was 93.0%. 1.8 g (10 mmol as a monosaccharide unit) of the hydrogen-ion-form alginic acid thus produced and 3.2 g (10 mmol) of trisodium nitrilotrismethylphosphonate (manufactured by Dojindo Laboratories) were mixed using a mortar to prepare a composition. The nitrogen content of the mixture was 2.8% by weight, and the chelating group content calculated from the nitrogen content was 2.0 mmol/g. The trisodium nitrilotrismethylphosphonate aqueous solution had a pH of 4.0.

### (Example 6-2) Production of Composition of Hydrogen-Ion-Form Alginic Acid and Disodium Iminodiacetate

1.8 g (10 mmol as a monosaccharide unit) of the hydrogen-ion-form alginic acid produced in Example 6-1 and 2.0 g (10 mmol) of disodium iminodiacetate monohydrate (manufactured by Fujifilm Wako Pure Chemical Corporation) were mixed using a mortar to prepare a composition. The nitrogen content of the mixture was 4.0% by weight, and the chelating group content calculated from the nitrogen content was 2.8 mmol/g. The disodium iminodiacetate aqueous solution had a pH of 11.0.

### (Example 6-4) Production of Composition of Hydrogen-Ion-Form Alginic Acid and Disodium Ethylenediaminetetraacetate

1.8 g (10 mmol as a monosaccharide unit) of the hydrogen-ion-form alginic acid produced in Example 6-1 and 3.7 g (10 mmol) of disodium ethylenediaminetetraacetate dihydrate (manufactured by Dojindo Laboratories) were mixed using a mortar to prepare a composition. The nitrogen content of the mixture was 5.1% by weight, and the chelating group content calculated from the nitrogen content was 1.8 mmol/g. The disodium ethylenediaminetetraacetate aqueous solution had a pH of 4.2.

### <Production of Laminated Cell>

### (Example 6-4)

A positive electrode slurry was prepared from the following materials to produce a positive electrode.
Positive-electrode active material: lithium manganate (LMO: produced in-house, LiMn₂O₄, crystalline phase: spinel) 94 parts by weight
Conductive additive: acetylene black (AB: Li-400 manufactured by Denka Company Limited) 3 parts by weight
Binder: composition of hydrogen-ion-form alginic acid and trisodium nitrilotrismethylphosphonate produced in Example 6-1 3 parts by weight

3 parts by weight of the binder produced in Example 6-1 was dissolved in water to prepare an aqueous solution. 94 parts by weight of LMO and 3 parts by weight of AB were added to the aqueous solution and, while water was added thereto, were stirred with a planetary mixer to prepare a positive electrode slurry. The slurry was applied to an aluminum foil with a film applicator, was dried under nitrogen at 80°C at atmospheric pressure for 24 hours and was further dried under reduced pressure at 120°C for 4 hours to produce a positive electrode. The basis weight was 1.50 mAh/cm².

Next, a negative electrode slurry was prepared from the following materials to produce a negative electrode.
Negative-electrode active material: massive artificial graphite (Gr: MAG-D manufactured by Showa Denko Materials Co., Ltd.) 95 parts by weight
Binder: poly(vinylidene difluoride) (PVDF: Solef 5130 manufactured by Solvay) 5 parts by weight

5 parts by weight of the PVDF was dissolved in N-methyl-2-pyrrolidone (NMP), and 95 parts by weight of Gr was added to the solution and, while NMP was added thereto, was stirred with a planetary mixer to prepare a negative electrode slurry. The slurry was applied to a copper foil with a film applicator, was dried under nitrogen at 80°C at atmospheric pressure for 24 hours and was further dried under reduced pressure at 150°C for 4 hours to produce a negative electrode. The basis weight was 1.80 mAh/cm², and the AC ratio was 1.20.

The positive electrode and the negative electrode thus produced were used to produce a laminated cell as described below. That is, vinylene carbonate was added to 1% by weight to an ethylene carbonate/diethyl carbonate (1/1) mixed solvent, and lithium hexafluorophosphate was dissolved therein at 1 mol/L to prepare an electrolyte solution. A polyethylene microporous membrane having one side coated with alumina (manufactured by Senior) was used as a separator. The positive electrode and the negative electrode were then disposed and stacked on both sides of the separator, and an electrolyte solution was injected to produce a laminated cell.

### (Example 6-5)

A laminated cell was produced in the same manner as in Example 6-4 except that the composition of hydrogen-ion-form alginic acid and disodium iminodiacetate produced in Example 6-2 was used as a binder for a positive electrode.

### (Example 6-6)

A laminated cell was produced in the same manner as in Example 6-4 except that the composition of hydrogen-ion-form alginic acid and disodium ethylenediaminetetraacetate produced in Example 6-3 was used as a binder for a positive electrode.

### (Comparative Example 6-1)

A laminated cell was produced in the same manner as in Example 6-4 except that PVDF (Solef 5130 manufactured by Solvay) was used as a binder for a positive electrode and a positive electrode slurry was prepared using NMP as a solvent.

### (Comparative Example 6-2)

A laminated cell was produced in the same manner as in Example 6-4 except that a composition prepared by mixing 2.3 g (10 mmol as a monosaccharide unit) of sodium alginate (manufactured by Shandong Jiejing, water content 15%, weight-average molecular weight 1,100,000) with 2.0 g (10 mmol) of disodium iminodiacetate monohydrate (manufactured by Fujifilm Wako Pure Chemical Corporation) using a mortar was used as a binder for a positive electrode.

### <Evaluation of Charge-Discharge Characteristics>

The charge-discharge characteristics of the laminated cells produced in Examples 6-4, 6-5 and 6-6 and Comparative Examples 6-1 and 6-2 were evaluated under the following conditions.
Charging: constant current and constant voltage (CCCV mode)
Discharging: constant current (CC mode)
Potential range: 3.0 to 4.2 V
C rate: 1C
Temperature: 60°C

100 cycles of charge-discharge were performed under the above conditions. In the laminated cells of Examples 6-4, 6-5 and 6-6 in which the composition of the hydrogen-ion-form alginic acid and the compound having the amino group and the chelating group according to the present invention was used as the binder, the discharge capacity had a small decrease even when the number of cycles increased, and the charge-discharge could be stable, whereas in the system of Comparative Example 6-1 in which PVDF was used as the binder, the discharge capacity decreased as the number of cycles increased. The capacity retention rate of the discharge capacity after 100 cycles was 90.9% in Example 6-4, 89.5% in Example 6-5, 89.3% in Example 6-6 and 81.3% in Comparative Example 6-1.

On the other hand, in Comparative Example 6-2 in which the composition of sodium alginate and disodium iminodiacetate was used as the binder, which did not form an ionic bond, the capacity retention rate of the discharge capacity after 100 cycles was 89.0%, indicating good performance, but gas was generated during the cycle test and significantly expanded the laminated cell.

### <Evaluation of Corrosion State of Current Collector>

### (Example 6-7)

A positive electrode slurry was produced in the same manner as in Example 6-4 except that a lithium nickel cobalt manganese oxide NCM523 (manufactured by Toshima Manufacturing Co., Ltd.) was used as the active material instead of lithium manganate (LMO: produced in-house, LiMn₂O₄, crystalline phase: spinel). Although the slurry had a pH of 9.0, and a positive-electrode active material with a high nickel content was used as an aqueous slurry, the use of the composition of Example 6-1 as the binder could - prevent the slurry from becoming strongly alkaline. This slurry was applied to an aluminum foil and was dried in the same manner as in Example 6-4 to produce a positive electrode. After being left to stand at room temperature for 7 days, the mixture layer of the positive electrode was peeled off, and the aluminum foil was examined for corrosion and found to have no corrosion.

### (Example 6-8)

A positive electrode slurry was produced in the same manner as in Example 6-4 except that a lithium nickel cobalt manganese oxide NCM523 (manufactured by Toshima Manufacturing Co., Ltd.) was used as the active material instead of lithium manganate (LMO: produced in-house, LiMn₂O₄, crystalline phase: spinel) and the composition of Example 6-3 was used as a binder. Although the slurry had a pH of 9.4, and a positive-electrode active material with a high nickel content was used as an aqueous slurry, the use of the composition of Example 6-3 as the binder could prevent the slurry from becoming strongly alkaline. This slurry was applied to an aluminum foil and was dried in the same manner as in Example 6-4 to produce a positive electrode. After being left to stand at room temperature for 7 days, the mixture layer of the positive electrode was peeled off, and the aluminum foil was examined for corrosion and found to have no corrosion.

### (Comparative Example 6-3)

A positive electrode slurry was produced in the same manner as in Example 6-4 except that a lithium nickel cobalt manganese oxide NCM523 (manufactured by Toshima Manufacturing Co., Ltd.) was used as the active material instead of lithium manganate (LMO: produced in-house, LiMn₂O₄, crystalline phase: spinel) and sodium alginate (manufactured by Shandong Jiejing, water content 15%, weight-average molecular weight 1,100,000) was used as a binder. The slurry had a pH of 11.2, and the use of a positive-electrode active material with a high nickel content as an aqueous slurry made the slurry strongly alkaline. This slurry was applied to an aluminum foil and was dried in the same manner as in Example 6-4 to produce a positive electrode. After being left to stand at room temperature for 7 days, the mixture layer of the positive electrode was peeled off, and the aluminum foil was examined for corrosion and found to be corroded.

### (Examples of Seventh Aspect of Present Invention)

### (Example 7-1)

### <Production of High-Molecular-Weight Hydrogen-Ion-Form Alginic Acid>

250 g (1.07 mol as a monosaccharide unit) of sodium alginate (manufactured by Shandong Jiejing, water content 15%, weight-average molecular weight 1,100,000) was added in small portions to 440 ml of ethanol (manufactured by Fujifilm Wako Pure Chemical Corporation) with stirring to prepare a brown dispersion liquid. 192 g (1.89 mol) of 35% hydrochloric acid (manufactured by Fujifilm Wako Pure Chemical Corporation) was then diluted with 188 g of pure water, was then added to the dispersion liquid and was reacted at 8°C for 2 hours. During the reaction, the dispersion state was maintained, and the slurry concentration was 26%. After completion of the reaction, the slurry was filtered, and the resulting solid component was redispersed in 4 L of pure water, was stirred for 1 hour, was then filtered and isolated and was dried under reduced pressure at 80°C The yield of the resulting high-molecular-weight hydrogen-ion-form alginic acid was 149 g, the weight-average molecular weight was 620,000, the sodium content was 0.91%, and the hydrogen ion substitution rate determined from the sodium content was 93.0%. The weight-average molecular weight was measured by GPC (in terms of PEO) using a sample dissolved in a 0.1 M phosphate buffer (pH = 8.0).

### <Evaluation of Heavy-Metal Ion Trapping Ability>

The following measurement was performed to evaluate the heavy-metal ion trapping ability of a binder composed of a high-molecular-weight hydrogen-ion-form alginic acid and a compound with a chelating group. 0.05 g of the high-molecular-weight hydrogen-ion-form alginic acid produced in Example 7-1 and 0.06 g of disodium iminodiacetate hydrate (manufactured by Tokyo Chemical Industry Co., Ltd.) were dissolved in 20 ml of pure water, and 1.9 g of lithium manganate (produced in-house, crystal structure: spinel, hereinafter abbreviated to "LMO") was added thereto to prepare a slurry. The slurry was concentrated with an evaporator and was then dried under reduced pressure at 80°C to remove water and thereby produce a mixture of LMO and a binder composed of the high-molecular-weight hydrogen-ion-form alginic acid and a compound having a chelating group. 1.0 g of the mixture was taken and placed in a Teflon (registered trademark) vessel, was dried under reduced pressure at 120°C for 4 hours and was then sealed. The sealed Teflon (registered trademark) vessel was opened in a glove box, 15 ml of an electrolyte solution (manufactured by Kishida Chemical Co., Ltd., a solution of LiPF₆ dissolved at 1 mol/L in a mixed solvent of ethylene carbonate:dimethyl carbonate = 1:2) was added thereto, and the vessel was sealed again and heated at 85°C for 4 hours. After completion of the heating, the Teflon (registered trademark) vessel was opened in a glove box, and filtration was performed with a syringe filter to collect a filtrate. The filtrate was subjected to acidolysis, and manganese ions were quantified by ICP-MS. The concentration of manganese ions was less than 1 ppm, showing that manganese ions eluted from LMO by heating were trapped.

### <Production of Laminated Cell>

A positive electrode slurry was prepared from the following materials to produce a positive electrode.
Positive-electrode active material: lithium manganate (LMO: produced in-house, LiMn₂O₄, crystalline phase: spinel) 94 parts by mass
Conductive additive: acetylene black (AB: Li-400 manufactured by Denka Company Limited) 3 parts by mass
Binder: 1:1.2 mixture (mass-ratio) of high-molecular-weight hydrogen-ion-form alginic acid produced in Example 7-1 and disodium iminodiacetate hydrate (manufactured by Tokyo Chemical Industry Co., Ltd.) 3 parts by mass

3 parts by mass of the binder was dissolved in water to prepare an aqueous solution. 94 parts by mass of LMO and 3 parts by mass of AB were added to the aqueous solution and, while water was added thereto, were stirred with a planetary mixer to prepare a positive electrode slurry. The slurry was applied to an aluminum foil with a film applicator, was dried under nitrogen at 80°C at atmospheric pressure for 24 hours and was further dried under reduced pressure at 120°C for 4 hours to produce a positive electrode. The basis weight was 1.50 mAh/cm².

Next, a negative electrode slurry was prepared from the following materials to produce a negative electrode.
Negative-electrode active material: massive artificial graphite (Gr: MAG-D manufactured by Showa Denko Materials Co., Ltd.) 95 parts by mass
Binder: poly(vinylidene difluoride) (PVDF: Solef 5130 manufactured by Solvay) 5 parts by mass

5 parts by mass of the PVDF was dissolved in N-methyl-2-pyrrolidone (NMP), and 95 parts by mass of Gr was added to the solution and, while NMP was added thereto, was stirred with a planetary mixer to prepare a negative electrode slurry. The slurry was applied to a copper foil with a film applicator, was dried under nitrogen at 80°C at atmospheric pressure for 24 hours and was further dried under reduced pressure at 150°C for 4 hours to produce a negative electrode. The basis weight was 1.80 mAh/cm², and the AC ratio was 1.20.

The positive electrode and the negative electrode thus produced were used to produce a laminated cell as described below. That is, vinylene carbonate was added at 1% by mass to an ethylene carbonate/diethyl carbonate (1/1) mixed solvent, and lithium hexafluorophosphate was dissolved therein at 1 mol/L to prepare an electrolyte solution. A polyethylene microporous membrane having one side coated with alumina (manufactured by Senior) was used as a separator. The positive electrode and the negative electrode were then disposed and stacked on both sides of the separator, and an electrolyte solution was injected to produce a laminated cell.

### <Evaluation of Charge-Discharge Characteristics>

The charge-discharge characteristics of the laminated cell produced in Example 7-1 was evaluated under the following conditions.
Charging: constant current and constant voltage (CCCV mode)
Discharging: constant current (CC mode)
Potential range: 3.0 to 4.2 V
C rate: 1C
Temperature: 60°C

100 cycles of charge-discharge were performed under the above conditions. The capacity retention rate of the discharge capacity after 100 cycles was 89.3%, which indicates good cycle characteristics.

### (Example 7-2)

### <Production of High-Molecular-Weight Hydrogen-Ion-Form Alginic Acid>

A high-molecular-weight hydrogen-ion-form alginic acid was produced in the same manner as in Example 7-1 except that sodium alginate (B-8, weight-average molecular weight 780,000) manufactured by Kimica Corporation was used instead of the sodium alginate manufactured by Shandong Jiejing and the reaction time was 1 hour. The yield of the resulting high-molecular-weight hydrogen-ion-form alginic acid was 164 g, the weight-average molecular weight was 520,000, the sodium content was 2.01%, and the hydrogen ion substitution rate determined from the sodium content was 84.3%.

### <Evaluation of Heavy-Metal Ion Trapping Ability>

The heavy-metal ion trapping ability of the mixture of the high-molecular-weight hydrogen-ion-form alginic acid and sodium iminodiacetate hydrate (1:1.2 in mass ratio) produced in Example 7-2 was evaluated in the same manner as in Example 7-1. The concentration of manganese ions in the filtrate was less than 1 ppm, showing that manganese ions eluted from LMO by heating were trapped.

### <Production of Laminated Cell>

A positive electrode slurry was prepared and a positive electrode was produced in the same manner as in Example 7-1 except that a 1:1.2 mixture (mass ratio) of the high-molecular-weight hydrogen-ion-form alginic acid produced in Example 7-2 and disodium iminodiacetate hydrate (manufactured by Tokyo Chemical Industry Co., Ltd.) was used as the binder.

A negative electrode was produced in the same manner as in Example 7-1, and a laminated cell was produced in the same manner as in Example 7-1.

### <Evaluation of Charge-Discharge Characteristics>

The charge-discharge characteristics of the laminated cell produced in Example 7-2 were evaluated under the same conditions as in Example 7-1. The capacity retention rate of the discharge capacity after 100 cycles was 87.1% in Example 7-1, which indicates good cycle characteristics.

### (Comparative Example 7-1)

### <Production of High-Molecular-Weight Hydrogen-Ion-Form Alginic Acid>

440 ml of pure water was used instead of 440 ml of ethanol, and 250 g (1.07 mol as a monosaccharide unit) of sodium alginate (manufactured by Shandong Jiejing, water content 15%, weight-average molecular weight 1,100,000) was added in small portions with stirring. The addition of approximately 20 g of sodium alginate made the system highly viscous and unstirrable, and the subsequent operation could not be continued. This shows that ion exchange of sodium alginate with a hydrogen-ion-form alginic acid in a homogeneous system makes the operation under high concentration conditions impossible due to the viscosity limitation and limits the operation conditions to low concentration conditions.

### (Comparative Example 7-2)

### <Hydrogen-Ion-Form Alginic Acid>

A hydrogen-ion-form alginic acid (Kimica Acid SA) manufactured by Kimica Corporation was obtained as a commercially available hydrogen-ion-form alginic acid. The weight-average molecular weight was 60,000,the sodium content was 0.40%, and the hydrogen ion substitution rate determined from the sodium content was 96.9%.

### <Evaluation of Heavy-Metal Ion Trapping Ability>

The heavy-metal ion trapping ability of a mixture of the commercially available hydrogen-ion-form alginic acid and sodium iminodiacetate hydrate (1:1.2 in mass ratio) was evaluated in the same manner as in Example 7-1. The concentration of manganese ions in the filtrate was less than 1 ppm, showing that manganese ions eluted from LMO by heating were trapped.

### <Production of Laminated Cell>

A positive electrode slurry was prepared and a positive electrode was produced in the same manner as in Example 7-1 except that a 1:1.2 mixture (mass ratio) of the commercially available hydrogen-ion-form alginic acid obtained in Comparative Example 7-2 and disodium iminodiacetate hydrate (manufactured by Tokyo Chemical Industry Co., Ltd.) was used as the binder. In the positive electrode, the electrode mixture layer and the current collector were partially peeled off, and a laminated cell could not be produced.

While the present invention has been described in detail with reference to specific embodiments, it is apparent to a person skilled in the art that various alterations and modifications may be made to the embodiments without departing from the essence and scope of the present invention.

The description, claims, drawings and abstract of
Japanese Patent Application No. 2022-015789 filed on February 3, 2022,
Japanese Patent Application No. 2022-018051 filed on February 8, 2022,
Japanese Patent Application No. 2022-028082 filed on February 25, 2022,
Japanese Patent Application No. 2022-028083 filed on February 25, 2022,
Japanese Patent Application No. 2022-108026 filed on July 4, 2022,
Japanese Patent Application No. 2022-108027 filed on July 4, 2022,
Japanese Patent Application No. 2022-162036 filed on October 7, 2022,
Japanese Patent Application No. 2022-203600 filed on December 20, 2022,
Japanese Patent Application No. 2022-203601 filed on December 20, 2022, and
Japanese Patent Application No. 2023-003811 filed on January 13, 2023 are incorporated herein by reference in their entirety as the disclosure of the description of the present invention.

### Industrial Applicability

As described above, the present invention can provide a water-soluble chelating polymer that can rapidly trap a trace amount of heavy-metal ions to reduce the amount of heavy-metal ions to a ppm level or lower in a short time.

## Claims

1. A water-soluble chelating polymer comprising an anionic polymer having a carboxy group, a sulfonate group and/or a sulfate group bonded through an ionic bond to a chelating functional group having a cationic functional group, wherein the water-soluble chelating polymer contains 0.2 to 6 mmol/g of the chelating functional group and has a weight-average molecular weight in the range of 30,000 to 1,000,000.

2. The water-soluble chelating polymer according to Claim 1, wherein the anionic polymer is an acidic polysaccharide.

3. The water-soluble chelating polymer according to Claim 1, wherein the chelating functional group is an aminocarboxylate group or an aminophosphonate group.

4. A method for producing a water-soluble chelating polymer, comprising: bringing an anionic polymer having a carboxy group, a sulfonate group and/or a sulfate group into contact with an acid to convert the carboxy group, the sulfonate group and/or the sulfate group into a hydrogen ion form; and then bringing the polymer into contact with a compound having a chelating functional group and an amino group to introduce the chelating functional group into the anionic polymer.

5. The method for producing a water-soluble chelating polymer according to Claim 4, comprising: dispersing the anionic polymer having the carboxy group, the sulfonate group and/or the sulfate group in the hydrogen ion form in a hydrophobic solvent; dissolving a compound having a chelating functional group and an amino group in water; and mixing the hydrophobic solvent and the water to prepare a water-in-oil emulsion and introduce the chelating functional group into the anionic polymer.

6. A method for trapping a heavy-metal ion, comprising adding the water-soluble chelating polymer according to Claim 1 to a solution containing a heavy-metal ion to trap the heavy-metal ion with the chelating polymer.

7. A chelating polymer having a structure represented by the following general formula (1) and containing 0.2 to 5 mmol/g of a chelating functional group:
PS-X-A-CL (1)
wherein PS denotes an acidic polysaccharide or a basic polysaccharide, X denotes a group represented by -O- or - N(R)-, R denotes a hydrogen atom or a hydrocarbon group with 1 to 6 carbon atoms, A denotes an organic group with 3 to 30 carbon atoms, and CL denotes an organic group with 1 to 30 carbon atoms having a chelating functional group.

8. The chelating polymer according to Claim 7 with a structure represented by the following general formula (2): 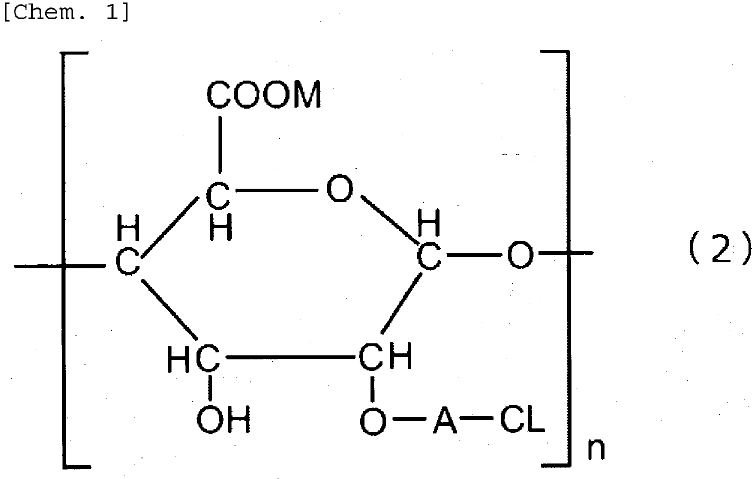 wherein A and CL have the same meanings as described above, M denotes a hydrogen atom or an alkali metal ion, and n denotes an integer in the range of 10 to 1000.

9. A method for producing the chelating polymer according to Claim 7, comprising reacting an acidic polysaccharide and/or a basic polysaccharide with an epihalohydrin and/or a polyfunctional epoxy compound having 2 to 6 epoxy groups and then with a compound having an amino group and a chelating functional group.

10. A chelating polymer having a structure represented by the following general formula (3) and containing 0.2 to 5 mmol/g of a chelating functional group: 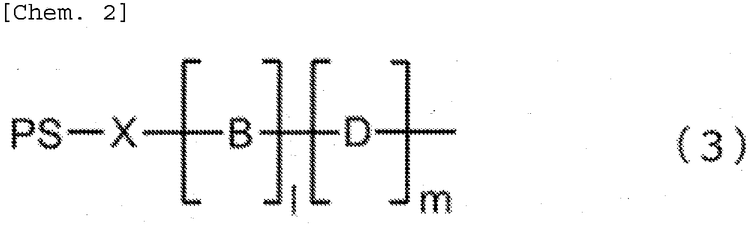 wherein PS and X have the same meanings as described above, B denotes a vinyl monomer residue with 4 to 30 carbon atoms having a chelating functional group, D denotes a vinyl monomer residue with 4 to 30 carbon atoms having no chelating functional group, and l and m each independently denote an integer in the range of 10 to 500.

11. The chelating polymer according to Claim 10 with a structure represented by the following general formula (4): 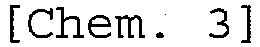 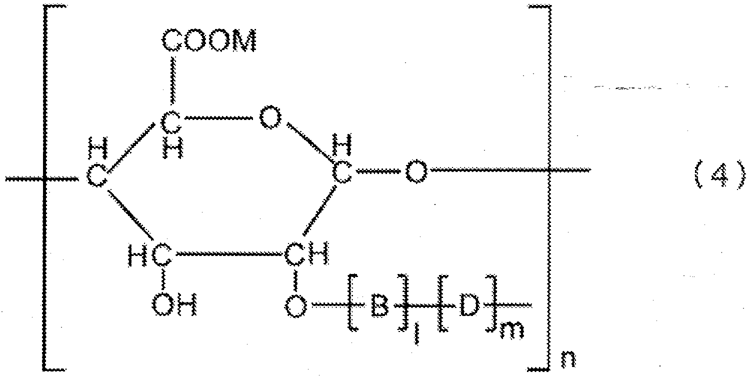 wherein B, D, M, l, m and n have the same meanings as described above.

12. A method for producing the chelating polymer according to Claim 10, comprising graft polymerization of an acidic polysaccharide and/or a basic polysaccharide with a vinyl monomer having an epoxy group followed by a reaction with a compound having an amino group and a chelating functional group.

13. A method for trapping a heavy-metal ion, comprising adding the chelating polymer according to any one of Claims 7, 8, 10 and 11 to a solution containing a heavy-metal ion to trap the heavy-metal ion with the chelating polymer.

14. A lithium-ion battery electrode mixture composition comprising an electrode mixture containing an active material, a binder and an optional conductive additive, wherein the binder is a water-soluble polymer and contains water-insoluble polymer fine particles having a chelating group.

15. The lithium-ion battery electrode mixture composition according to Claim 14, wherein the water-insoluble polymer fine particles having the chelating group are water-insoluble polysaccharide fine particles having a chelating group.

16. The lithium-ion battery electrode mixture composition according to Claim 14 or 15, wherein the water-soluble polymer is a polysaccharide, a (meth)acrylic acid homopolymer or copolymer, a maleic acid homopolymer or copolymer or a salt thereof.

17. A lithium-ion battery electrode mixture composition, wherein in an electrode mixture containing an active material, a binder and an optional conductive additive, the binder is a fluoropolymer, and organic-solvent-insoluble polymer fine particles having a chelating group are contained.

18. The lithium-ion battery electrode mixture composition according to Claim 17, wherein the organic-solvent-insoluble polymer fine particles having the chelating group are organic-solvent-insoluble polysaccharide fine particles having a chelating group.

19. A lithium-ion battery electrode binder, wherein a binder for binding an active material, a conductive additive and a current collector in a lithium-ion battery contains a polymer having a chelating group.

20. The binder according to Claim 19, wherein the chelating group in the polymer having the chelating group is bonded to the polymer through a covalent bond and/or an ionic bond.

21. A composition comprising a polymer and a low-molecular-weight compound having a chelating group.

22. The composition according to Claim 21, wherein the polymer is a water-soluble polymer, and the low-molecular-weight compound having the chelating group is a water-soluble compound.

23. A composition comprising a hydrogen-ion-form alginic acid and a compound having a chelating group.

24. The composition according to Claim 23, wherein the compound having the chelating group is a compound containing at least one basic functional group selected from the group consisting of a primary amino group, a secondary amino group, a tertiary amino group and an imino group.

25. The composition according to Claim 23 or 24, wherein the compound having the chelating group is a compound that has a pH in the range of 3 to 9 in aqueous solution when dissolved in water.

26. A high-molecular-weight hydrogen-ion-form alginic acid with a weight-average molecular weight in the range of 500,000 to 1,500,000 and a hydrogen ion substitution rate in the range of 80% to 99%.

27. A method for producing a hydrogen-ion-form alginic acid comprising: dispersing at least one of an alkali metal alginate and an alkaline-earth metal alginate in a poor solvent therefor; and adding an acid to ion-exchange at least one of the alkali metal alginate and the earth metal alginate in a dispersion state into a hydrogen ion form.
